(19) Europäisches Patentamt
European Patent Office
Office européen des brevets

(11) **EP 3 000 112 B1**

(12) **EUROPEAN PATENT SPECIFICATION**

(45) Date of publication and mention
of the grant of the patent:
**29.03.2017 Bulletin 2017/13**

(21) Application number: **14730382.0**

(22) Date of filing: **16.05.2014**

(51) Int Cl.:
**G21B 3/00** (2006.01)

(86) International application number:
**PCT/US2014/038500**

(87) International publication number:
**WO 2014/189799 (27.11.2014 Gazette 2014/48)**

(54) **METHOD FOR CREATING ENERGETIC HELIUM IONS**

VERFAHREN ZUR ERZEUGUNG ENERGETISCHER HELIUM-IONEN

PROCEDE DE GENERATION D'IONS D'HELIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.05.2013 US 201361826439 P**

(43) Date of publication of application:
**30.03.2016 Bulletin 2016/13**

(73) Proprietor: **Unified Gravity Corporation
Los Altos, CA 94022 (US)**

(72) Inventors:
• **LIPINSKI, Stephen, A.
Palo Alto, CA 94306 (US)**
• **LIPINSKI, Hubert, M.
Palo Alto, CA 94306 (US)**

(74) Representative: **Grünecker Patent- und
Rechtsanwälte
PartG mbB
Leopoldstraße 4
80802 München (DE)**

(56) References cited:
**EP-A1- 1 806 752 WO-A2-2008/063254
WO-A2-2010/008625 US-A- 3 533 910
US-A- 4 568 509**

**EP 3 000 112 B1**

**Description**

**FIELD OF INVENTION**

The present invention is related to a method for creating energetic helium ion by combining low energy protons with lithium in a lithium containing species.

The search for an alternative to hydrocarbons to produce energy has escalated in recent years due to concerns about global warming and the depletion of fossil fuels. Various approaches to addressing this problem have been developed including the use of alternative fuels such as wind, solar, and biofuels. This application discloses a unique method to produce energy that is based on low energy, hydrogen-lithium nuclear fusion. The Hydrogen-Lithium Fusion Device (HLFD) described in this disclosure enables high efficiency proton-lithium fusion within a reaction chamber, producing energetic helium ion fusion byproducts.

The HLFD uses watts of input power to accelerate protons, instead of kilowatts or megawatts. This is revolutionary, as conventional science predicts that lithium fusion requires high energy protons (e.g., 300 keV or more) to achieve even low efficiency fusion. During several years of laboratory experiments that are summarized in this application, the inventors have verified that high efficiency fusion can be produced at very low proton energies. Producing helium ions from low energy proton-lithium fusion is a first step in achieving net-energy-positive fusion.

**BACKGROUND OF THE INVENTION**

Prior to filing of the application, the gravity theory discovered by Messrs. Lipinski was published as, Stephen A. Lipinski and Hubert M. Lipinski, "Gravity theory based on mass-energy equivalence" Acta Physica Polonica B 39, 2823 (2008).

The inventors' relativistic scalar gravity theory is based on mass-energy equivalence and is considered to reproduce currently accepted tests of General Relativity and the equivalence principle. The gravity force equations derived from the theory are both relativistic and exact. The theory has not been embraced by any researchers other than the named inventors. As of May 2013, a search on scholar.google.com revealed only one citation to the "Gravity theory" publication, and that was a passing reference. In 2008, editors of Wikipedia went so far as to delete a new article based on the publication. The discovery of the new gravity theory has aroused skepticism by experts and teaching away from acceptance of the new theory.

The most comprehensive summary of prior research in proton-lithium fusion is offered by Herb, R.G., Parkinson, D.B., Kerst, D.W., "Yield of alpha-particles from lithium films bombarded by protons", Physical Review 48, 118 (1935). Herb's paper cites 3 previous experiments involving proton-lithium fusion as well as their own experimental results and concludes that at proton energies in the region of the conventional Coulomb barrier (comparable to those used by these inventors during early experiments in Huntsville Alabama and Lafayette Louisiana), very little fusion takes place.

At 300 keV input energy per proton, Herb's experimental data show a proton-lithium fusion efficiency of $3.34 \times 10^{-6}$ % compared to 100% for perfect fusion - that is, for every 30,000,000 protons only one combines with lithium to produce detectable helium ions.

The power ratio Q is defined as the ratio of output power to input power and may be obtained from Herb's experimental data as follows:

$$\text{Power ratio } Q = (\text{Output power}) / (\text{Input power})$$

$$= (\text{Output energy per second}) / (\text{Input energy per second})$$

$$= ((\text{Output energy per fusion event}) / (\text{Input energy per proton}))$$

$$\times ((\text{Fusion events per second}) / (\text{Protons per second}))$$

$$= ((\text{Output energy per fusion event}) / (\text{Input energy per proton}))$$

$$\times (\text{Fusion efficiency})$$

$$= ((16.21 \text{ MeV}) / (300 \text{ keV})) \times (3.34 \times 10^{-8}) = 1.80 \times 10^{-6}$$

which may be compared to the breakeven value of 1. For consistency with Herb, the power ratio Q is defined in this disclosure with the input energy not including power consumed by vacuum pumps or sensors.

Research institutes and laboratories that work on conventional (hot) fusion have used deuterium and tritium ions to mimic the fusion reaction inside a star. The goal of these reactions is to harness the heat energy from neutrons that are expelled at high speed from this reaction. In a motto, bringing star power to the Earth. To the inventors' knowledge, no experiment has been able to harness energy or sustain a fusion reaction past the breakeven point of energy consumption.

To the inventors' knowledge, no research institute has been able to utilize the two-step method for hot hydrogen fusion in a practical and economical way. The second step, which involves the heating of water from the fusion reaction, has not been attempted because the first step for conventional fusion containment has not been adequate in terms of power generation.

So-called cold fusion does not require the extreme conditions which characterize "hot" fusion - either the high temperatures of plasma containment utilized in magnetic confinement fusion or the energetic laser beams utilized in inertial confinement fusion. Rather, initial claims for cold fusion were based on electrolytic techniques to promote fusion using heavy water ($D_2O$). Other cold fusion approaches involving hydrogen and heavy elements are being investigated. To the inventors' knowledge, there have been no definitive positive results from cold fusion.

US 4 568 509 A discloses a nuclear fusion method and device comprising condensed phase fuel element i.e Lithium, and accelerated ion beams, i.e. a proton beam, which ionize and compress the fuel element and initiate nuclear fusion reactions. There is no teaching in this reference of initiating fusion reactions without overcoming the Coulomb barrier. In this reference, "Energy of the ions in the beam: 10 keV to 5 MeV" describes an energy distribution of an ion beam, without any teaching that protons with an energy of 10 keV would be effective to initiate fusion reactions. Applicant has not found any later work by the inventors that would indicate that 10 keV protons would contribute to fusion.

An opportunity arises to apply a new and unproven theory and to develop new and useful methods and apparatuses that yield energetic helium ion fusion byproducts without needing to bring star power to earth.

## SUMMARY

The present invention relates to a method for creating energetic helium ions, said method comprising:

imparting energy to at least some protons in a controlled reaction chamber to generate low energy protons, wherein the low energy protons have an average kinetic energy pin a range of 100 eV to 5,000 eV; and

combining a portion of the low energy protons with lithium in a lithium-containing species to cause fusion resulting in production of energetic helium ion fusion byproducts.

Particular aspects of the present invention are described in the claims, descriptions and drawings.

## BRIEF DESCRIPTION OF THE DRAWINGS

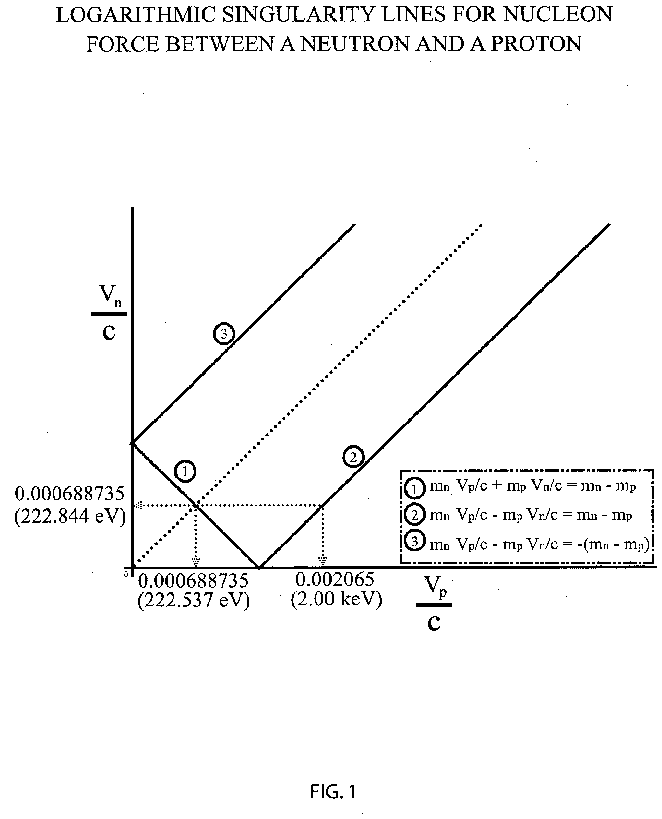

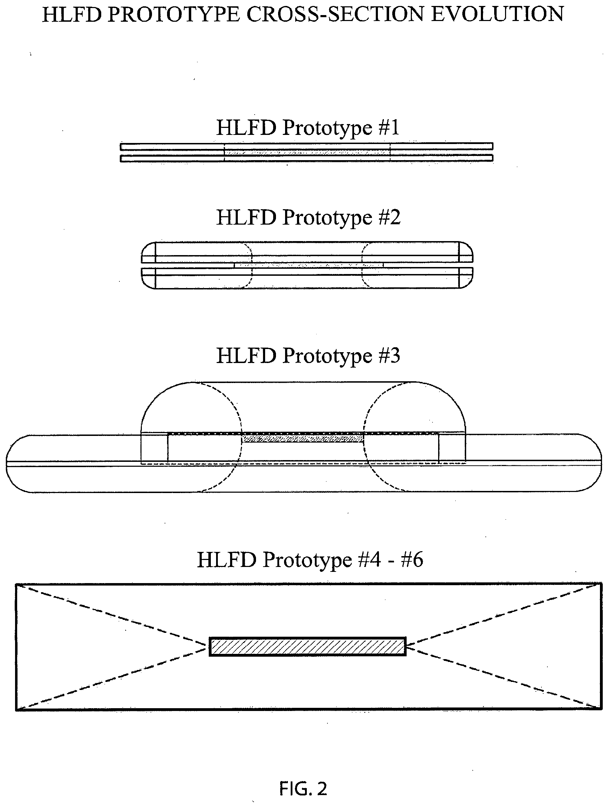

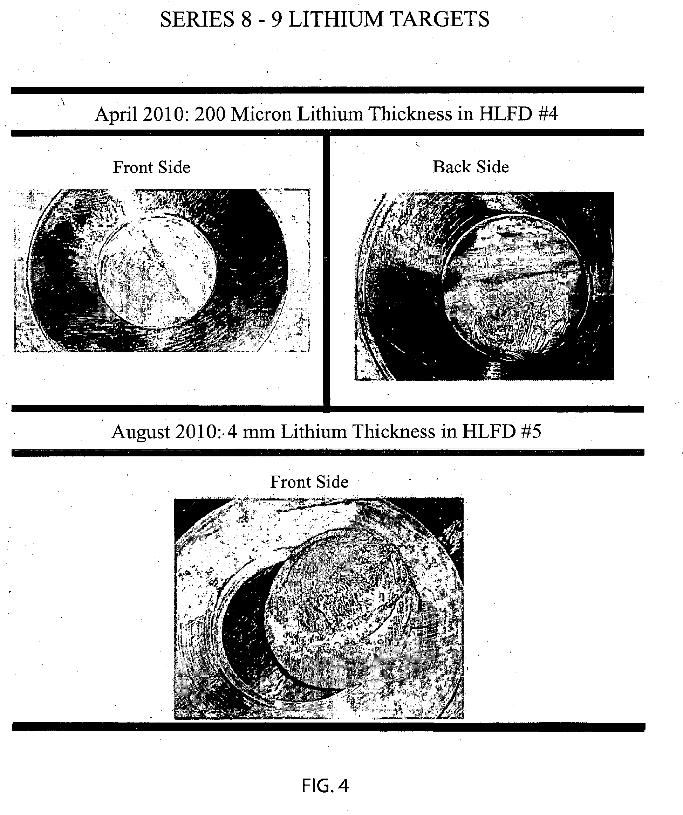

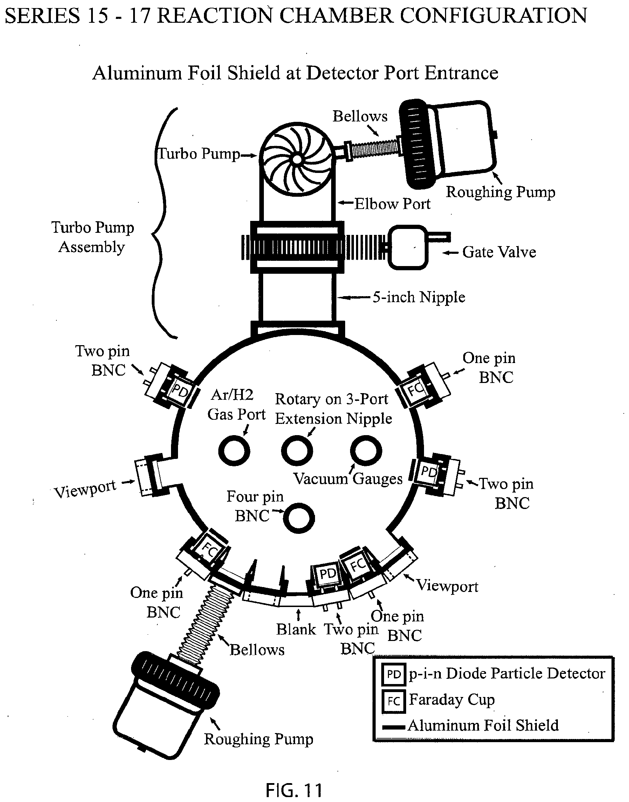

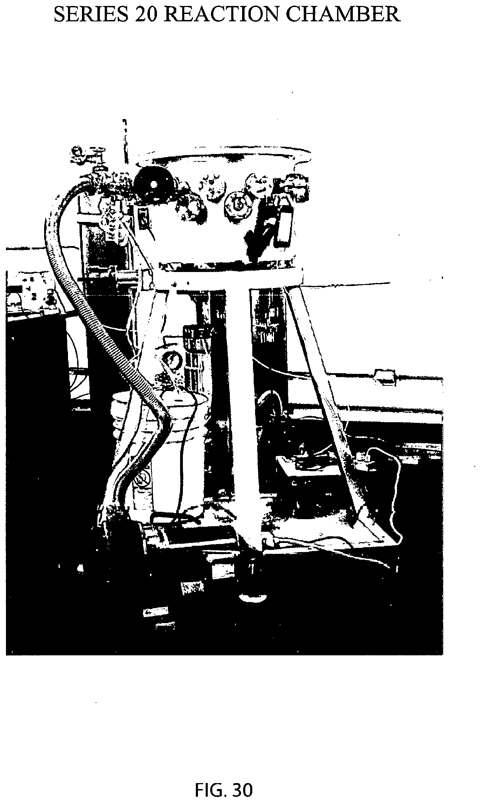

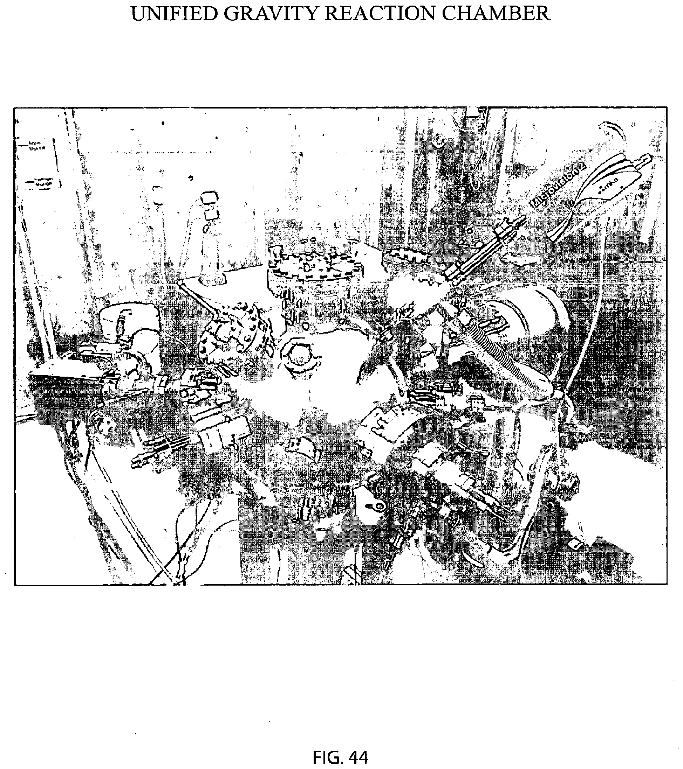

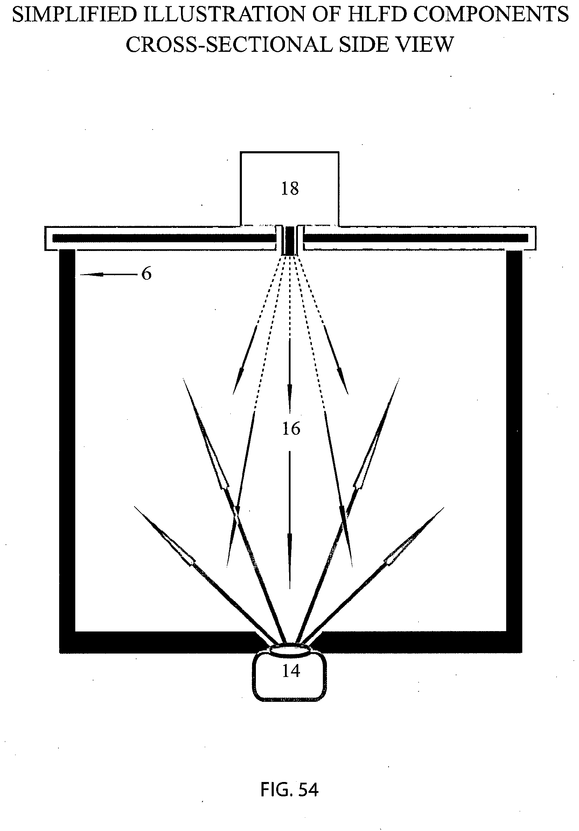

FIGS. 1-62 appear in related sequences, progressing from rented time at third party facilities to a laboratory that the inventors established. The sequences are identified to help the reader understand so many figures and not to restrict the scope of the claims or disclosure. FIG. 1 is drawn from the inventors' gravity theory paper. FIGS. 2-10 depict early experiments in which a holder framed a lithium target. FIGS. 11-29 depict experiments that used a conical support to expose a lithium wafer. FIGS. 30-43 depict Series 20 and 22 experiments with so-called HLFD prototypes #9-10, using a device equipped with a ring magnet underneath the lithium target. FIGS. 44-53 are from a laboratory that the inventors opened following encouraging test results. These experiments intersected protons with evaporated lithium and produced sustained positive power results. FIGS. 54-62 are conceptual illustrations of alternative configurations of low energy fusion, HFLD systems and methods.

FIG. 1 shows the logarithmic singularity lines in v-space that generate the so-called nucleon force between a neutron and proton as predicted by the inventors' gravity theory. "V-space" is a coordinate system using the proton and neutron speeds as axes.

Many of the figures following FIG. 1 depict long term development efforts intended to be consistent with the new "Gravity theory" and to develop conditions yielding a reproducible and sustainable fusion reaction with a positive energy gain.

FIG. 2 depicts the evolution of the target assemblies in HLFD prototypes #1 - 6 in series #1 - 15 of experimental tests. Due to the symmetric designs of the HLFD prototypes, the cross sections of the prototypes are shown.

FIG. 3 shows four pictures of two lithium foil targets used with proton beams with proton energy between 300 keV and 700 keV and current between 10 $\mu$A and 40 $\mu$A in HLFD prototype #2 in series #1 - 2 of experimental tests.

FIG. 4 shows three pictures of lithium targets used with proton beams with proton energy between 300 keV and 700 keV and current between 30 $\mu$A and 60 $\mu$A in HLFD prototypes #4 - 5 in series #8 - 9 of experimental tests. The targets show visible heat effects but no holes as a result of heating by the proton beam.

FIG. 5 displays a cross sectional view of HLFD prototype #6 showing the locations of the attractive and repulsive Type II wave gravity rings on the target and target support for protons and He-4 ions as predicted by the inventors' gravity theory.

FIG. 6 shows a graph of proton-lithium fusion efficiency for proton beam energy between 300 keV and 900 keV in series #10 of experimental tests.

FIG. 7 is a top view of the reaction chamber configuration with the detectors each having two bias screens used in series #13 of experimental tests.

FIG. 8 shows the front proton backscatter counts per second (CPS) peak for proton gun energy about 225 eV, bias voltage about negative 222.6 volts, and reaction chamber vacuum pressure about $3 \times 10^{-4}$ Torr in series #13 of experimental tests.

FIG. 9 shows the front 8.6 MeV helium ion CPS peak for proton gun energy about 225 eV, bias voltage about negative 222.6 volts, and reaction chamber vacuum pressure about $3 \times 10^{-4}$ Torr in series #13 of experimental tests.

FIG. 10 shows the front and rear of a lithium target used in HLFD prototype #6 in series #13 of experimental tests. The lithium oxide layer is visible as a grey-black color compared to bright silver for pure lithium. The location of the proton beam impingement is visible on the front of the target.

FIG. 11 shows a detailed top view of the reaction chamber configuration used in series #15 - 17 of experimental tests.

FIG. 12 depicts a cross-sectional view of the conical assembly supported by the reaction chamber bottom in HLFD prototype #7 used in series #16 - 17 of experimental tests.

FIG. 13 shows a graph of proton current versus hydrogen pressure for tests with negative bias voltage in series #16 of experimental tests.

FIG. 14 shows the 7.7 MeV fusion particle peak measured in test 1 with positive bias voltage for HLFD prototype #7 used in series #17 of experimental tests.

FIG. 15 shows a graph of the particle counts measured by p-i-n diode detectors versus hydrogen pressure for tests with positive bias voltage in series #17 of experimental tests.

FIG. 16 shows a graph of the particle peak energy versus hydrogen pressure for tests with positive bias voltage in series #17 of experimental tests.

FIG. 17 shows a detailed top view of the reaction chamber configuration used in series #18 of experimental tests.

FIG. 18 depicts a cross-sectional view of the conical assembly supported by the reaction chamber bottom in HLFD prototype #8 in series #18 of experimental tests.

FIG. 19 shows a cut-away view of the reaction chamber configuration used in series #18 of experimental tests. The vacuum system components are not shown.

FIG. 20 shows a cross sectional top view of a reaction chamber port containing a p-i-n diode particle detector, aluminum foil shield, and a 250 $\mu$m diameter aperture configured with alumina ceramic to create a shielded cylindrical detector holder in series #18 of experimental tests.

FIG. 21 displays a screen shot of an 8.8 MeV particle peak from the test recordings in series #18 of experimental tests.

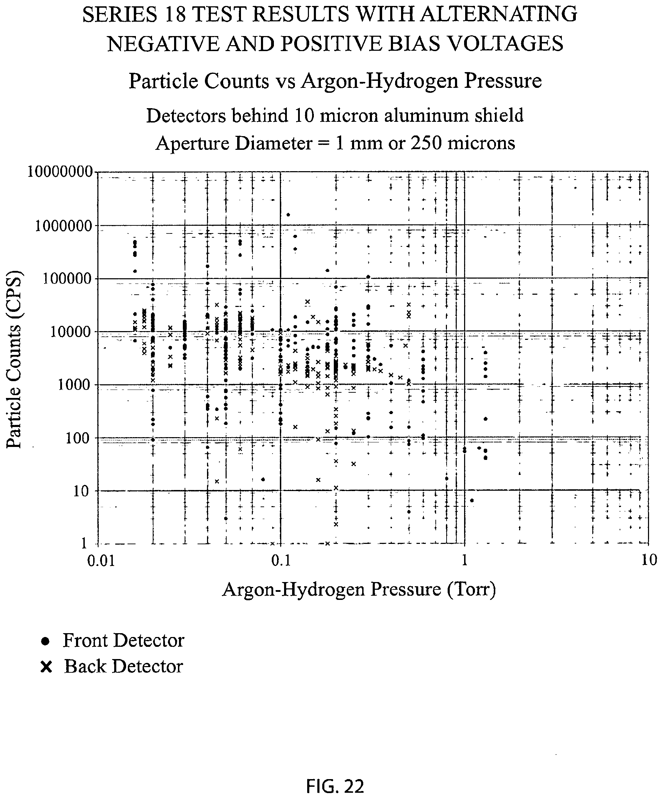

[0037] FIG. 22 shows a graph of the particle counts measured in the p-i-n diode detectors versus argon-hydrogen pressure for tests with alternating negative and positive bias voltages in series #18 of experimental tests.

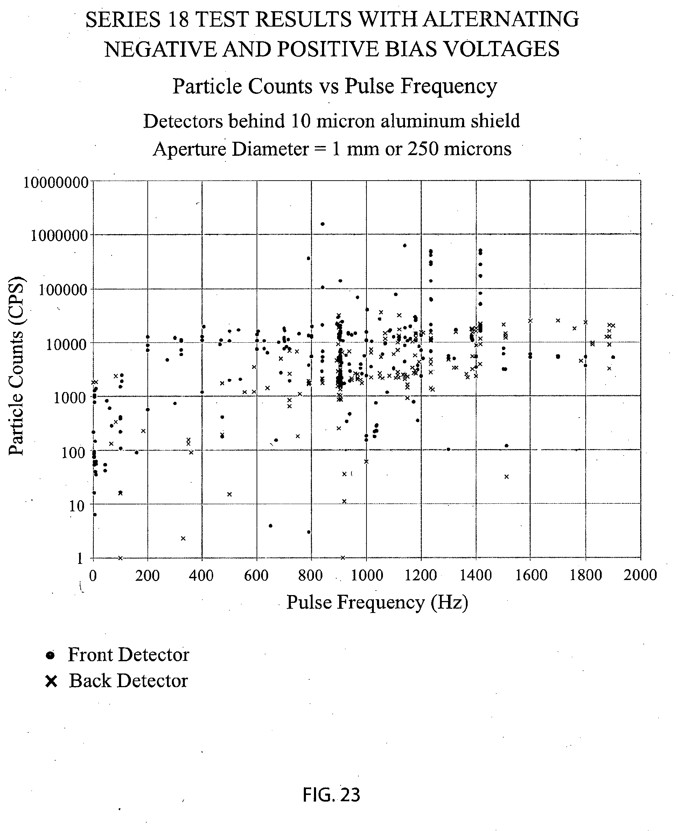

FIG. 23 shows a graph of the particle counts measured in the p-i-n diode detectors versus pulse frequency for tests with alternating negative and positive bias voltages in series #18 of experimental tests.

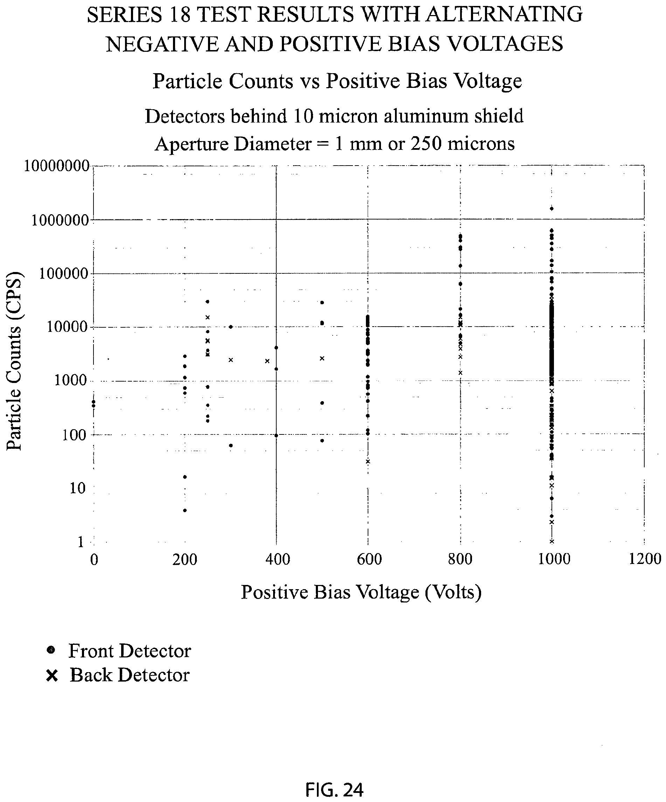

FIG. 24 shows a graph of the particle counts measured in the p-i-n diode detectors versus positive bias voltage for tests with alternating negative and positive bias voltages in series #18 of experimental tests.

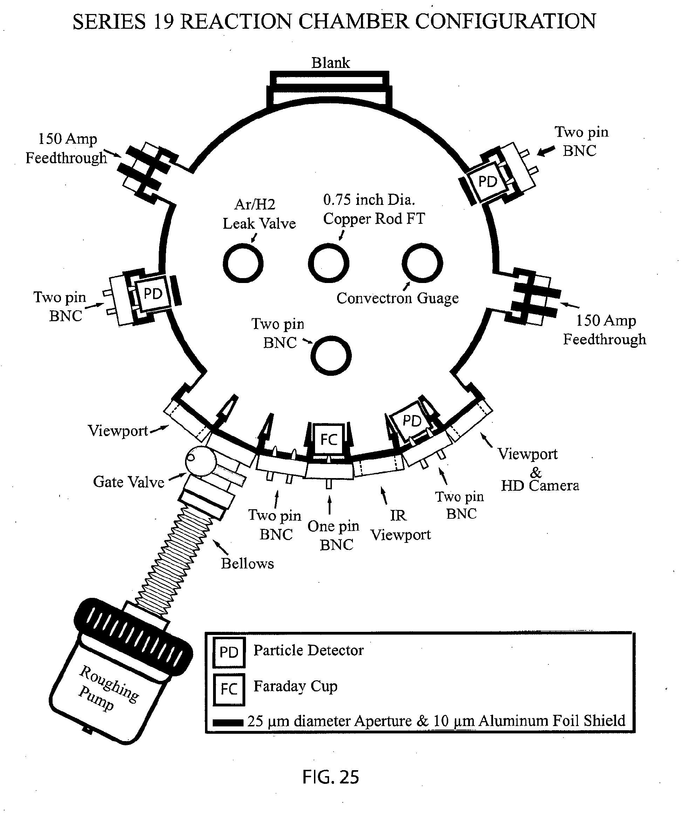

FIG. 25 shows a detailed top view of the reaction chamber configuration used in series #19 of experimental tests.

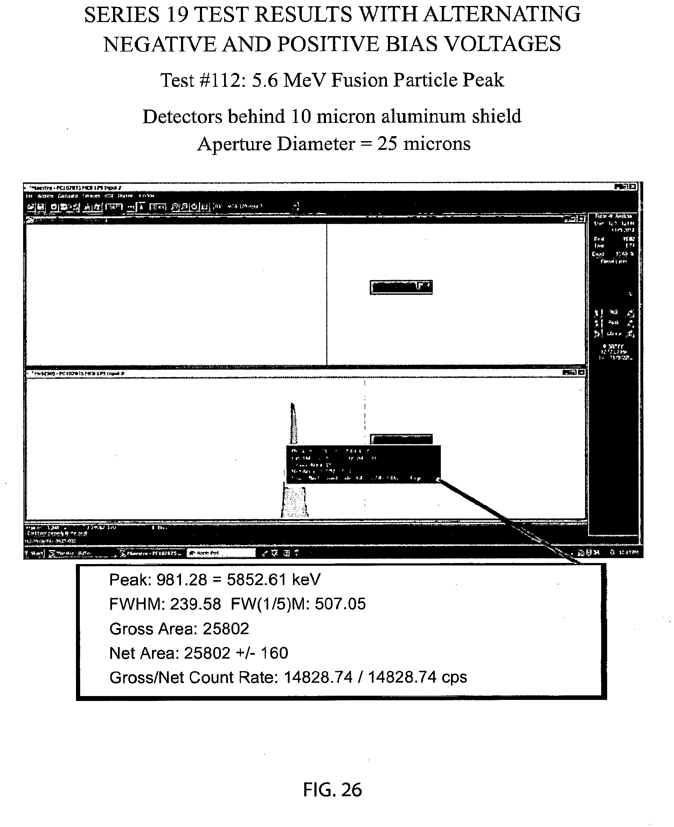

FIG. 26 shows a screen shot of a 5.6 MeV particle peak measured in series #19 of experimental tests.

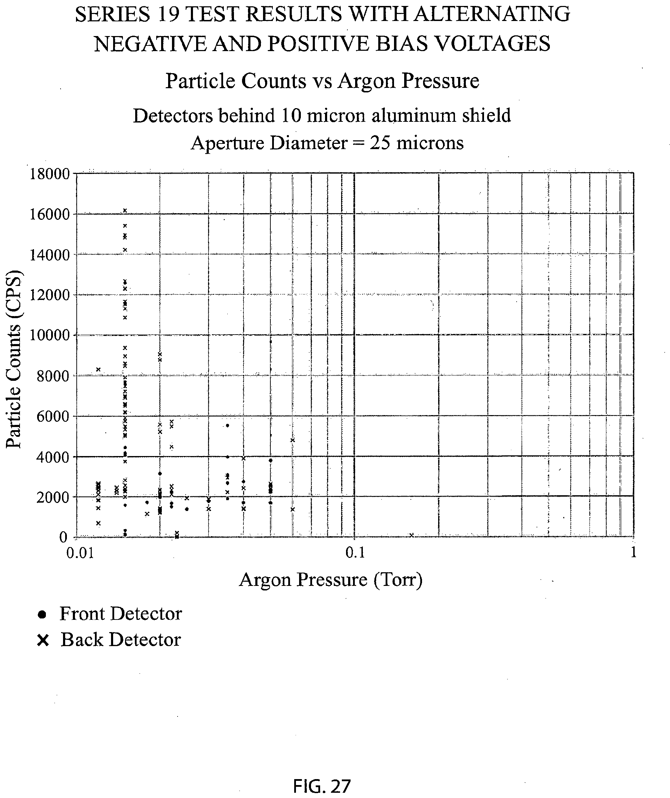

FIG. 27 shows a graph of the particle counts measured in the p-i-n diode detectors versus argon pressure for tests with alternating negative and positive bias voltages in series #19 of experimental tests.

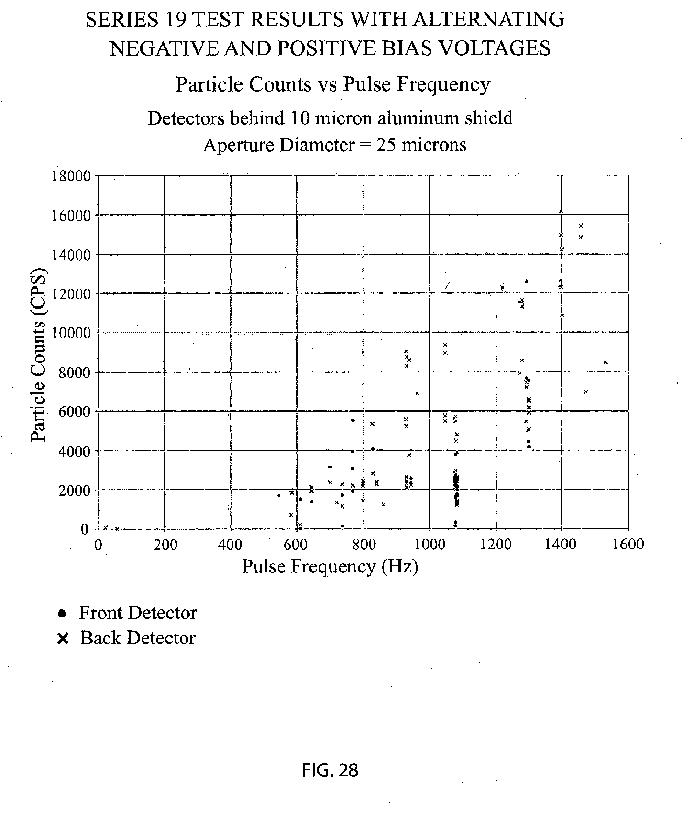

FIG. 28 shows a graph of the particle counts measured in the p-i-n diode detectors versus pulse frequency for tests with alternating negative and positive bias voltages in series #19 of experimental tests.

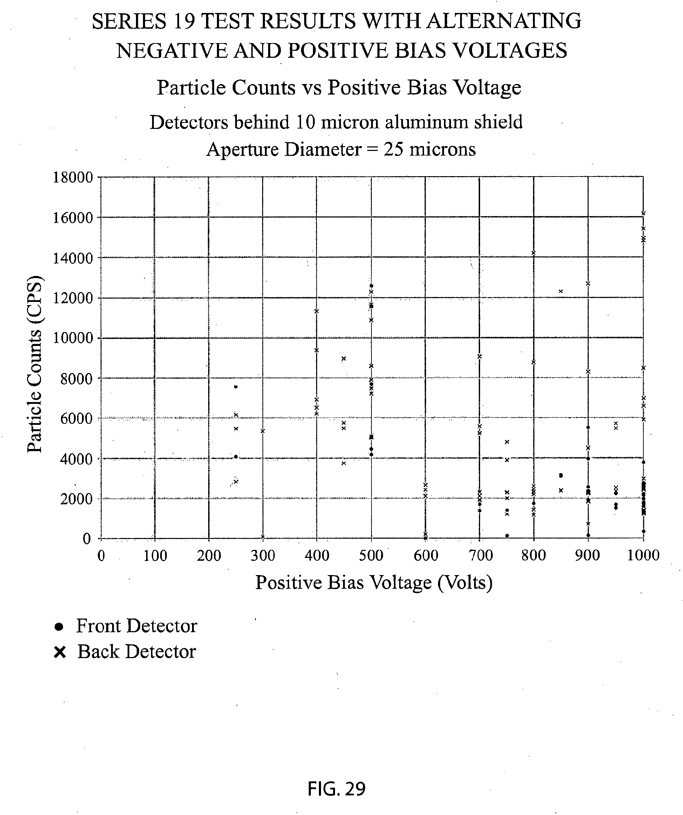

FIG. 29 shows a graph of the particle counts measured in the p-i-n diode detectors versus positive bias voltage for tests with alternating negative and positive bias voltages in series #19 of experimental tests.

FIG. 30 shows a photograph of the reaction chamber used in series #20 of experimental tests.

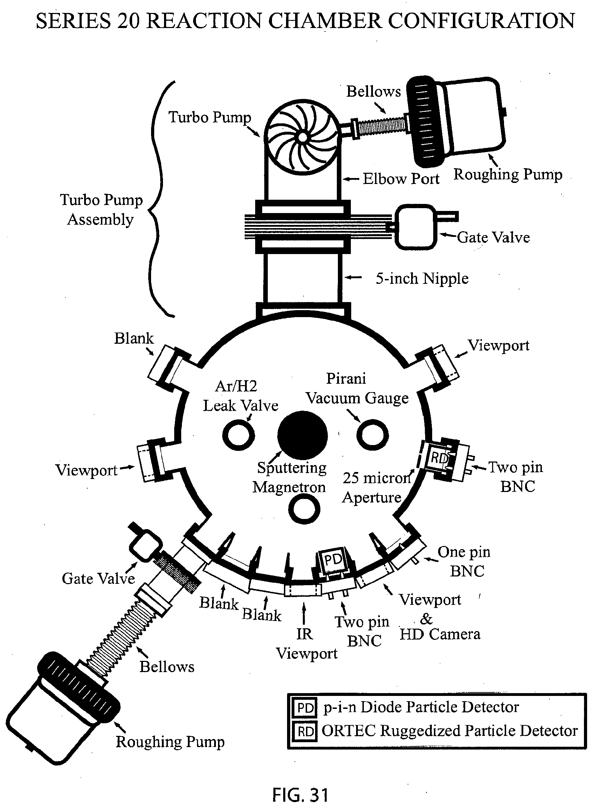

FIG. 31 shows a detailed top view of the reaction chamber configuration used in series #20 of experimental tests.

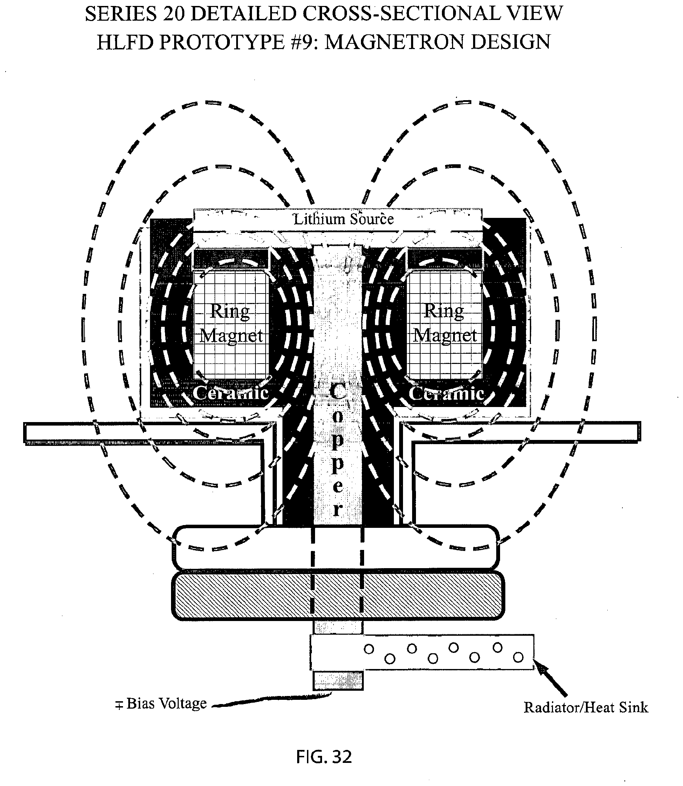

FIG. 32 shows a detailed cross-sectional view of the magnetron design of HLFD prototype #9 used in series #20 of experimental tests.

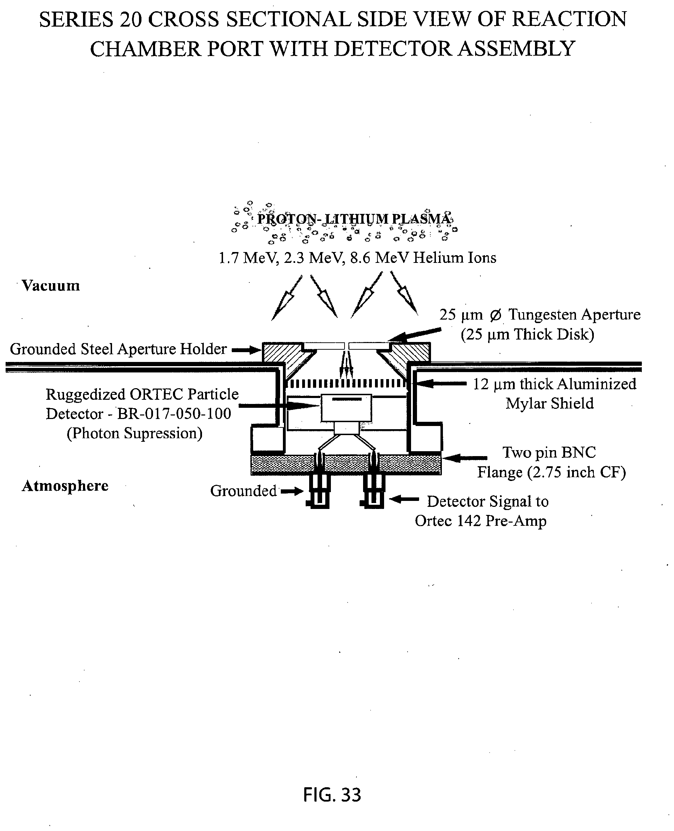

FIG. 33 shows a cross sectional side view of a reaction chamber port containing a detector assembly used in series #20 of experimental tests.

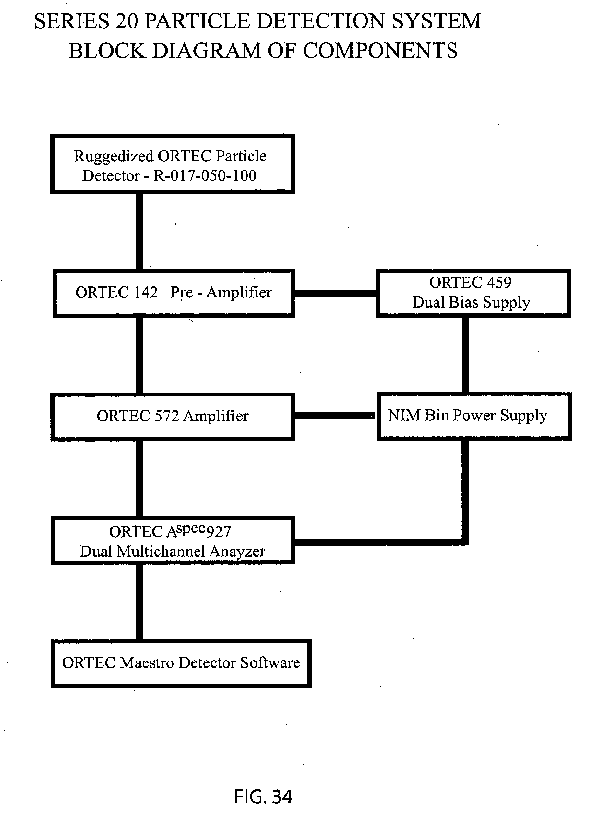

FIG. 34 shows a block diagram of the particle detection system components used in series #20 of experimental tests.

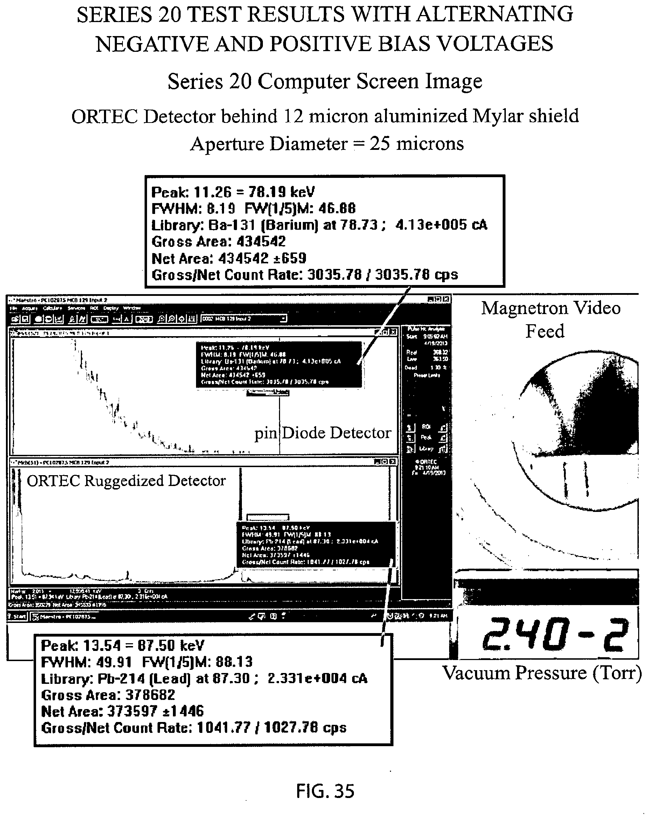

FIG. 35 shows a computer screen image of the ORTEC detector software, magnetron video feed, and pressure display used in series #20 of experimental tests.

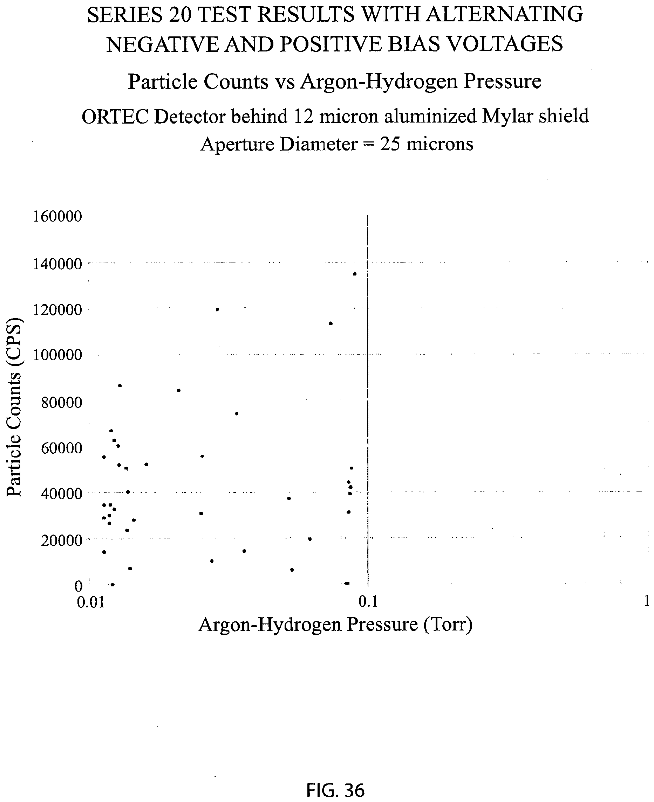

FIG. 36 shows a graph of the particle counts measured in the particle detector versus argon-hydrogen pressure for tests with alternating negative and positive bias voltages in series #20 of experimental tests.

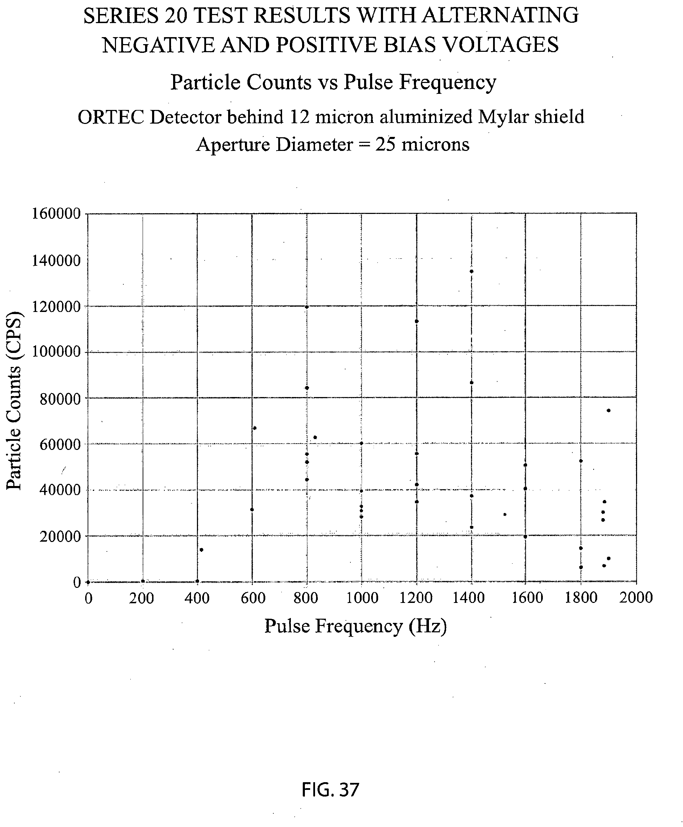

FIG. 37 shows a graph of the particle counts measured in the particle detector versus pulse frequency for tests with alternating negative and positive bias voltages in series #20 of experimental tests.

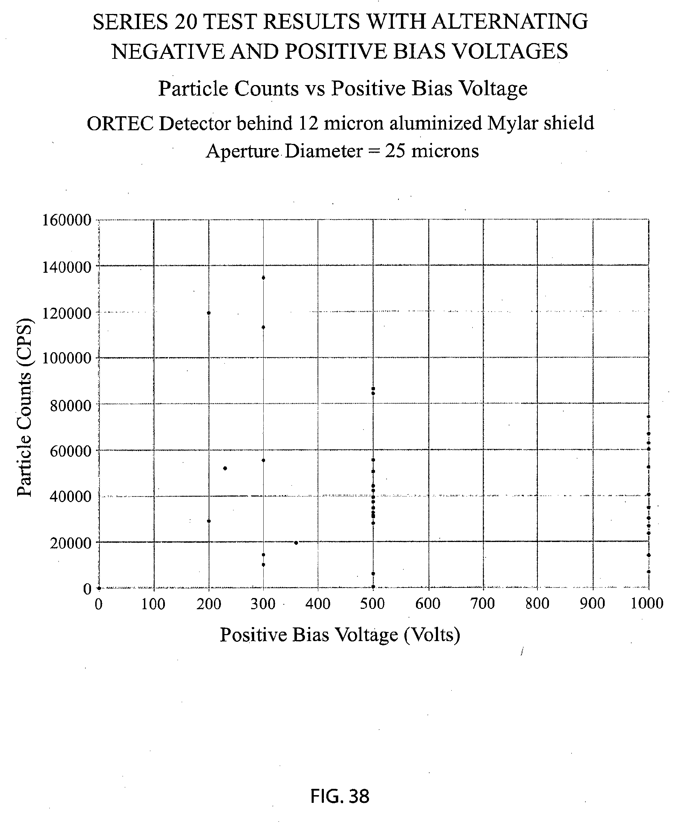

FIG. 38 shows a graph of the particle counts measured in the particle detector versus positive bias voltage for tests with alternating negative and positive bias voltages in series #20 of experimental tests.

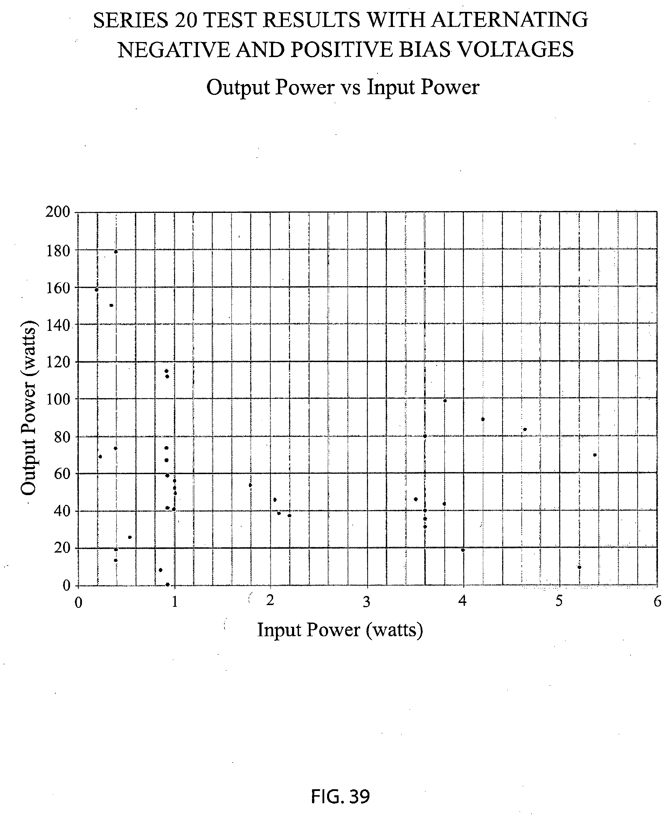

FIG. 39 shows a graph of output power versus input power for tests with alternating negative and positive bias voltages in series #20 of experimental tests.

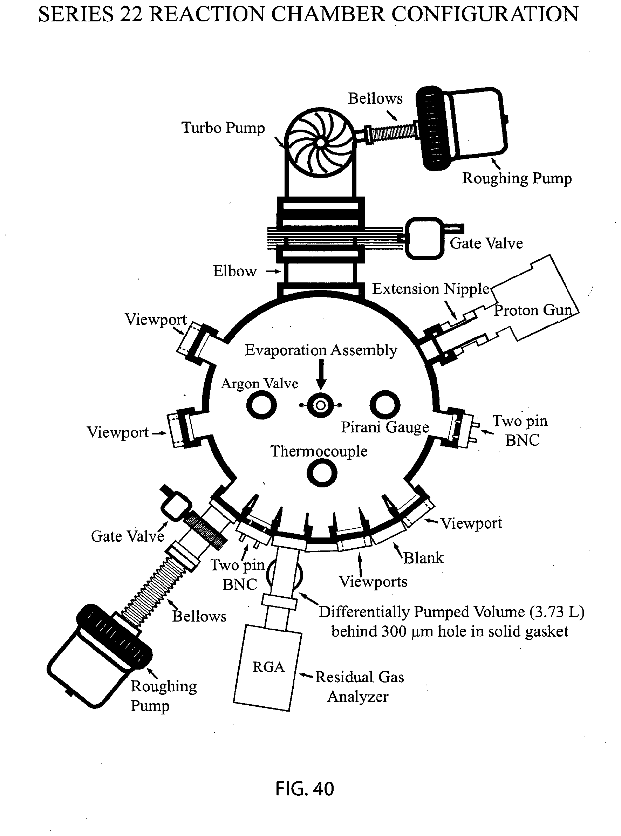

FIG. 40 is a simplified illustration of a top view of the reaction chamber components used in series #22 of experimental tests with the evaporation crucible at center bottom. Alternating negative and positive bias voltages are applied to a stainless steel grid above the lithium crucible.

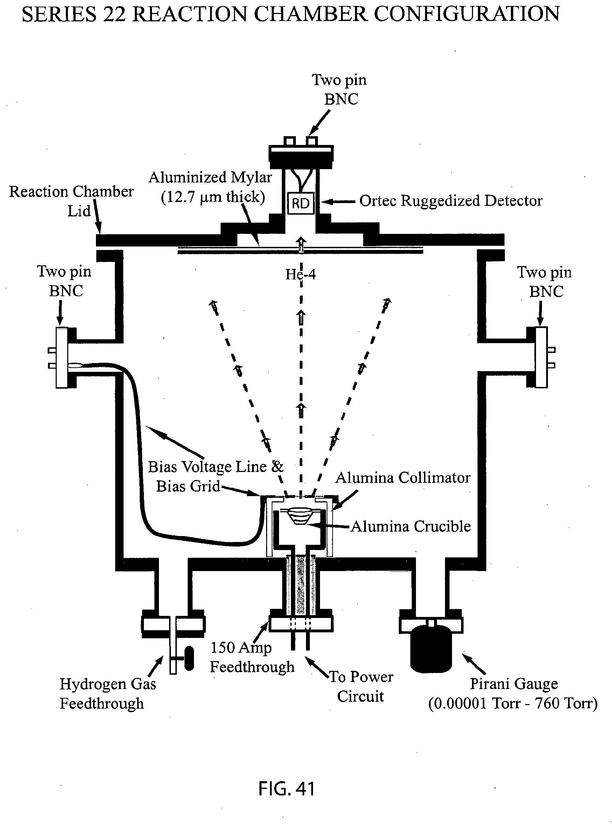

FIG. 41 is a simplified side view of the reaction chamber used in series #22 of experimental tests that shows the evaporation equipment and configuration of the particle detector in relation to the evaporation crucible.

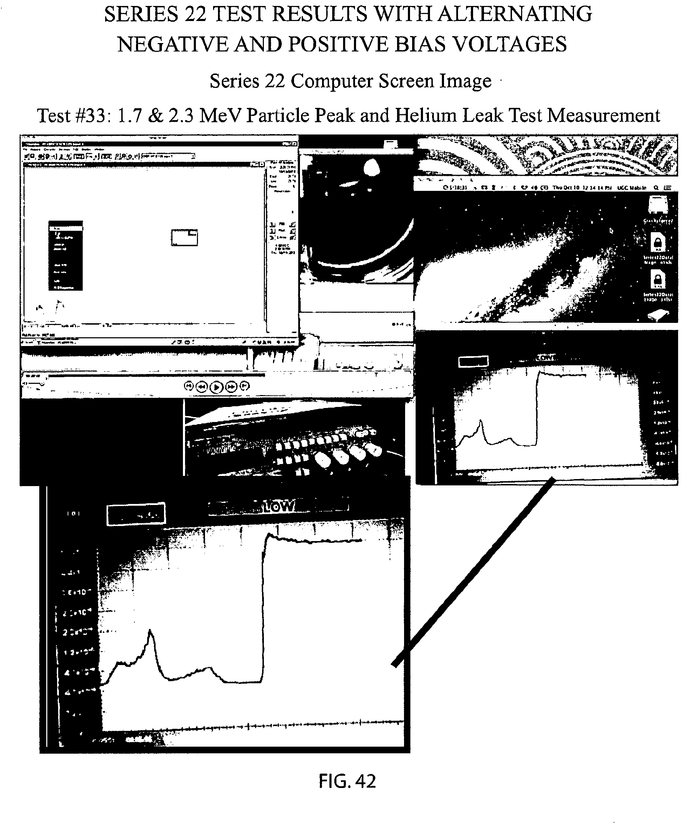

FIG. 42 displays a computer screen image that records data from test 33 in series #22 of experimental tests. The particle detector software shows two distinct particle peaks at 1.7 MeV and 2.3 MeV. The helium leak test mode of the Residual Gas Analyzer shows an increase in He-4 partial pressure to $5.2 \times 10^{-8}$ Torr.

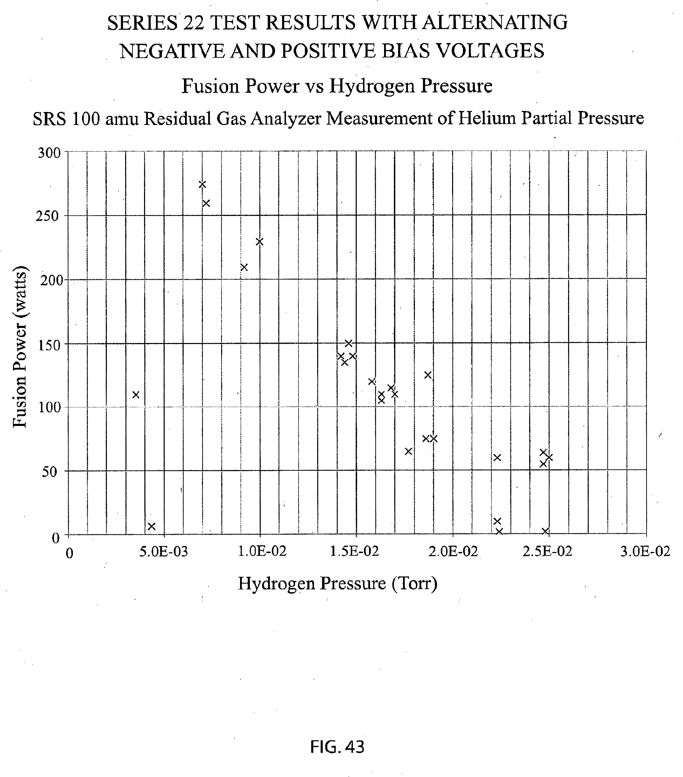

FIG. 43 shows a graph of fusion power versus hydrogen pressure in series #22 of experimental tests.

FIG. 44 is a photograph of the reaction chamber at the Unified Gravity Corporation R&D Laboratory.

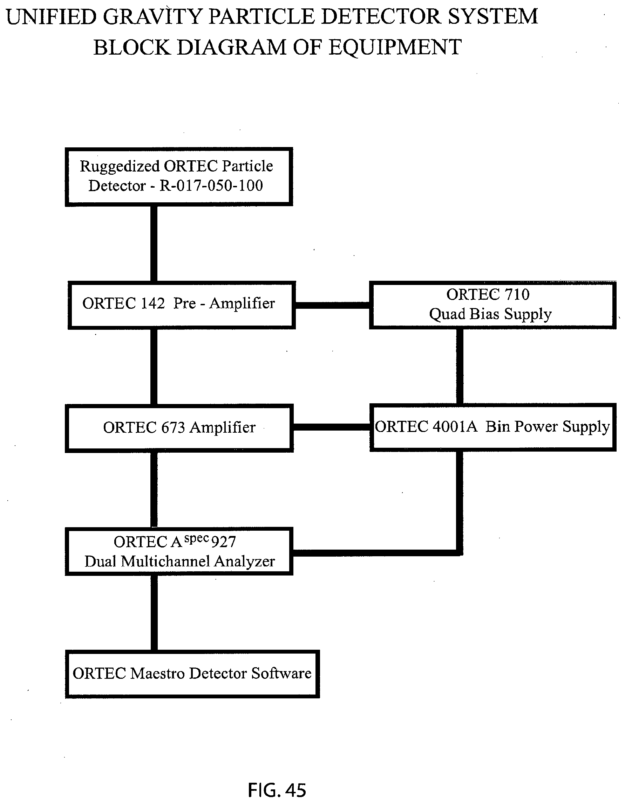

FIG. 45 shows a block diagram of the particle detection system components used at the Unified Gravity Corporation laboratory.

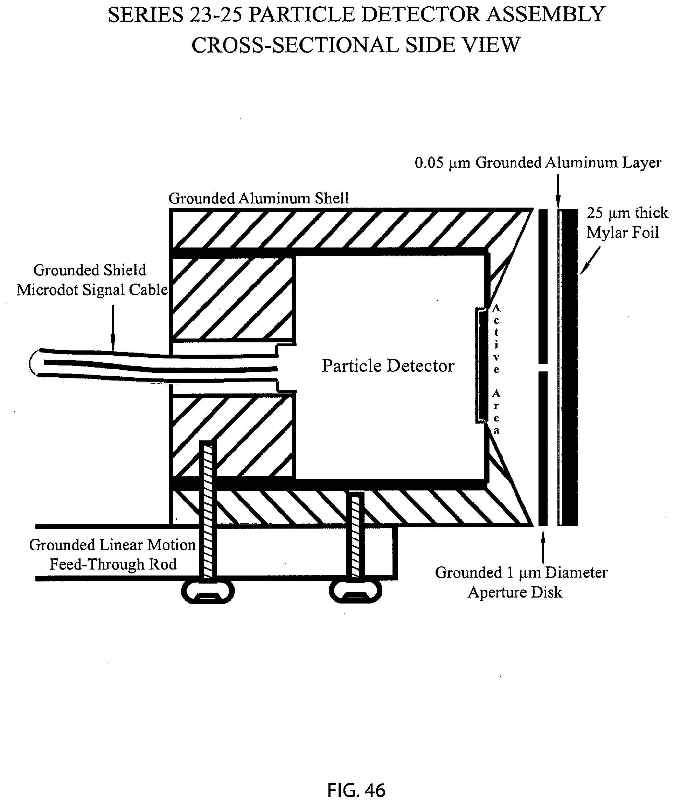

FIG. 46 shows a simplified cross-sectional side view of the particle detector assembly used in the reaction chamber at the Unified Gravity Corporation laboratory. Although not displayed, the particle detector assembly is further wrapped in aluminum foil with a grounding wire to ensure a Faraday cage is created around the particle detector.

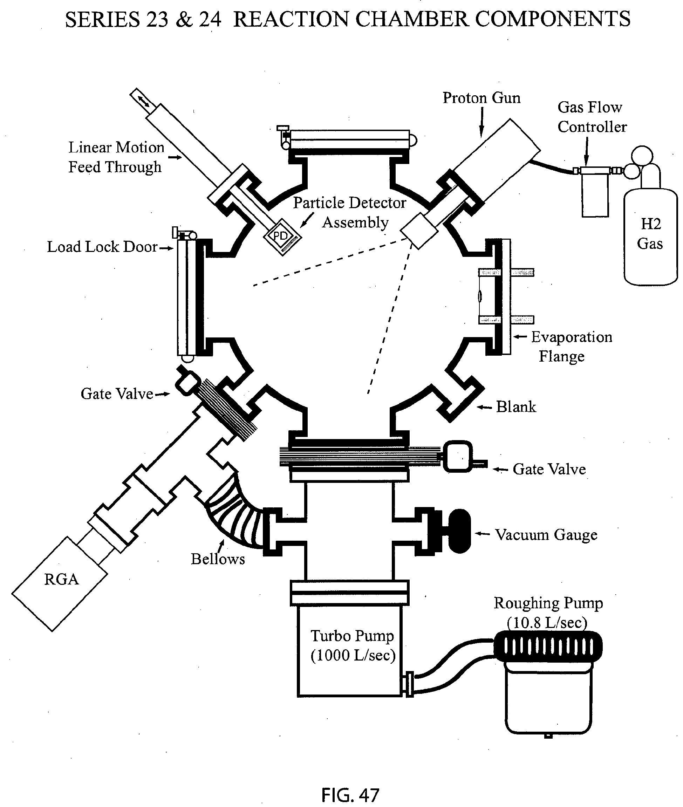

FIG. 47 is a simplified top view of the Unified Gravity Corporation reaction chamber and system components used in series #23-24 of experimental tests.

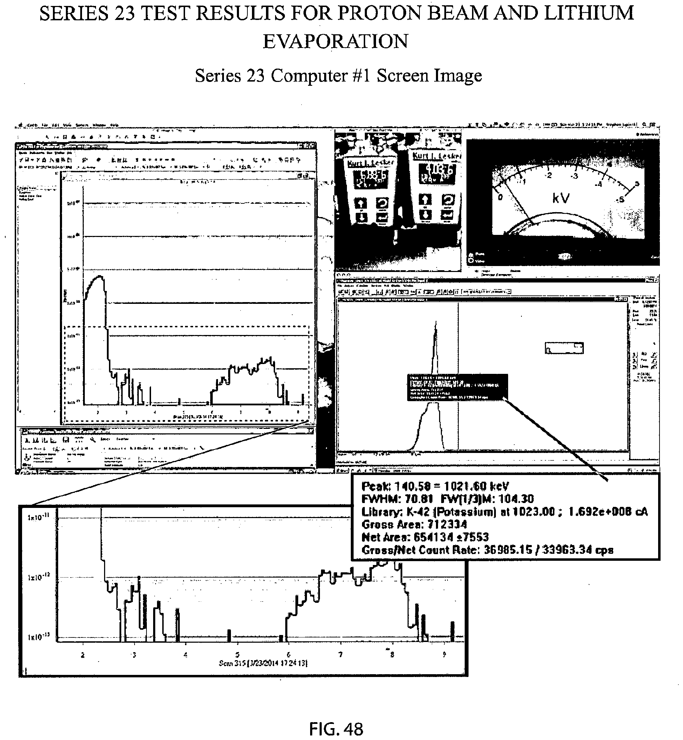

FIG. 48 displays a computer screen image from test results in series #23 that shows the user interfaces of the RGA software, particle detector software, pressure gauges, and proton beam energy display.

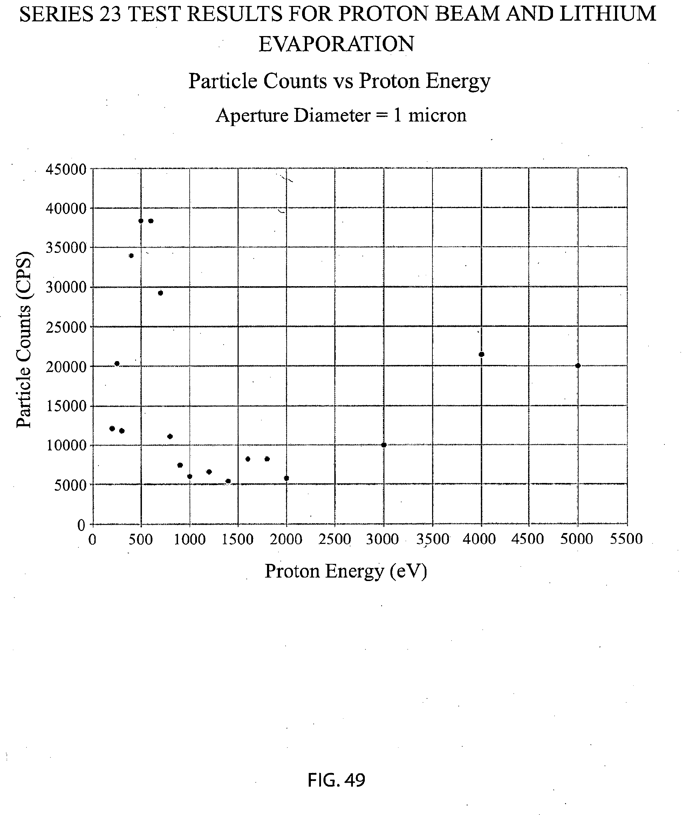

FIG. 49 shows a graph of particle counts versus proton beam energy in series #23 of experimental tests.

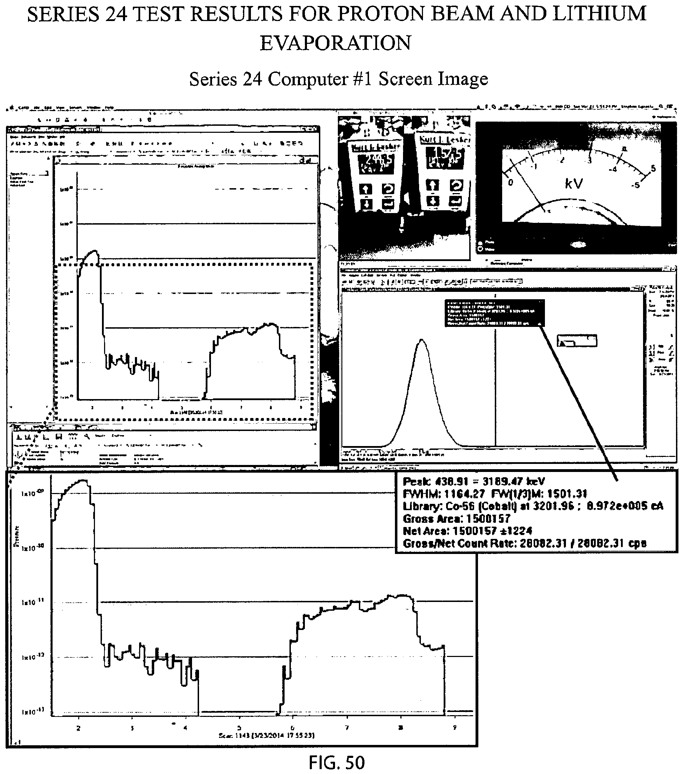

FIG. 50 displays a computer screen image from test results in series #24 that shows the user interfaces of the RGA software, particle detector software, pressure gauges, and proton beam energy display.

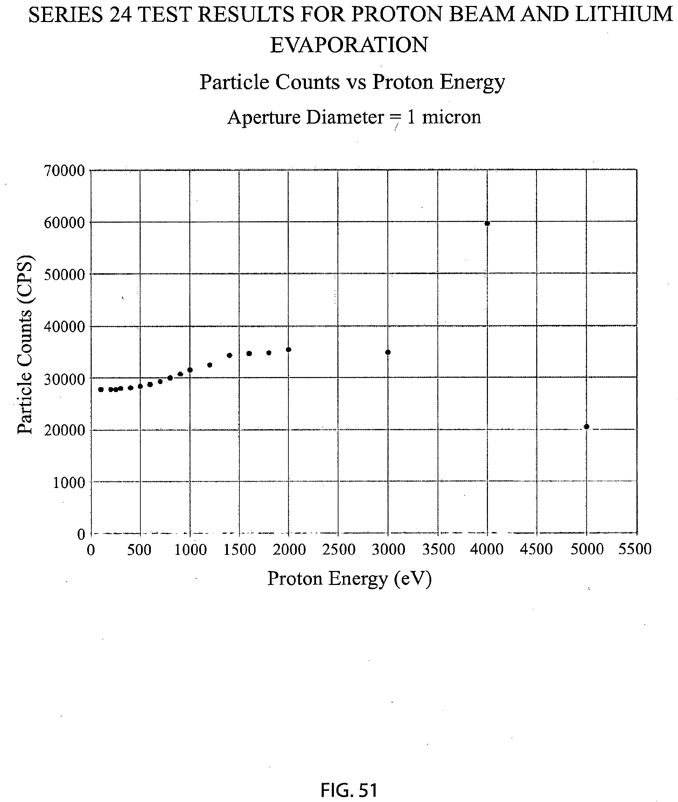

FIG. 51 shows a graph of particle counts versus proton beam energy in series #24 of experimental tests.

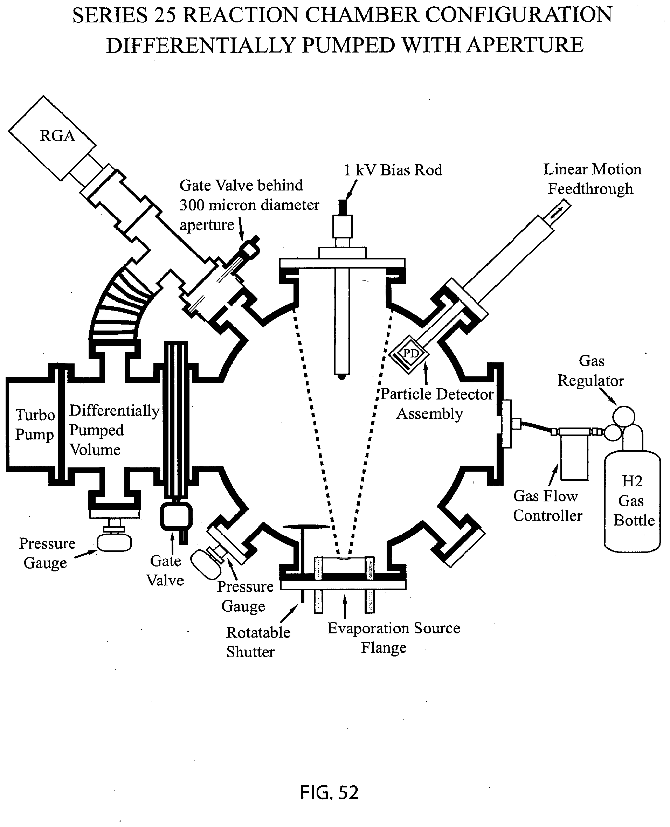

FIG. 52 is a simplified side view of the reaction chamber used during series #25 of experimental tests. A bias voltage rod extends into the vacuum chamber and places the electrode tip near the reaction chamber center. Lithium vapor is evaporated up from the bottom flange containing an evaporation source. A gate valve with a 300 micron aperture allows reaction chamber gases to flow into the differentially pumped RGA chamber.

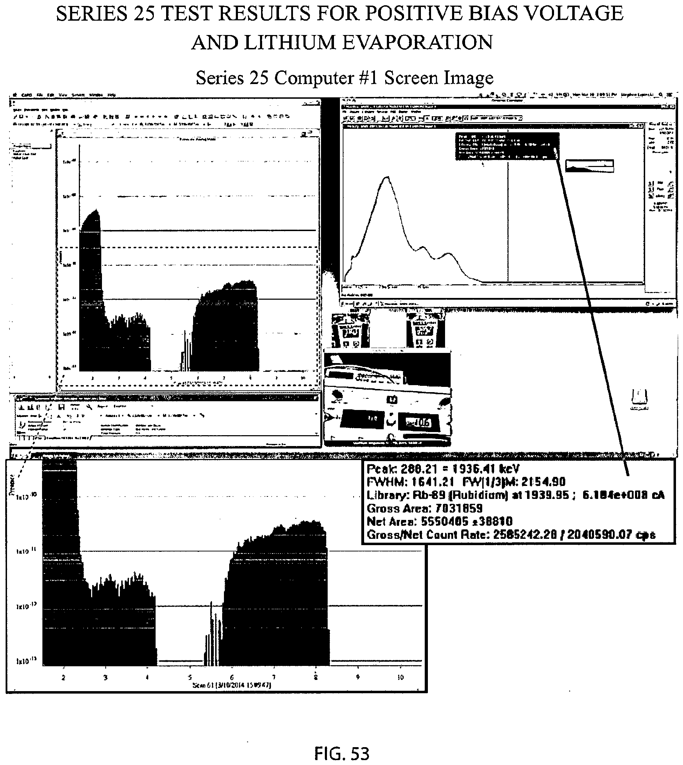

FIG. 53 displays a computer screen image from test results in series #25 that shows the display interfaces of the RGA software, particle detector software, pressure gauges, and proton beam energy display.

FIG. 54 is a cross-sectional side view portraying a proton gun producing a high current proton beam through a reaction chamber and intersecting a lithium vapor from a thermal evaporation source.

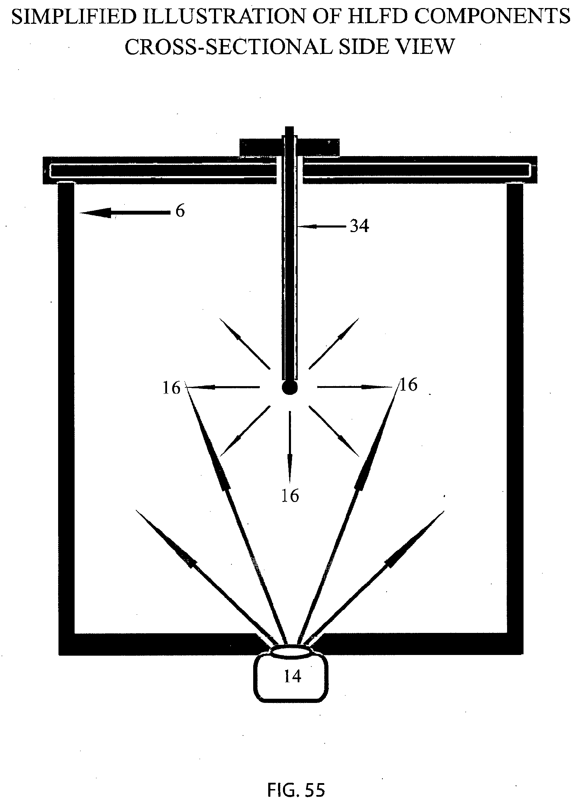

FIG.55 is a cross-sectional side view portraying a bias voltage rod within a reaction chamber. In one example, hydrogen and lithium are introduced into the reaction chamber prior to operation and the reaction chamber is closed. As a result, the reaction chamber does not need to be continuously pumped down during operation.

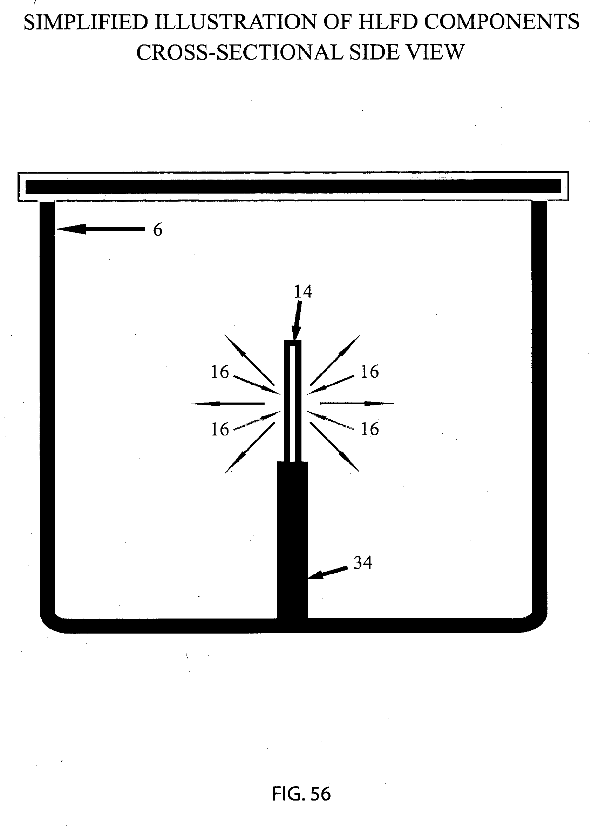

FIG. 56 is a cross-sectional side view portraying a lithium source target that is sputtered by application of an electric field applied by a bias electrode within a reaction chamber.

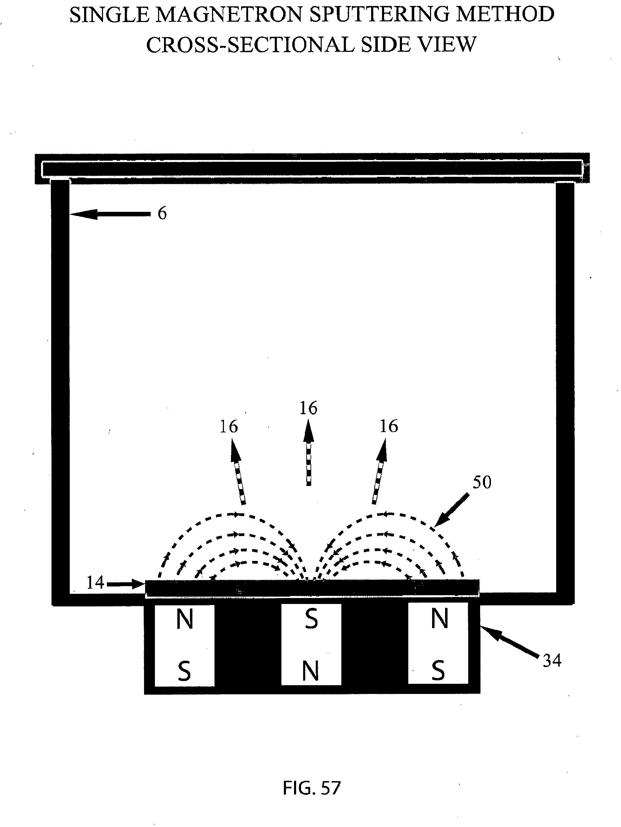

FIG. 57 is a cross-sectional side view portraying a magnetron HLFD mounted within a reaction chamber.

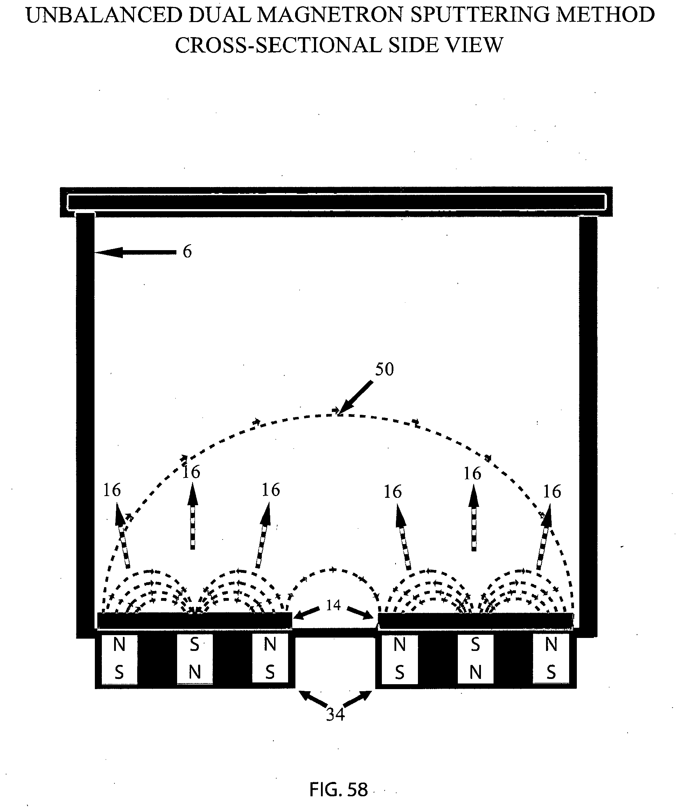

FIG. 58 is a cross-sectional side view portraying two unbalanced magnetrons that can alternately function as an anode and cathode to prevent lithium target poisoning.

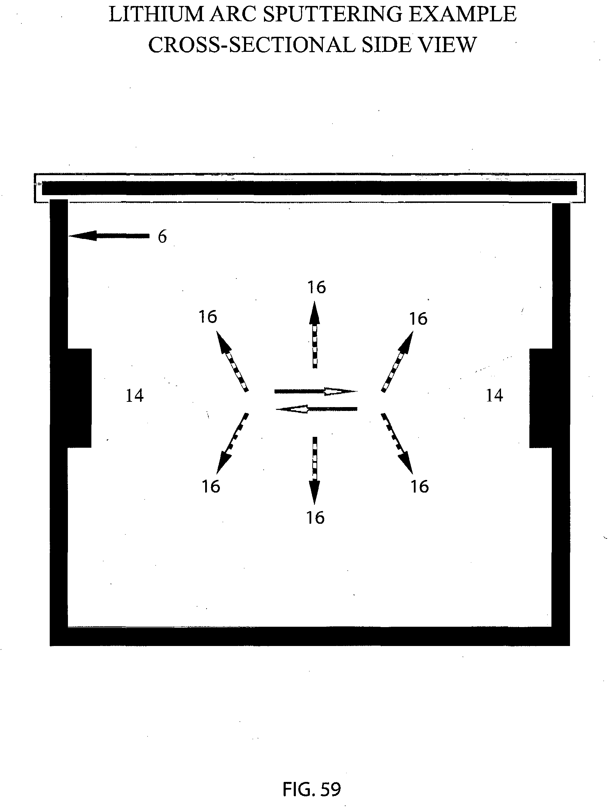

FIG. 59 is a cross-sectional side view portraying a lithium arc sputtering configuration within a reaction chamber.

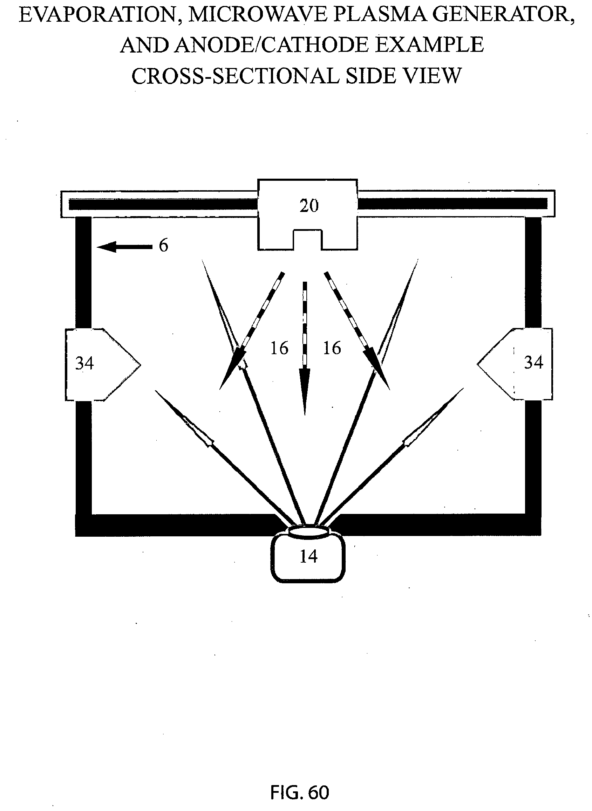

FIG. 60 is a cross-sectional side view portraying a lithium cathode or evaporation source within a reaction chamber that has plasma maintained by a microwave or radio frequency plasma generator.

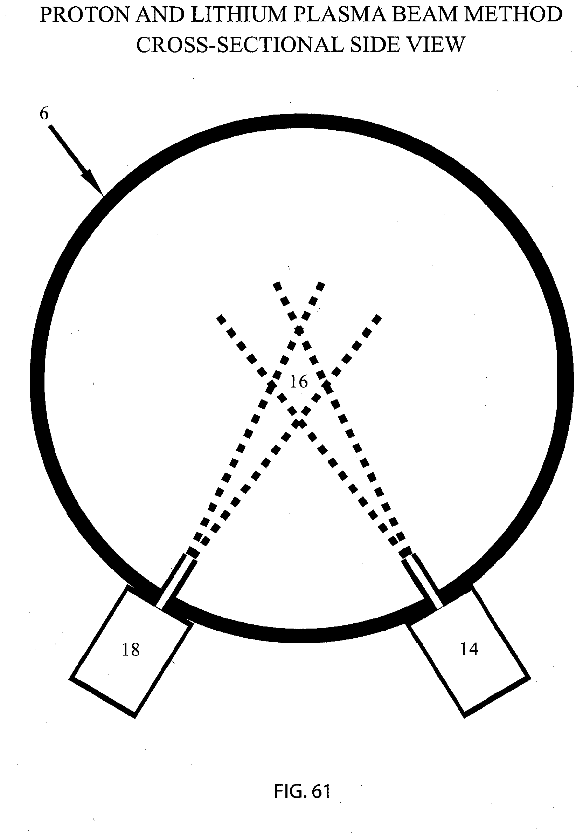

FIG. 61 is a cross-sectional side view portraying a spherical reaction chamber with two intersecting proton plasma and lithium plasma beams.

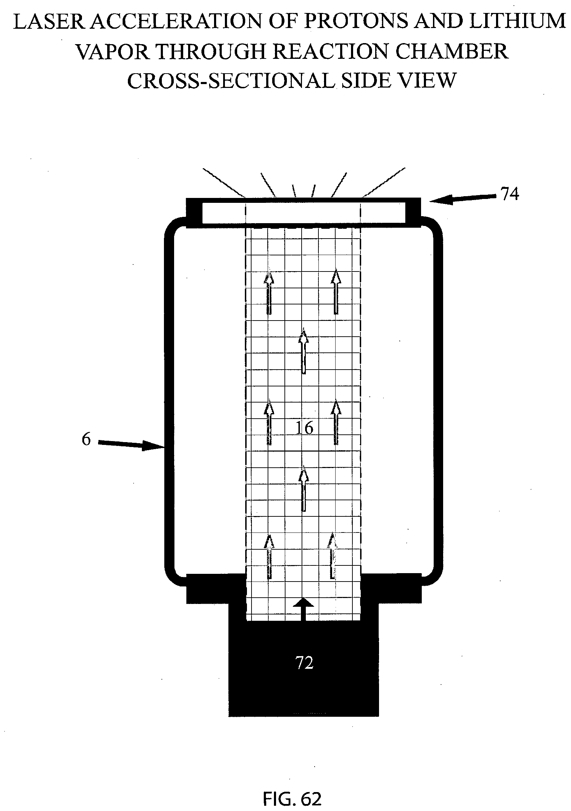

FIG. 62 is a cross sectional side view portraying a cylindrical reaction chamber filled with hydrogen and lithium vapor that has a proton accelerating laser passing through the volume.

## DETAILED DESCRIPTION

In conventional proton-lithium fusion experiments, the proton energy required to create fusion is about 300,000 electron Volts (eV) in order to overcome the repulsive electrostatic force (Coulomb barrier) between a proton and a lithium nucleus. These experiments typically require the use of large proton accelerators. The best fusion efficiency obtained for proton-lithium fusion occurred in 1935 and was measured to be 0.000003%. That is, for every 30 million protons, only one underwent fusion with a lithium nucleus. The early research performed by Unified Gravity Corp (UGC) in Alabama and Louisiana reproduced the fusion efficiency observed 79 years ago.

Given the low efficiency of historical proton-lithium fusion methods, the inventors pioneered an alternative approach that utilized predictions based on a gravity theory developed by UGC. The primary prediction states that if a proton is given just the right amount of energy, a very strong gravity force will occur between the proton and lithium nuclei constituents that forces the proton through the lithium Coulomb barrier resulting in high efficiency fusion. After the proton penetrates through the Coulomb barrier it combines with the lithium nucleus to create an unstable beryllium nucleus. The unstable beryllium immediately decays into two high-energy helium ions.

The amount of energy imparted to the protons as predicted by the inventor's gravity theory to create the proton-lithium fusion reaction is surprisingly low. The theory predicts that fusion efficiency will be significantly increased when a proton that has overcome the Coulomb barrier has energy close to 223 eV. The experimental results described later in this application verify that by imparting kinetic energy to protons near the predicted energy range results in high rates of fusion that produces helium ions.

The inventors have tested two techniques for imparting kinetic energy to protons. In one technique, a proton beam of specific energy was created that travels through the reaction chamber and fuses with atomized lithium in the chamber atmosphere. The second technique involved the creation of proton-lithium plasma in a reaction chamber with a positive bias voltage that accelerated the protons and results in fusion with atomized lithium in the chamber atmosphere. A number of other techniques are described in this application that remain to be tested.

The experimental results show that large numbers of high-energy particles are produced and helium gas is created in the reaction chamber. During the experiments, the input power needed to run the experiment is less than 1 kW. The highest power output achieved has exceeded 16 kW. If the power consumption of the vacuum pumps is not included, the power ratio Q reached values up to 3000. The fusion reaction has been sustained for 72 hours with every indication the reaction could be run longer.

This method and these results depart from "common wisdom" of conventional physics in several ways:

First, hydrogen-lithium fusion is conventionally thought to depend on acceleration of protons to high energy levels (typically around 300 keV) in order to overcome repulsive atomic forces and enable fusion with lithium atoms. In hundreds of laboratory experiments over the past 7 years, the inventors have shown that under certain conditions, fusion can occur at very low energy levels - as low as 200 eV.

Second, most fusion devices (see ITER, NIF, JET etc.) are hosted in enormous facilities, involve complicated magnetic or laser devices, and cost hundreds of millions, if not billions, of dollars to build. The inventors' device requires only a few cubic feet and can be manufactured in volume for a few hundred dollars.

Third, most experimental fusion reactions are only sustainable for seconds. The approach described in this filing has been shown to be sustainable for hours. The inventors have proven experimentally that it is possible to run the reaction for many days without interruption or intervention.

Fourth, the production of nuclear energy typically is accompanied by undesirable side effects. For example, current fission facilities produce nuclear waste whose radioactivity dissipates only after thousands of years. Most fusion reactions produce dangerous particles such as neutrons and gamma rays. The inventors' approach is completely "clean". The only materials used are hydrogen and lithium. The only outputs from the reaction are energetic helium ions.

To the inventors' knowledge, no fusion method to date has achieved energy breakeven, i.e. more energy output than input. The inventors' approach appears to have generated yields that exceed energy breakeven. Experimental results and breakeven calculations are described in detail in this application.

This application addresses how to efficiently produce large numbers of energetic helium ions, which is useful for a variety of purposes, including conversion into electricity.

In summary, the inventors have developed a unique method to produce large numbers of highly energetic helium ions that is a critical step in providing an entirely new source of cheap and safe energy.

## THE INVENTORS' GRAVITY THEORY

The Hydrogen-Lithium Fusion Device (HLFD) was developed with years of effort following discovery of the relativistic scalar gravity theory described in "Gravity theory based on mass-energy equivalence," supra, Acta Physica Polonica B 39, 2823 (2008). With insight and hard work, the technology developed can be seen as consistent with this theory. A more complete discussion of the theory appears in the paper. The description below is an orientation.

The HLFD creates low energy proton-lithium fusion reactions that release helium ion fusion byproducts with the indicated kinetic energies. The average output energy per fusion event for standard metallic lithium (Li-6: Li-7) = (7.5%: 92.5%) is about 16.21 MeV.

$$p + Li\text{-}6 \rightarrow He\text{-}3 \ (2.3 \ MeV) + He\text{-}4 \ (1.7 \ MeV)$$

$$p + Li\text{-}7 \rightarrow He\text{-}4 \ (8.6 \ MeV) + He\text{-}4 \ (8.6 \ MeV)$$

The HLFD can combine atomization and ionization technology to generate plasma containing protons and lithium within a reaction chamber that includes a proton source and lithium source. In one implementation, bias voltage is applied within the reaction chamber. The bias voltage enables protons to fuse with lithium in the plasma, whereby energetic helium ion fusion byproducts are produced. Other configurations of HLFD systems are suggested below.

Hydrogen-lithium fusion contrasts sharply with traditional hot and cold fusion efforts. The Hydrogen-Lithium Fusion Device, hot fusion, and cold fusion approaches are summarized and compared in the following table.

| Property | Hydrogen-Lithium Fusion Device | Hot Fusion | Cold Fusion |
|---|---|---|---|
| Fuel | Hydrogen and lithium | Deuterium and tritium | Heavy water ($D_2O$), hydrogen, and heavy elements |
| Fusion creation | Bias voltage applied within a reaction chamber | Magnetic pulsing or laser heating | $D_2O$ electrolysis and other combination techniques |
| Temperature | Room temperature | 100 million °C | Room temperature |
| Containment | Reaction chamber | Magnetic bottle | Various |
| Fusion byproducts | Helium ions | Neutrons | Neutrons |

A HLFD uses hydrogen, lithium-6, and lithium-7 as fuel that is converted into helium ions during the fusion process. In the experiments conducted by the inventors, the production of helium-3 and helium-4 is confirmed by Residual Gas Analyzer (RGA) partial pressure measurements, as is the consumption of lithium-6 and lithium-7.

The HLFD does not require any additional protective shielding beyond a reaction chamber. The laboratory rooms used for experiments conducted by the inventors included an x-ray/gamma/beta radiation detector and neutron detector as radiation safety devices. In experimental tests using a proton gun or bias voltage, all radiation measurements during fusion stayed at background levels. Also the HLFD does not initiate fusion through heat, thus thermal issues arising in current hot fusion research programs are not present.

The opportunities presented by this new approach to fusion are virtually limitless, including electrical power generation. Electrical power generation may utilize the kinetic energy of the helium ion fusion byproducts to heat water or another transfer medium and convert the kinetic energy to electrical power.

Applicants wish to emphasize that in this application various theories are discussed and positions taken with regard to the technology disclosed. These statements and positions are based upon the novel theories discussed below, such as in paragraphs [0091] through [0123], and also on the experiments conducted by the inventors and discussed in paragraphs [0124] through [0281]. Statements that do not find support in the experiments are necessarily theoretical and not based upon specific experimental findings. For example, applicants' belief in high efficiency proton-lithium fusion is based upon the novel theories associated with the technology disclosed and upon the belief that the experimental results tend to support this position. Also, the experiments discussed in paragraphs [0124] through [0281] produced results predicted by the inventors' gravity theory.

From March 2007 to March 2014, the inventors conducted 25 series of experimental tests in development of the HLFD. The design of the HLFD and the method to achieve proton-lithium fusion draw on the experimental data obtained in these 25 series of experimental tests.

The authors' work stems from a fundamental unanswered question in physics. The question is where kinetic energy is stored. The classical and relativistic formulas for kinetic energy are well known. However, after searching the physics literature, the inventors found no definitive answer as to where kinetic energy is actually stored; nor were the inventors able to answer a follow-up question: how does the storage of kinetic energy affect gravity? In addition to the literature search, the inventors talked to numerous physicists. None provided an answer to the kinetic energy storage question.

It is the inventors' belief that kinetic energy is stored in a field and that the storage of kinetic energy satisfies Einstein's mass-energy equivalence. As a result, the inventors looked for a mass density field that when integrated over all space resulted in mass-energy equivalence. This process led to the theoretical paper, "Gravity theory based on mass-energy equivalence" and the developments disclosed herein.

The HLFD presents a practical development from these inventors' gravity theory. In this theory, the rest mass and kinetic energy of an object separately distort the fabric of space according to mass-energy equivalence. Gravitational attraction between two objects results from the interaction of their mass density fields integrated over all space. The gravity experienced by each object is dependent on its own gravity wavelength.

The reader should understand the sense in which "fabric of space" is used in this disclosure. Space is sometimes defined as a three-dimensional expanse in which all matter is located and all events take place, extending in all directions and variously described as extending indefinitely or as finite but immeasurably large. Many people think of space or outer space as emptiness between stars. Astrophysicists and others do not fully understand the composition of the space between stars. Some believe that particles and anti-particles are continuously created and annihilated in this space, which requires that there be more to space than emptiness. Reference in this disclosure to the fabric of space includes the energy or essence of space, beyond the nothingness that people think of as outer space.

According to the inventors' gravity theory, the fabric of space (FS) consists of quantized units that are each composed of a vibrating proton-antiproton pair and have a rest mass of 2 proton masses, a characteristic length of about 2 mm, and the capability to store and transfer kinetic energy as vibration energy. While adding kinetic energy to an object increases its speed, adding kinetic energy to FS units increases their vibration speeds and results in a contraction of the FS units as shown in Section 7 of the inventors' gravity theory.

The inventors' gravity theory predicts two types of gravity. Type I gravity reduces to classical gravity when two objects are large but very different in mass and includes a set of logarithmic singularity lines that are believed to also generate the nucleon force. Type II gravity is a newly described form of gravity that may have already been observed in quantum mechanical behavior of particles. It includes an extremely strong wave gravity arising from a first-order singularity in the gravity potential that enables, for example, moving helium ions to vibrate FS units. The new Type II gravity also enables relativistic FS units to exert a very large gravity force on a large object.

In the preferred reference frame in which the FS is at rest, the singular Type I gravity force $F_{GI}(r_B)$ exerted by an object A on an object B is given exactly by Eqs. (17), (32), (33), and (40) of the inventors' gravity theory:

$$F_{GI}(r_B) = Gm_A m_B \ 1/4\pi \ (\lambda_B/\lambda_A)^{1/2} \ J_0(r_B/\lambda_B)/r_B^2$$

$$\times \{\sum_{i=1}^{4} (z[i])^{1/2} \ K(z[i]) \text{ if } z[i] \leq 1, \ K(1/z[i]) \text{ if } z[i] \geq 1)\},$$

where

$$z[i] = 2(a[i] + b[i]) / ((1 + a[i])(1 + b[i])),$$

$$a[1] = \lambda_B/\lambda_A\,(1 + v_A/c) + v_B/c, \quad b[1] = \lambda_B/\lambda_A\,(1 - v_A/c) - v_B/c,$$

$$a[2] = \lambda_B/\lambda_A\,(1 - v_A/c) + v_B/c, \quad b[2] = \lambda_B/\lambda_A\,(1 + v_A/c) - v_B/c,$$

$$a[3] = b[2], \quad b[3] = a[2],$$

$$a[4] = b[1], \quad b[4] = a[1],$$

where $r_B$ is the distance of object A from object B, G is the gravitational constant, $m_A$ and $m_B$ are the rest masses of object A and object B, $\lambda_A$ and $\lambda_B$ are their gravity wavelengths, $J_0(r_B/\lambda_B)$ is the 0th order Bessel function of the first kind, K(z) is the complete elliptic integral K of the first kind, $v_A$ and $v_B$ are the speeds of object A and object B in the preferred reference frame in which the FS is at rest, and c is the speed of light.

As shown in Eq. (7) of the inventors' gravity theory, the gravity wavelength $\lambda_G$ of an object is given by $\lambda_G = N_{AG} \times m$ where $N_{AG} \approx 6.0 \times 10^{23}$ meters/kg and m is its rest mass. For example, the gravity wavelength of a proton is about 1 mm.

The logarithmic singularity lines in the gravity force $F_{GI}(r_B)$ are evident when one of the parameters $z[i] \approx 1$ in the complete elliptic integral K(z) because then $K(z) \approx -\frac{1}{2} \ln(1 - z)$, where ln(x) is the natural logarithm function. The parameter $z[i] = 1$ occurs when either $a[i] = 1$ or $b[i] = 1$. Thus each of the 4 terms in the sum contributes 2 singularity lines. The logarithmic singularity lines occur in v-space rather than r-space.

While there are 4 distinct singularity lines for gravity exerted by object A on object B, there are also 4 singularity lines for gravity exerted by object B on object A. However, the equations for these lines are identical. Thus the 4 distinct logarithmic singularity lines in $(v_A/c, v_B/c)$ space are specified by $\pm m_B v_A/c \pm m_A v_B/c = m_A - m_B$, where $m_A$ and $m_B$ are the rest masses of object A and object B, $v_A$ and $v_B$ are their speeds in the preferred reference frame in which the FS is at rest, and c is the speed of light.

In the preferred reference frame in which the FS is at rest, the Type II wave gravity potential $V_{GII}(r_B)$ exerted by an object A on an object B with equal or smaller rest mass (e.g. a lithium nucleus on a helium ion or a helium ion on a FS unit) is given by Eq. (69) of the inventors' gravity theory:

$$V_{GII}(r_B) = - Gm_A m_B \lambda_A/\lambda_B\, J_0(r_B/\lambda_B)/r_B\,(1 - v_A^2/c^2)^{-\frac{1}{2}}\,(1 - v_B^2/c^2)^{\frac{1}{2}}\,1/\pi\,(1/\varepsilon\,|_{\varepsilon \to 0}),$$

where $r_B$ is the distance of object A from object B, G is the gravitational constant, $m_A$ and $m_B$ are the rest masses of object A and object B, $\lambda_A$ and $\lambda_B$ are their gravity wavelengths, $J_0(r_B/\lambda_B)$ is the 0th order Bessel function of the first kind, $v_A$ and $v_B$ are the speeds of object A and object B in the preferred reference frame in which the FS is at rest, c is the speed of light, and $(1/\varepsilon\,|_{\varepsilon \to 0})$ is a first-order singularity.

As shown in Eq. (7) of the inventors' gravity theory, the gravity wavelength $\lambda_G$ of an object is given by $\lambda_G = N_{AG} \times m$ where $N_{AG} \approx 6.0 \times 10^{23}$ meters/kg and m is its rest mass. For example, the gravity wavelength of a Li-7 nucleus is about 7 mm, a Li-6 nucleus about 6 mm, a He-4 ion about 4 mm, a He-3 ion about 3 mm, a FS unit about 2 mm, and a proton about 1 mm.

Because the Type II wave gravity potential has a first-order singularity, the Type II wave gravity force experienced by object B is zero for separation distances less than its gravity wavelength. For distances greater than its gravity wavelength, an instantaneous gravity force $F_{GII}(r_B)$ occurs whenever object B moves through a zero of the $J_0(r_B/\lambda_B)$ Bessel function as derived in Eq. (70) of the inventors' gravity theory:

$$F_{GII}(r_B) = Gm_A m_B \lambda_A/\lambda_B^2\, J_1(r_B/\lambda_B)/r_B\,(1 - v_A^2/c^2)^{-\frac{1}{2}}\,(1 - v_B^2/c^2)^{\frac{1}{2}}\,1/\pi\,(1/\varepsilon\,|_{\varepsilon \to 0}),$$

where $J_1(r_B/\lambda_B)$ is the 1st order Bessel function of the first kind and $r_B/\lambda_B$ is a zero of the $J_0(r_B/\lambda_B)$ Bessel function.

Type II wave gravity therefore results in a series of alternating attractive and repulsive gravity forces because the $J_1(r_B/\lambda_B)$ Bessel function changes sign at consecutive zeros of the $J_0(r_B/\lambda_B)$ Bessel function.

Even though the Type II wave gravity force has a first order singularity, the singular force occurs only at an exact zero of the $J_0(r_B/\lambda_B)$ Bessel function. Because a force results in a change in momentum, the Type II wave gravity force imparts an instantaneous but finite momentum change to object B in the direction of the Type II wave gravity force whenever object B moves through a zero of the $J_0(r_B/\lambda_B)$ Bessel function. The sizes of the momentum changes experienced by object B are quantized in proportion to $J_1(x)/x$ where x is a zero of the $J_0(x)$ Bessel function.

## THE INVENTORS' THEORY OF HYDROGEN-LITHIUM FUSION PRODUCTION

In a Hydrogen-Lithium Fusion Device (HLFD), a plasma generator generates plasma containing protons and lithium within a reaction chamber and includes a proton source and lithium source. The proton source can be hydrogen gas or hydrogen-containing material. The lithium source can be metallic lithium or lithium-containing material. The term lithium-containing material generically refers to any material that contains lithium in a solid matrix, a liquid matrix, a gaseous matrix, or a plasma matrix. This includes vaporized lithium and plasma from vaporized lithium.

(Theoretically, a containing reaction chamber would be unnecessary, as the reaction can proceed at atmospheric pressure, but it is expected that practical implementations will use some sort of reaction chamber.)

In one example, the plasma generator may include lithium evaporation. In a second example, the plasma generator may include lithium sputtering by an inert gas. In a third example, the plasma generator may include a component that generates a bias voltage. In a fourth example, the plasma generator may include one or more proton or lithium beams. In a fifth example, the plasma generator may include electromagnetic fields or photons.

Kinetic energy is imparted to a proton by an electric field, which can be applied within or outside a reaction chamber. A bias voltage can be applied within the reaction chamber. Or, the field can be applied before introduction of protons into the plasma, as by using a proton gun or similar device. Both methods use an electric field to impart the proper energy to the protons for efficient fusion. The inventors' experiments suggest that nominal proton energy in a range from about 100 eV to 5,000 eV is best for efficient fusion. The resulting kinetic energy enables protons to fuse with lithium in the plasma, whereby energetic helium ion fusion byproducts are produced. Theoretically, photon energy also could be used to energize the protons, using a laser directed to a target containing hydrogen, such as a lithium hydride target, imparting kinetic energy to the protons as they are liberated from the target.

The logarithmic singularity lines in the Type I gravity force described in the inventors' gravity theory are believed to generate the nucleon forces between a neutron and proton and are shown as lines 1, 2, and 3 in FIG. 1, where $m_n$ and $m_p$ are the rest masses of a neutron and proton, $v_n$ and $v_p$ are their speeds in the preferred reference frame in which the fabric of space is at rest, and c is the speed of light.

As may be derived from the inventors' gravity theory, the ratio of the Type I gravity forces experienced by a neutron and a proton near the singularity lines is proportional to the ratio of their rest masses. Because a force results in a change in momentum, this ratio leads to the orbital equilibrium condition $v_n/c = v_p/c$. Thus the equilibrium position in v-space occurs exceedingly near the singularity line with negative slope at $v_n/c = v_p/c = (m_n - m_p)/(m_n + m_p) \approx 0.000688735$. The corresponding nucleon kinetic energies are about 222.844 eV for the neutron and about 222.537 eV for the proton.

Whether the orbital equilibrium position in v-space is above or below the singularity line with negative slope shown in FIG. 1 may be determined by evaluating the stability condition of a circular orbit to small perturbations in the distance between the two objects under a radial force such as the nucleon gravity force. The stability condition shows that a circular orbit is stable above the singularity line, but is unstable below the singularity line.

The logarithmic singularity line $v_A/c = v_B/c$ in the Type I gravity force for equal rest mass objects A and B is believed to generate the nucleon force between two protons and between two neutrons, where $v_A$ and $v_B$ are their speeds in the preferred reference frame in which the fabric of space is at rest, and c is the speed of light. As the speed of a proton in the plasma approaches the speed of the protons in a lithium ion, the proton in the plasma also experiences very large attractive gravity forces exerted by the individual protons in the lithium nucleus.

At a proton energy between about 200 eV and 2.0 keV as suggested by FIG. 1, a proton may then approach a lithium nucleus in the proton-lithium plasma at a separation distance and with a kinetic energy that enables the proton to experience very large attractive gravity forces exerted by the individual neutrons and protons in the lithium nucleus. These gravity forces, arising from the logarithmic singularity lines in v-space, increase as they continually balance the repulsive electrostatic Coulomb forces. The ability for the proton to overcome the conventional Coulomb barrier in this way may be referred to as tunneling. When the proton reaches the lithium nucleus, it is captured into the lithium nucleus because these attractive gravity forces are believed to be the nucleon forces. The capture of the proton by the lithium nucleus creates an unstable beryllium ion that splits into two high-energy helium ions.

**TWENTY FIVE SERIES OF HLFD EXPERIMENTAL TESTS**

From March 2007 to March 2014, the inventors conducted 25 series of experimental tests in the course of developing the Hydrogen-Lithium Fusion Device (HLFD). The design of the HLFD and the technology disclosed to achieve proton-lithium fusion draw on the experimental data obtained in these 25 series of experimental tests. Most of the early tests failed to produce the desired levels of fusion. However, beginning in experimental series #13 and following in series #17 - 25, the experimental results showed increasing levels of fusion, ultimately producing sustainable net-energy-positive proton-lithium fusion.

The dates, locations, parameters of interest, and HLFD prototype for the 25 series of experimental tests are summarized in the following table. These tests explored a number of parameters believed to affect proton-lithium fusion efficiency.

SUMMARY OF HLFD EXPERIMENTAL TESTS

| Series # | Date | Location / Laboratory | Parameters of Interest | HLFD Prototype |
|---|---|---|---|---|
| 1 | March 2007 | Huntsville AL / NASA MSFC | Target Survivability & HLFD Thickness | #1 & #2 |
| 2 | June 2007 | Huntsville AL / NASA MSFC | Target Survivability & Faraday Cup Data | #2 |
| 3 | October 2007 | Huntsville AL / NASA MSFC | Heat Capture & Faraday Cup Data | #2 |
| 4 | March/April 2008 | Huntsville AL / NASA MSFC | Faraday Cup Data | #2 |
| 5 | September 2008 | Huntsville AL / NASA MSFC | Faraday Cup Data | #2 |
| 6 | July 2009 | Lafayette LA / Louisiana Accelerator Center | Fusion Efficiency vs. 1 mm & 2 mm Lithium Thickness | #3 |
| 7 | October 2009 | Lafayette LA / Louisiana Accelerator Center | Fusion Efficiency vs. Proton Energy | #3 |
| 8 | January 2010 | Lafayette LA / Louisiana Accelerator Center | Fusion Efficiency vs. 4 mm Lithium Thickness | #3 |
| 9 | April 2010 | Lafayette LA / Louisiana Accelerator Center | Fusion Efficiency vs. Proton Energy | #4 |
| 10 | August 2010 | Lafayette LA / Louisiana Accelerator Center | Fusion Efficiency vs. Proton Energy, Bias Voltage | #5 |
| 11 | March 2011 | Lafayette LA / Louisiana Accelerator Center | Fusion Efficiency vs. Proton Energy, Bias Voltage, Target Angle | #6 |
| 12 | May 2011 | Lafayette LA / Louisiana Accelerator Center | Fusion Efficiency vs. Proton Energy, Bias Voltage, Target Angle | #6 |
| 13 | June 2011 | Lafayette LA / Louisiana Accelerator Center | Fusion Efficiency vs. Proton Energy, Bias Voltage, Target Angle | #6 |
| 14 | August 2011 | Lafayette LA / Louisiana Accelerator Center | Fusion Efficiency vs. Proton Energy, Bias Voltage, Target Angle | #6 |
| 15 | January 2012 | Denton TX / University of North Texas | Fusion Efficiency vs. Proton Energy, Neg. Bias Voltage, Target Angle | #6 |
| 16 | March 2012 | Denton TX / University of North Texas | Fusion Power vs. Lithium Sputtering, Neg. Bias Voltage, Vacuum Pressure | #7 |
| 17 | April 2012 | Denton TX / University of North Texas | Fusion Power vs. Lithium Sputtering, Pos. Bias Voltage, Vacuum Pressure | #7 |

(continued)

| Series # | Date | Location / Laboratory | Parameters of Interest | HLFD Prototype |
|---|---|---|---|---|
| 18 | July 2012 | Denton TX / University of North Texas | Fusion Power vs. Lithium Sputtering, Alt. Bias Voltage, Vacuum Pressure, Bias Frequency | #8 |
| 19 | November 2012 | Denton TX / University of North Texas | Fusion Power vs. Lithium Sputtering, Alt. Bias Voltage, Vacuum Pressure, Bias Frequency | #8 |
| 20 | April 2013 | Denton TX / University of North Texas | Fusion Power vs. Lithium Sputtering, Alt. Bias Voltage, Vacuum Pressure, Bias Frequency | #9 |
| 21 | July 2013 | Denton TX / University of North Texas | Fusion Power vs. Lithium Sputtering, Alt. Bias Voltage, Vacuum Pressure, Bias Frequency | #9 |
| 22 | October 2013 | Denton TX / University of North Texas | Fusion Power vs. Lithium Evaporation, Alt. Bias Voltage, Vacuum Pressure, Bias Frequency | #10 |
| 23 | March 2014 | Morgan Hill CA/ Unified Gravity R&D Laboratory | Fusion Power vs. Lithium Evaporation, Proton Gun, Vacuum Pressure, | #11 |
| 24 | March 2014 | Morgan Hill CA/ Unified Gravity R&D Laboratory | Fusion Power vs. Lithium Evaporation, Proton Gun, Vacuum Pressure | #11 |
| 25 | March 2014 | Morgan Hill CA/ Unified Gravity R&D Laboratory | Fusion Power vs. Lithium Evaporation, Bias Voltage, Vacuum Pressure | #11 |

Series #1 - 10 used an ion accelerator in order to generate a proton beam with proton energy between 240 keV and 900 keV and proton current between 0.5 $\mu$A and 50 $\mu$A, lithium targets with thicknesses between 50 $\mu$m and 4 mm, and the target supports in HLFD prototypes #1 - 5. In these 10 series of experimental tests, conventional fusion efficiencies of about $10^{-6}$ % similar to those measured by Herb were obtained. However several HLFD parameters were discovered to be important that were not anticipated from conventional theory. These results are described later in the ion accelerator experimental test results section.

Series #11 - 15 used a proton gun in order to generate a proton plasma beam with proton energy between 50 eV and 5 keV and proton current between 4 $\mu$A and 320 $\mu$A centered on the lithium target in HLFD prototype #6. In these five series of experimental tests, additional HLFD parameters were discovered to be important. These results are described later in the proton gun experimental test results section.

Series #16 used negative bias voltage applied to the lithium target to ignite proton plasma within the reaction chamber whereby protons in the plasma impinged the lithium target. In series #16 tests using negative bias voltage, no helium ion particle counts were measured.

Series #17 used a positive bias voltage applied to the lithium target to ignite proton-lithium plasma within the reaction chamber and fuse protons with lithium ions in the proton-lithium plasma. In series #17 tests using positive bias voltage, helium ion particle counts were measured. However during the tests the lithium targets developed a grey-black coating believed to be lithium hydride. Series #17 used a 1 mm diameter aperture placed over the p-i-n diode particle detectors to reduce overloading of the particle detectors.

Series #18 used alternating negative and positive bias voltages applied to the lithium target to generate and ignite proton-lithium plasma within the reaction chamber and fuse protons with lithium in the proton-lithium plasma. The alternating bias voltages increased the sputtering of lithium ions from the lithium target by ionized argon gas in the reaction chamber and reduced target poisoning observed in series #17. Series #18 used a 250 $\mu$m diameter aperture placed over the p-i-n diode particle detectors to reduce overloading of the particle detectors.

Series #19 used alternating negative and positive bias voltages applied to the lithium target in order to reproduce the series #18 test results and to explore options for increasing fusion power. Some tests used a lithium target that was lightly coated with lithium hydride. Series #19 used a 25 $\mu$m diameter aperture placed over the p-i-n diode particle detectors to reduce overloading of the particle detectors.

Series #20 used alternating negative and positive bias voltages applied to the lithium target in order to reproduce the series #18 and #19 test results, and to explore options for increasing fusion power using a magnetron target holder. Series #20 used a 25 μm diameter aperture placed over an ORTEC ruggedized silicon surface barrier particle detector to reduce overloading of the particle detector.

Series #21 attempted to explain the energy peaks in the particle detectors in series #18 - 20 shifting as a function of alternating bias voltage frequency, and to test an alternative magnetron target holder design for lithium sputtering. Neither attempt was successful.

Series #22 showed that the energy peaks in the particle detectors shifting as a function of alternating bias voltage frequency may be caused by bias voltage permeation into the particle detector assembly. Series #22 also tested lithium evaporation as an alternative to lithium sputtering for generating lithium ions in the reaction chamber.

Series #23 - 24 used a proton gun to create fusion by passing a proton beam with energy between 100 eV and 5 keV through lithium vapor within the reaction chamber. Series #23 used a low proton beam current to prevent the detector from having a dead time above 10%. Series #24 used a high beam current to maximize particle CPS. Residual Gas Analyzer measurements indicated that He-3 and He-4 ions were created.

Series #25 created fusion using a positive bias voltage of about 400 volts. Lithium vapor and hydrogen gas were present in the chamber and resulted in high levels of fusion power. Residual Gas Analyzer measurements indicated that He-3 and He-4 ions were created.

Series #1 - 5 were performed at the NASA Marshall Space Flight Center (MSFC) in Huntsville Alabama. During the tests, helium ions were not directly measured because the ion accelerator laboratory was not equipped with particle measurement equipment. The primary interest at MSFC was the survivability of thin lithium foil targets when a proton beam with proton energy between 300 keV and 700 keV and proton current between 10 μA and 40 μA impinged a lithium target without a backing plate.

Series #6 - 14 were performed at the Louisiana Accelerator Center at the University of Louisiana in Lafayette Louisiana. Direct helium ion measurements were achieved with ORTEC silicon surface barrier particle detectors in series #6 - 12 and series #20 - 22, while silicon p-i-n diode particle detectors were used in series #13 - 19. See for example: G. Deves et al, "Characterization of Si p-i-n diode for scanning transmission ion microanalysis of biological samples", Review of Scientific Instruments **77**, 056102 (2006).

In series #15 - 22 performed at the Physics Department at the University of North Texas in Denton Texas, the reaction chamber configuration was similar to the configuration used in series #13 - 14. A bipolar power supply enabled negative and positive bias voltages up to ±1000 volts to be applied to the lithium target. In series #18 - 22, a function generator enabled the bipolar power supply to apply alternating negative and positive bias voltages up to ±1000 volts and between 1 Hz and 1.9 kHz to the lithium target in series #15 - 21 and bias grid in series #22. In series #15 - 18 and 20 - 22, two roughing pumps and a turbo pump enabled vacuum pressures between $2 \times 10^{-6}$ Torr and 760 Torr, while in series #19 the turbo pump system was removed from the reaction chamber with the one remaining roughing pump enabling vacuum pressures down to 0.01 Torr.

Series #23 - 24 was conducted at the Unified Gravity R&D Laboratory in Morgan Hill CA and expanded previous tests conducted in series #13 that measured high-energy helium ions using a proton gun to create proton-lithium fusion. The reaction chamber was spherical having a 17.5 inch inner diameter with 19 Conflat ports of various diameters and maintained a pressure of about $10^{-5}$ Torr. A resistive evaporation source at the bottom of the reaction chamber created a vertical lithium vapor beam that intersected the proton beam.

Series #25 was conducted at the Unified Gravity R&D Laboratory. A resistive evaporation source at the bottom of the reaction chamber created a vertical lithium vapor beam. Differential pumping of a RGA chamber attached to the reaction chamber allowed a static pressure of $10^{-1}$ Torr in the reaction chamber while the RGA measured partial pressures within the RGA chamber. A DC power supply was used to apply a positive bias voltage of about 400 volts to a bias rod near the center of the spherical reaction chamber.

## ION ACCELERATOR EXPERIMENTAL TEST RESULTS (Series 1-10)

In experimental series #1 - 10, the Hydrogen-Lithium Fusion Device (HLFD) parameters explored included target support thickness, target thickness, target support edge distance, target bias voltage, and proton energy.

HLFD Target Support Thickness. It was found in series #1 that a 50 μm thick lithium foil target melted when supported by a target support composed of two 1 mm thick aluminum plates with 3.8 cm diameter circular center holes (HLFD prototype #1), but did not melt when supported by a target support composed of two 5 mm thick aluminum plates with 3.8 cm diameter circular center holes and rounded outside edges (HLFD prototype #2). Heat flow calculations indicate that at the wattage supplied by the proton beam to the lithium foil target, the lithium foil target melts in less than a second in both cases. The results were replicated in series #4. These results are the experimental basis for the belief that Type II wave gravity forces exerted on protons or helium ions within the target by nuclei in the target support may be canceled by adjacent positive and negative singular gravity potentials from identical target support nuclei in the same direction and leads to a minimum target support thickness requirement. The target support in the HLFD prototypes evolved into a chamfer configuration in which the magnitude of Type II wave gravity forces exerted on protons or helium ions within the target by element nuclei in the target support is reduced below the magnitude of the Type II wave gravity forces exerted by lithium nuclei at the first zero of the $J_0$ Bessel function. The evolution of the target supports in HLFD prototypes #1 - 6 is shown in FIG. 2.

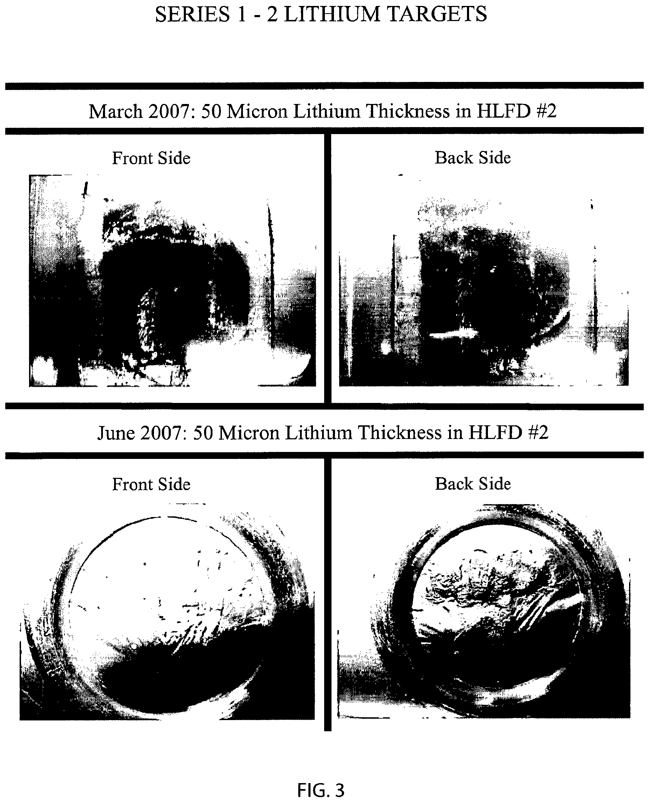

HLFD Target Thickness. The lithium targets used in series #1 - 10 were between 50 $\mu$m and 4 mm thick. According to conventional theory, 8.6 MeV He-4 ions have a stopping distance of 180 $\mu$m in lithium. In series #8 however, helium ions passed through a 4 mm thick lithium target. These results are the experimental basis for the belief that Type II wave gravity forces exerted on protons and helium ions within the target by the lithium nuclei enable the protons and helium ions to pass through the lithium target without transferring significant fusion energy to the target as heat. The thickness of the lithium targets used during series #1 - 10 increased and representative targets are shown in FIGS. 3 - 4. In these figures the heat damage to the targets is evident. However the targets survived without the development of holes.

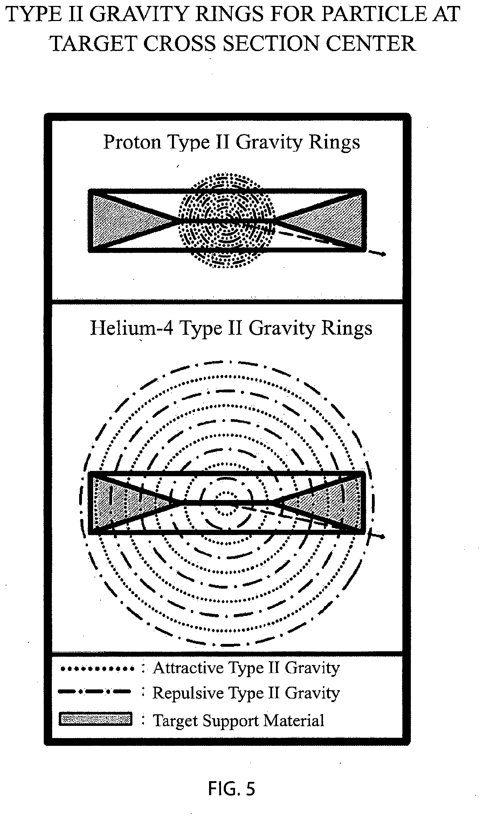

HLFD Target Support Edge Distance. The Type II wave gravity forces exerted by the target support nuclei may be present. In the target assembly in HLFD prototypes #4 - 6, the magnitude of Type II wave gravity forces exerted on protons or helium ions within the target by the target support peripheral edges was reduced below the magnitude of Type II wave gravity forces exerted by the lithium target nuclei. This was accomplished by extending the separation between the lithium target nuclei and the target support peripheral edges to a distance at which the magnitude of the Type II wave gravity force exerted on a proton or helium ion within the target by a support element nucleus at a zero of the $J_0$ Bessel function was less than that exerted by a lithium target nucleus at the first zero of the $J_0$ Bessel function. The Type II wave gravity force rings corresponding to the zeros of the $J_0$ Bessel function for the target support in the HLFD prototypes for protons and He-4 ions are shown in FIG. 5.

HLFD Target Bias Voltage. Because the target support in HLFD prototype #4 was constructed from an electrically conductive material (aluminum), a 0.5 inch thick ceramic disk was used as a base stand for the target support in HLFD prototype #5 in order to electrically isolate the target support and lithium target. In series #10, a bias voltage between -1000 volts and +1000 volts was applied to the target support and lithium target for proton energy between 280 keV and 400 keV and current between 20 $\mu$A and 30 $\mu$A at a vacuum pressure of $10^{-6}$ Torr. The tests in series #10 determined that bias voltages between -1000 volts and +1000 volts did not affect conventional fusion efficiency at these proton energies and currents.

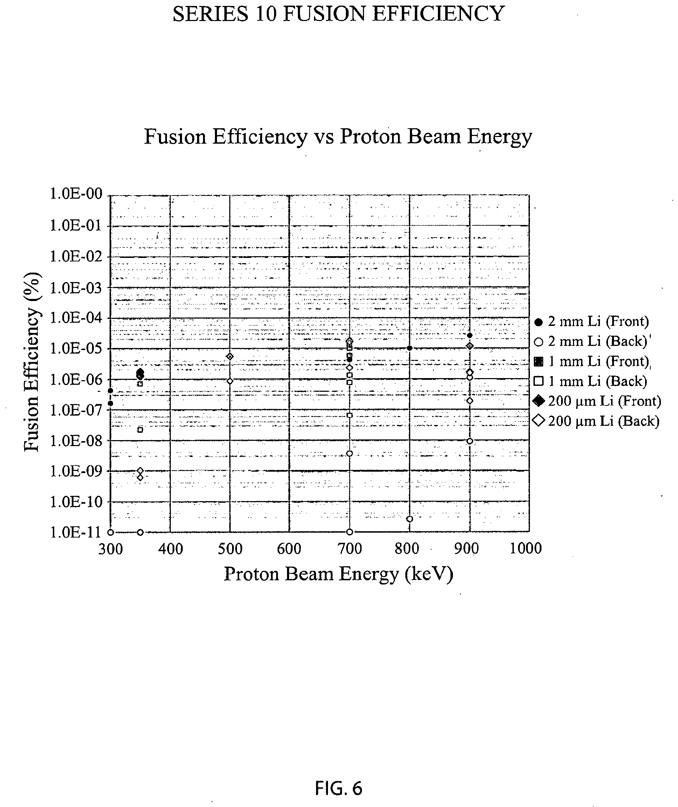

HLFD Proton Energy. In series #1 - 10, proton energies between 240 keV and 900 keV were used because conventional theory places the proton-lithium Coulomb barrier at a proton energy of about 300 keV. In these experiments, fusion efficiency never surpassed conventional levels as shown in FIG. 6 despite HLFD prototype design modifications and application of large bias voltages. These results are the experimental basis of the belief that the required proton energy may in fact be determined by the inventors' gravity theory, which predicts that a logarithmic singularity line with negative slope in v-space generates the nucleon forces between a proton and neutron at a proton energy about 222.537 eV.

## PROTON GUN EXPERIMENTAL TEST RESULTS (Series 11-15)

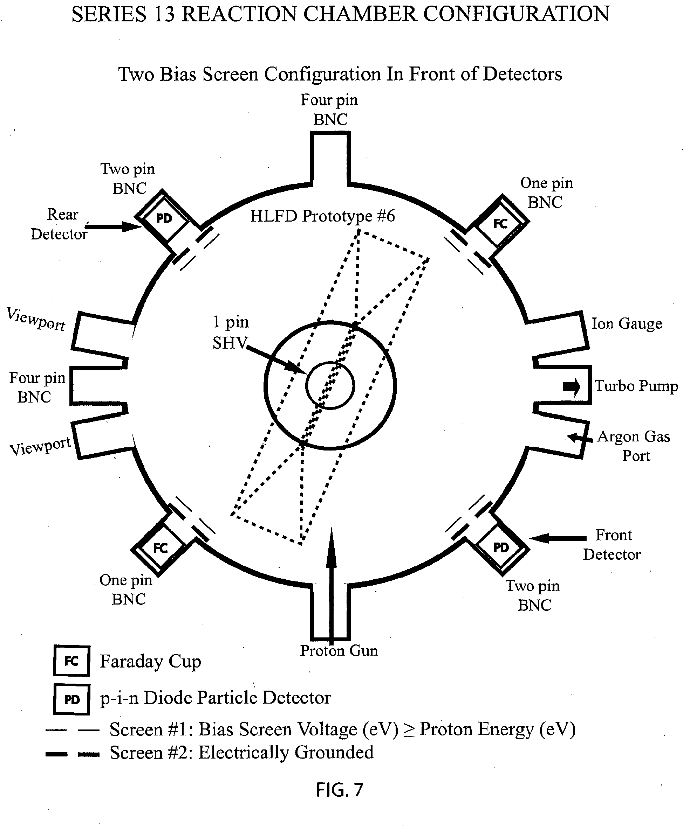

Experimental series #11 - 14 were performed at the Louisiana Accelerator Center at the University of Louisiana in Lafayette LA, but used a proton gun rather than an ion accelerator in order to generate a proton plasma beam with proton energy between 50 eV and 5 keV centered on the lithium target in Hydrogen-Lithium Fusion Device (HLFD) prototype #6. A detailed top view of the reaction chamber configuration for series #13 is shown in FIG. 7 and portrays the location and size of HLFD prototype #6. The target assembly was identical in configuration to the target assembly in HLFD prototype #5 except that the lithium targets were 3 inches in diameter rather than 2 inches and the target assembly beginning in series #14 could be rotated without opening the reaction chamber and used either nylon or alumina ceramic as an electrical insulator.

Series #15 was performed at the Physics Department at the University of North Texas in Denton TX. While the experimental configuration was similar to that in series #14, the new reaction chamber at the University of North Texas was much deeper that the Louisiana reaction chamber and offered numerous experimental improvements for the fusion tests. The equipment used in series #11 - 15 is listed in the following table.

EQUIPMENT FOR SERIES #11 - 15 EXPERIMENTAL TESTS

Series #11 - 14 Laboratory

**[0089]**

　　• Louisiana Accelerator Center, University of Louisiana, Lafayette LA

Series #15 Laboratory

• Physics Department, University of North Texas, Denton TX

Proton Gun

- IonEtch Sputter Ion Gun (GenII) available from tectra GmbH
- Proton plasma beam from 99.9% pure hydrogen gas
- Proton energy between 50 eV and 5 keV
- Proton current between 4 μA and 320 μA
- Argon plasma beam from argon gas

Target

- 99.9% pure lithium disks available from American Elements Inc
- 3 inch diameter
- 1 mm thick

HLFD Prototype #6

- 8.7 inch diameter aluminum disk with a 78° inward chamfer angle to a 2.5 inch diameter center hole

- 3 inch diameter $\times$ 3 mm deep depression holds the lithium target

- 3 inch diameter $\times$ 2 mm aluminum retaining ring holds the target at the center of the aluminum disk

- Target support electrically isolated from reaction chamber by a ceramic support base in series #11 - 13, a rotatable Teflon support base in series #14, and a rotatable nylon/alumina support base in series #15

Bias Voltage Power Supply

- DC power supply capable of -5 kV to +5 kV
- SHV connection flange capable of 5 kV

Particle Detectors

- In series #11 - 12 silicon surface barrier detectors available from ORTEC Inc
- In series #13 - 15 silicon p-i-n diode detectors available from Hamamatsu Corporation
- Small Faraday cups with 1/16 inch Teflon insulation
- Two stainless steel bias screens at 4 cm distance in front of each detection device in series #13
- Aluminum foil particle shields in front of each detection device in series #14 - 15

Reaction Chamber (Lafayette LA)

- Modified bell reaction chamber with twelve 2.75 inch diameter radial ports at the target's center horizontal plane at a distance of 20 cm
- Turbo pump capable of $10^{-6}$ Torr vacuum pressure

Reaction Chamber (Denton TX)

• 38 cm deep by 40 cm diameter cylindrical reaction chamber with eleven 2.75 inch diameter radial ports, four 2.75 inch diameter bottom ports, and one 8 inch diameter horizontal port used for turbo pump assembly
• Two roughing pumps in combination with a turbo pump capable of vacuum pressures between $2 \times 10^{-6}$ Torr and 760 Torr

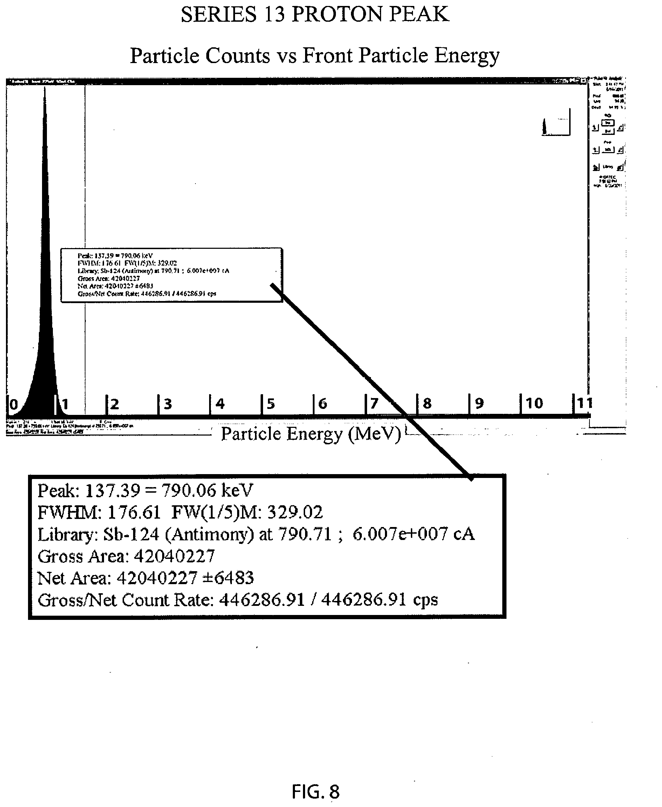

In series #11 - 15, proton plasma beam energies between 50 eV and 5 keV, target bias voltages up to $\pm 5$ kV, target angles between 0° and 60° from perpendicular to the proton beam axis, and vacuum pressures between $2 \times 10^{-6}$ Torr and $2 \times 10^{-3}$ Torr were tested in order to discover a measureable 8.6 MeV helium ion peak. The front detector consistently measured a low energy particle peak such as displayed in FIG. 8. The HLFD parameters explored included helium ion peak, target support design, and fusion reproducibility.

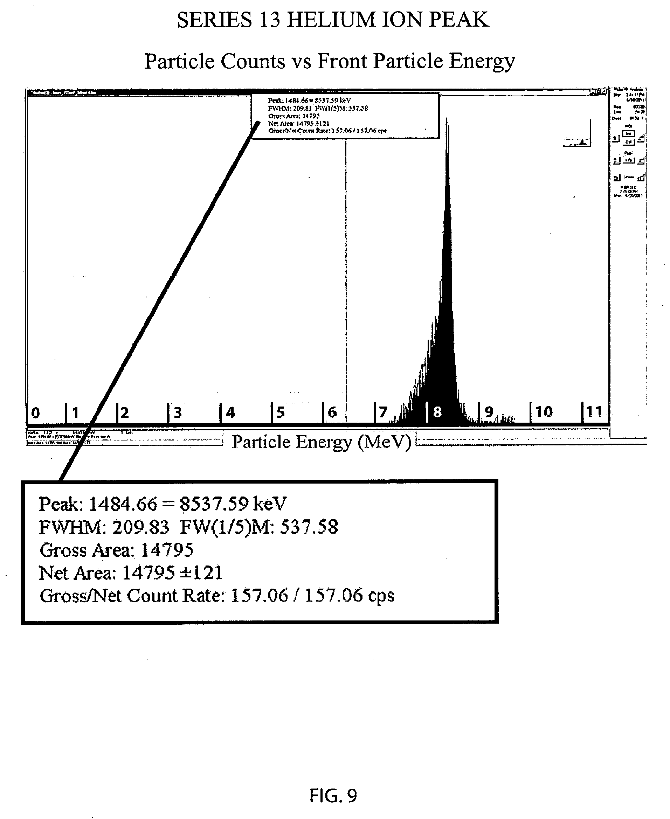

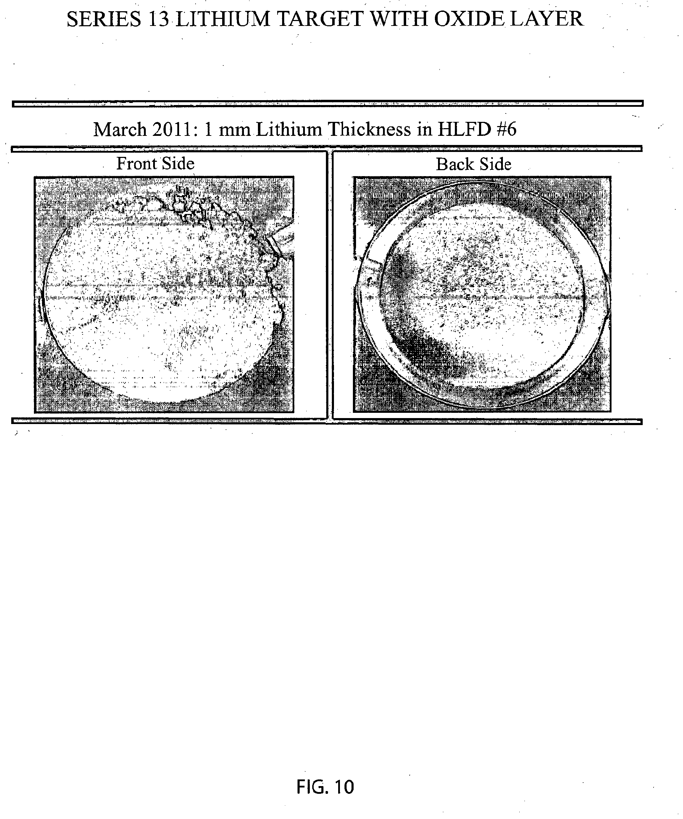

HLFD Helium Ion Peak. The reaction chamber configuration shown in FIG. 7 was used in series #13. During the final test of series #13, the target angle was set to about 60° from perpendicular to the proton plasma beam, the target bias voltage to about negative 222.6 volts, and the proton energy to about 225 eV with a proton current about 50 $\mu$A. After about 10 minutes of proton impingement, counts began to appear in the front particle detector at about 8.6 MeV. The resulting 8.54 MeV particle peak and the counts per second (CPS) and peak data from the particle detector software are displayed in FIG. 9. The front and rear of the lithium target are shown in FIG. 10. The production of 8.6 MeV helium ions indicated that proton-lithium fusion can occur at proton energies well below the conventional Coulomb barrier.

HLFD Target Support Design. In series #14 - 15, design flaws in the rotatable Teflon base caused the target support to come in close proximity to the reaction chamber walls. The close proximity between the biased HLFD and reaction chamber wall resulted in arcing from the target support to the grounded chamber. These design flaws necessitated a redesign of the target support for series #16. HLFD prototype #7 with a conical target support was constructed to reduce the coronal discharge effect while still being able to bias the lithium target, rotate the lithium target, and conform to the equivalent separation distance and thickness parameters.

HLFD Fusion Reproducibility. During the fusion tests in series #15, proton energies from 50 eV to 5 KeV were used to impinge the lithium target with proton currents up to 500 $\mu$A. A bias voltage of negative 222.6 volts was applied to the target to attempt to reproduce the helium ion peak observed in series #13. However no 8.6 MeV helium ions were observed. The inability to replicate the series #13 data when the lithium oxide layer was no longer present suggested that the proton beam energy and energy imparted by negative bias voltage did not engage the nucleon forces exerted by the neutrons and protons in the lithium nuclei.

At the end of series #15, a large negative bias voltage was applied to the lithium target at a hydrogen vacuum pressure of about 1 Torr and ignited a proton plasma as a result of electron emission from the lithium target. This method of plasma creation enabled control of the proton energy at the target surface by varying the target bias voltage and replaced the proton gun in generating the proton current.

## LITHIUM SPUTTERING EXPERIMENTAL TEST RESULTS

### NEGATIVE BIAS VOLTAGE (Series 16-17)

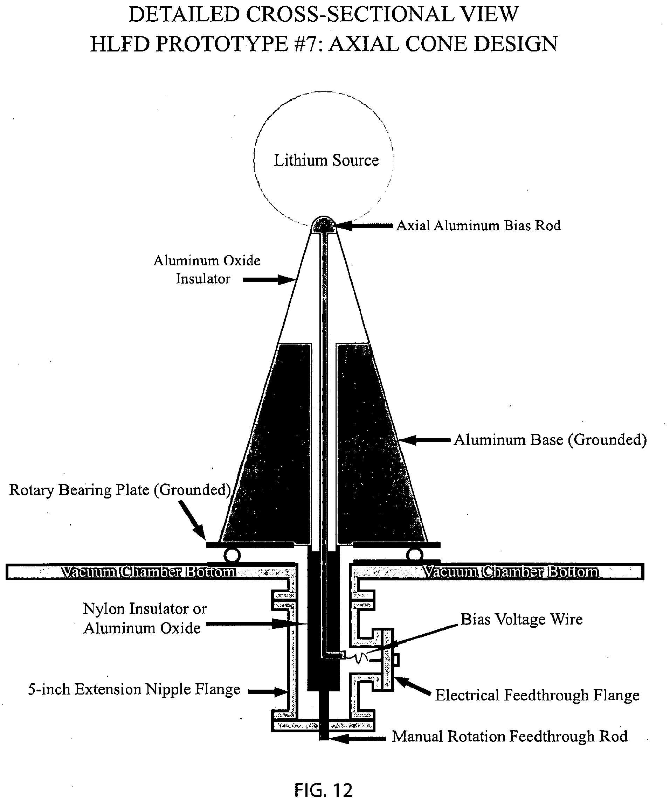

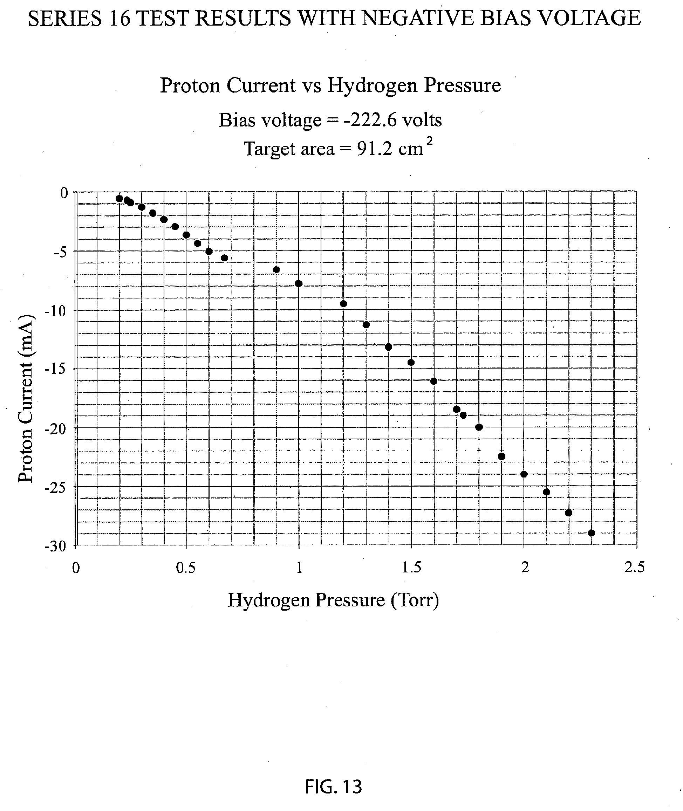

Experimental series #16 explored proton plasma characteristics resulting from negative bias voltage applied to the lithium target in HLFD prototype #7 within the reaction chamber configuration displayed in FIG. 11. The target assembly configuration for HLFD prototype #7 is shown in FIG. 12 and generated proton currents between negative 50 $\mu$A and negative 30 mA for bias voltages between 0 and negative 900 volts and vacuum pressures between 0.1 Torr and 2.3 Torr. The maximum proton current was limited by the power supply to negative 30 mA. A graph of the proton current versus vacuum pressure at a bias voltage about negative 222.6 volts and a target area about 91.2 cm$^2$ is shown in FIG. 13. No particle counts were measured in any series #16 tests.

To address heat buildup from plasma, the exterior section of the copper rod ouside the reaction chamber for HLFD prototype #7 and #8 was cooled by an aluminum cooling assembly with multiple interconnected water conduits. The cooling assembly was positioned vertically on the exterior section of the feedthrough flange and was powder coated to provide electrical insulation. The cooling pump and water reservoir from the proton gun used in series #15 cycled cold distilled water through the cooling assembly.

In series #17, the first three and a half days of testing using negative bias voltage step durations of 1 minute rather than several seconds reproduced the results of series #16 in that no particle counts were measured. With the exploration of negative bias voltage showing no particle counts, the remaining tests in experimental series #17 explored the effects of positive bias voltage.

## LITHIUM SPUTTERING EXPERIMENTAL TEST RESULTS

### POSITIVE BIAS VOLTAGE (During Series 17)

When a positive bias voltage was unintentionally applied to the lithium target, the test unexpectedly produced a particle peak. The series #17 tests with positive bias voltage produced particle peaks that ranged between 0.8 MeV and 10 MeV and had a detector dead time below 10%. The color of the plasma was pink-orange suggesting the presence of proton-lithium plasma within the reaction chamber. At vacuum pressures between about 0.05 Torr and 1.5 Torr, surface electric charge buildup on regions of the target and subsequent arcing between the target regions are believed to ignite the proton-lithium plasma.

When a positive initial bias voltage between about 300 volts and 1,000 volts was applied to the target, a loss of control of the DC voltage source occurred and the bias current fluctuated both in the positive and negative range very often limited to $\pm 40$ mA by a Kepco Bi-Polar DC power supply. During this uncontrolled behavior, the final bias voltage dropped to between about 220 volts and 320 volts. The large bias current fluctuations are believed to be due to surface electric charge buildup on regions of the target resulting in arcing between target regions.

The series #17 tests for positive bias voltage are summarized in the following table. The bias current was limited to a maximum of $\pm 40$ mA by the new Kepco Bi-Polar DC power supply. An aperture diameter of 1 mm and a p-i-n diode detector distance of 21 cm were used in the tests.

SERIES #17 FUSION TESTS WITH POSITIVE BIAS VOLTAGE

| Test # | Target # | Vacuum pressure (Torr) | Initial voltage (volts) | Final voltage (volts) | Bias current (mA) | Particle peak (MeV) | Particle counts (CPS) | Time Duration (min) |
|---|---|---|---|---|---|---|---|---|
| 1 | 2 | $2.09 \times 10^{-1}$ | 315 | 260 | 25 | 7.7* | 440 | 25 |
| 2 | 2 | $1.11 \times 10^{-1}$ | 500 | 250 | -6 | 7.6* | 400 | 1 |
| 3 | 2 | $1.11 \times 10^{-1}$ | 1000 | 240 | 40 | 7.6* | 300 | 3 |
| 4 | 2 | $1.11 \times 10^{-1}$ | 600 | 242 | 40 | 7.6* | 220 | 2 |
| 5 | 2 | $1.11 \times 10^{-1}$ | 800 | 250 | 40 | 6.3* | 264 | 15 |
| 6 | 2 | $1.15 \times 10^{-1}$ | 316 | 316 | 41 | 6.0* | 20 | 5 |
| 7 | 2 | $6.20 \times 10^{-2}$ | 1000 | 1000 | 1 | None* | 0 | 5 |
| 8 | 2 | 1.00 | 400 | 220 | 40 | 1.2* | 880 | 15 |
| 9 | 3 | $7.43 \times 10^{-1}$ | 800 | 232 | 40 | 0.8** | 3800 | 20 |
| 10 | 3 | $7.59 \times 10^{-2}$ | 800 | 310 | 40 | 8.30 | 3600 | 5 |
| 11 | 3 | 1.50 | 800 | 239 | 40 | None⊗ | 0 | 5 |
| 12 | 3 | $5.14 \times 10^{-1}$ | 800 | 241 | 40 | 2.4* | 1500 | 20 |
| 13 | 3 | $5.14 \times 10^{-2}$ | 800 | 248 | 40 | 8.5* | 178 | 10 |
| 14 | 3 | $6.24 \times 10^{-1}$ | 800 | 245 | 40 | 2.4* | 650 | 5 |
| 15 | 3 | $†6.70 \times 10^{-1}$ | 800 | 241 | 40 | 2.4* | 20 | 1 |
| 16 | 3 | $2.24 \times 10^{-1}$ | 800 | 225 | 40 | 10⊗ | 475 | 2 |
| 17 | 3 | $2.24 \times 10^{-1}$ | 800 | 225 | 40 | 7.5* | 448 | 2 |
| 18 | 3 | $2.24 \times 10^{-1}$ | 800 | 225 | 40 | 7.6** | 368 | 2 |

(continued)

| Test # | Target # | Vacuum pressure (Torr) | Initial voltage (volts) | Final voltage (volts) | Bias current (mA) | Particle peak (MeV) | Particle counts (CPS) | Time Duration (min) |
|---|---|---|---|---|---|---|---|---|
| 19 | 3 | $2.24\times10^{-1}$ | 800 | 252 | 40 | 8.47* | 222 | 10 |

⊗ No shield or aperture
* 1 mm aperture, one 10 $\mu$m aluminum foil shield
** 1 mm aperture, two 10 $\mu$m aluminum foil shields
† Dynamic vacuum mode

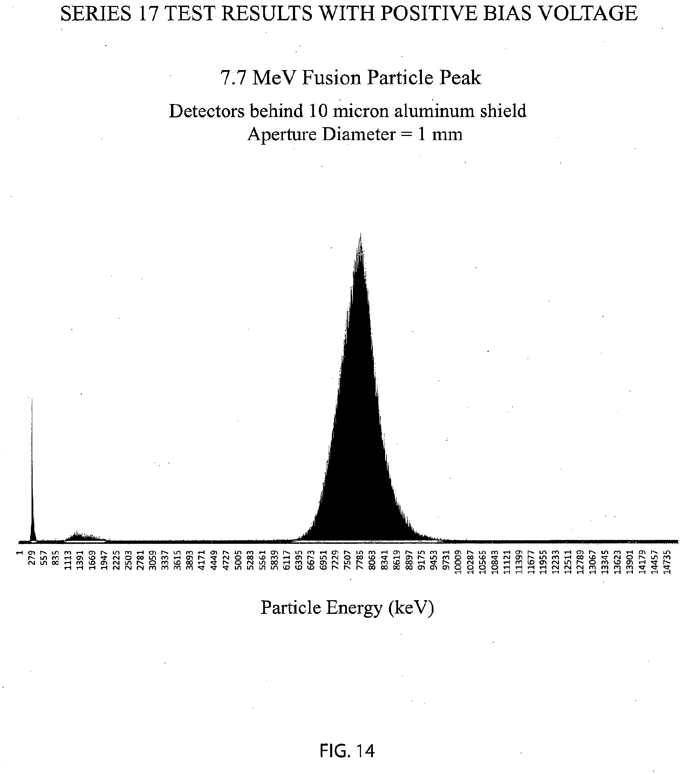

For example, a 7.7 MeV fusion particle peak was measured in test 1 and is shown in FIG. 14. The particle detector was placed behind a 1 mm diameter aperture and a 10 $\mu$m thick aluminum foil shield.

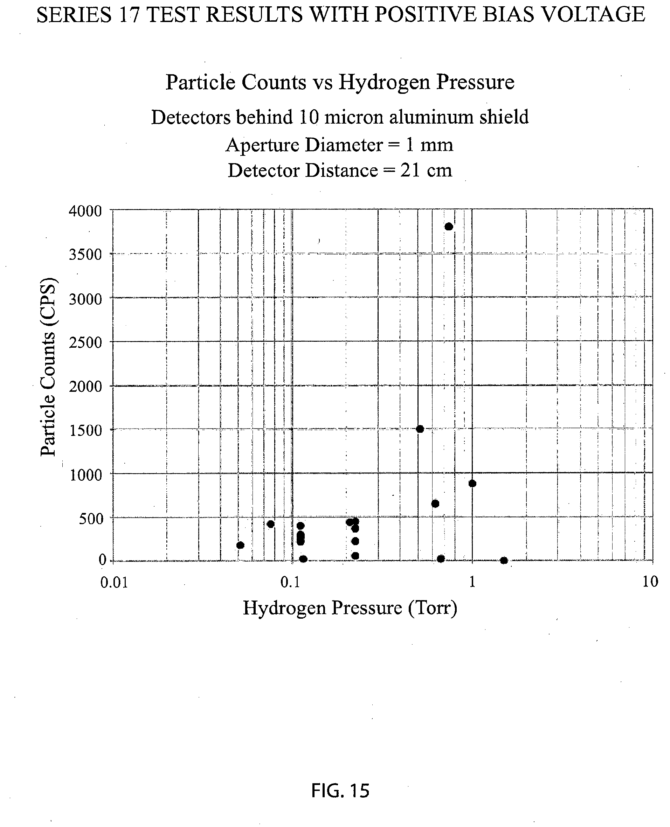

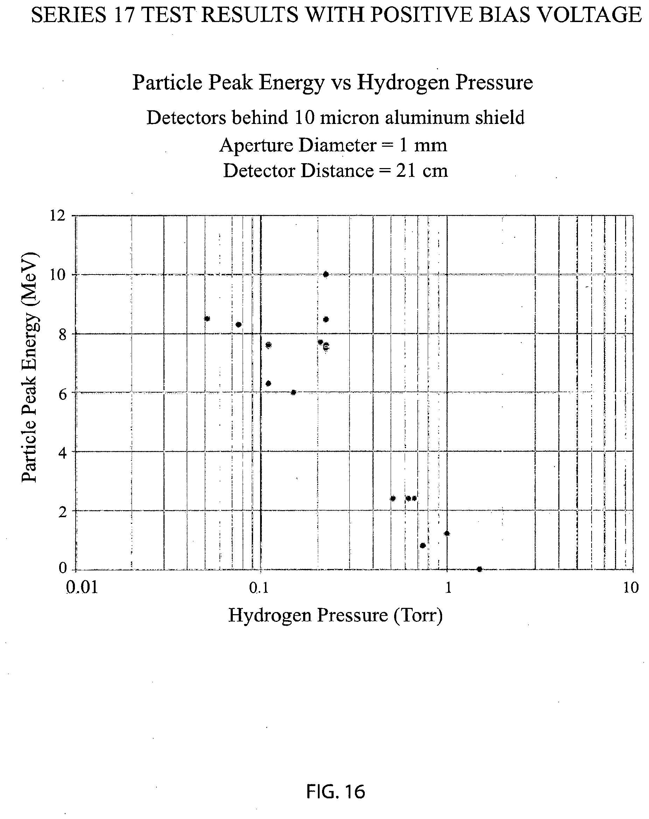

The particle counts measured by the p-i-n diode detectors in the series #17 tests are graphed as a function of hydrogen pressure in FIG. 15. The particle counts in tests 10 and 16 that do not use a 1 mm aperture are reduced to provide equivalent particle counts. The particle peak energies in the series #17 tests are graphed as a function of hydrogen pressure in FIG. 16.

When a new lithium target was used in series #17 tests with positive bias voltage, the target surfaces rapidly developed a grey-black coating believed to be lithium hydride. The increasing thickness of the grey-black coating during the tests may have inhibited lithium sputtering, reduced proton-lithium plasma generation, and resulted in the observed decrease in particle counts.

Test 15 used a dynamic vacuum mode in which the vacuum roughing pump and hydrogen gas input were balanced to produce a constant vacuum pressure. The other tests used a static vacuum mode in which the vacuum roughing pump and the hydrogen gas input were turned off.

The series #17 test data suggests that fusion may be achieved using low energy proton-lithium plasma created and maintained by hydrogen gas and a lithium source biased with a positive voltage within a reaction chamber. The large bias current fluctuations believed to result from arcing between target regions and the development of a grey-black coating on the lithium source believed to be lithium hydride suggest that alternating negative and positive bias voltages may provide a more productive sputtering environment for proton-lithium fusion. See for example: D.C. Carter et al, "Effective control for reactive sputtering processes", Vacuum Technology & Coating, April 2006.

## LITHIUM SPUTTERING EXPERIMENTAL TEST RESULTS I

## ALTERNATING BIAS VOLTAGE (Series 18)

In experimental series #18, alternating negative and positive bias voltages were applied to the lithium source. A B&K Precision function generator provided the frequency and waveform for the alternating bias voltages. A Kepco Bi-Polar DC voltage source amplified the alternating bias voltages and allowed a maximum frequency of 1900 Hz. The DC voltage source was capable of $\pm1000$ DC volts and allowed currents up to $\pm40$ mA to be produced. The function generator controlled the output voltage of the DC voltage source and the bias voltage waveform and amplitude were observed on an oscilloscope.

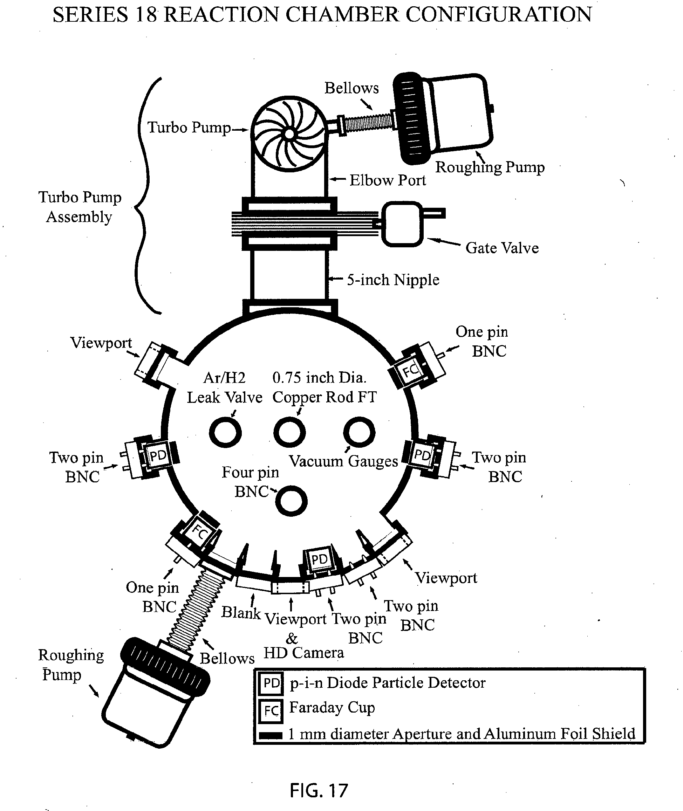

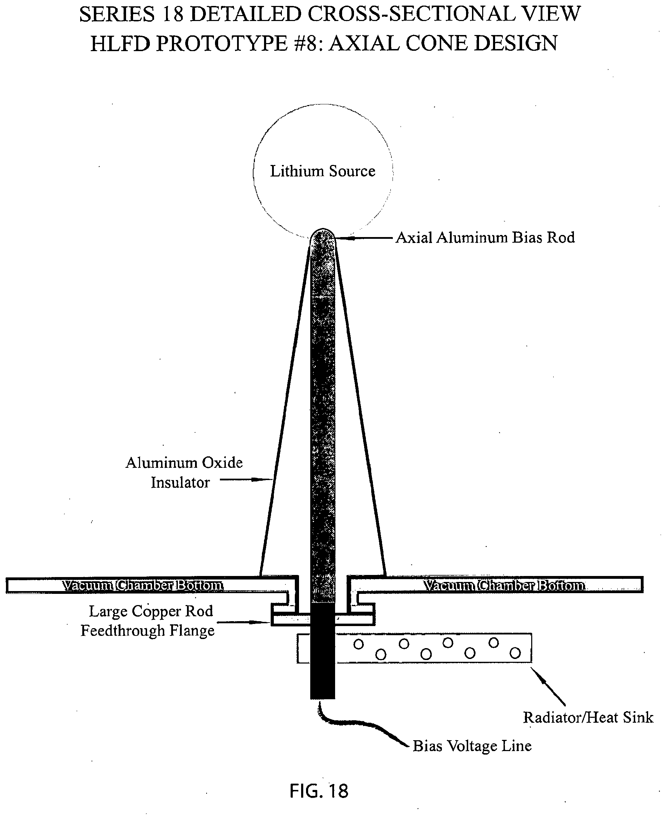

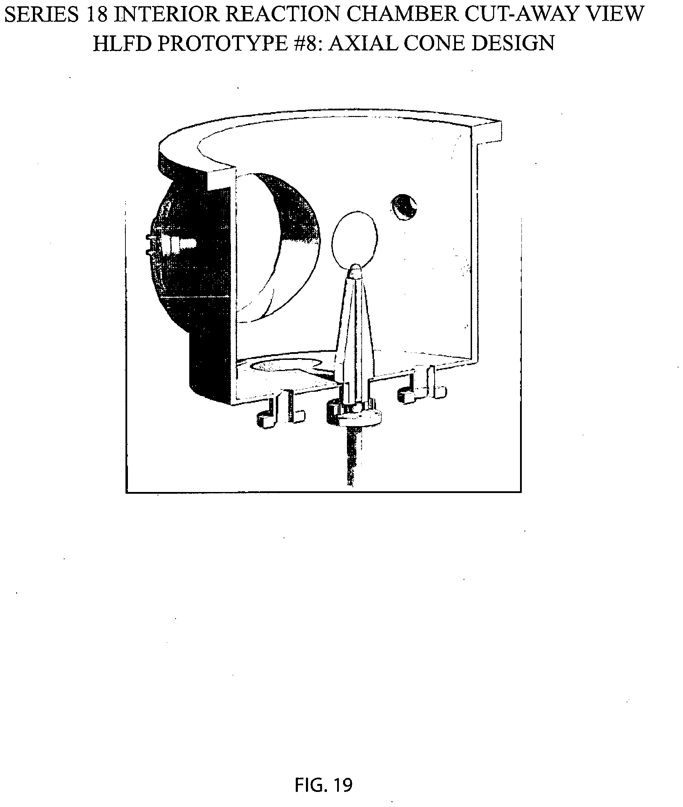

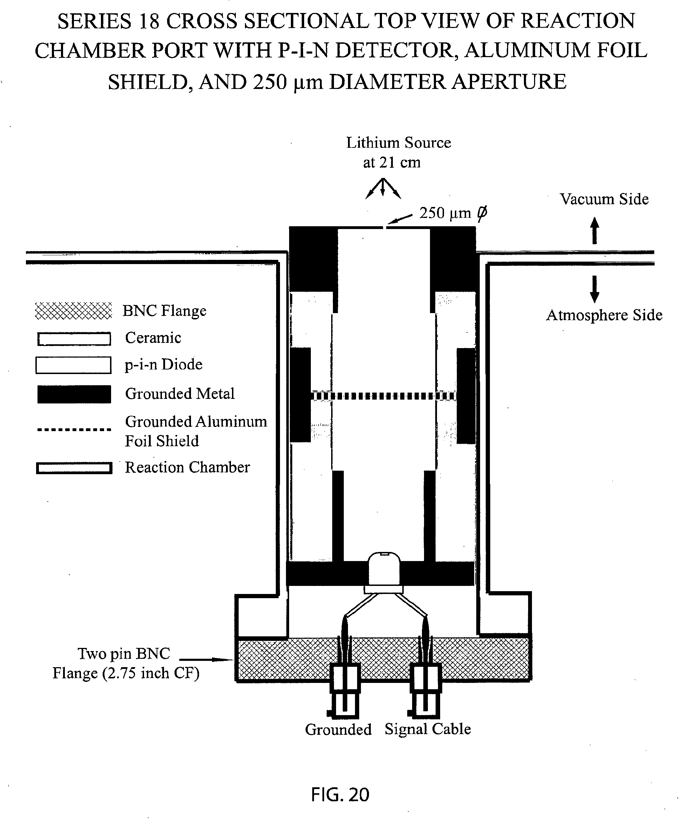

A detailed top view of the test equipment and reaction chamber configuration in series #18 is shown in FIG. 17; the conical support and lithium target in HLFD prototype #8 are portrayed in FIG. 18; and a cut-away view of the reaction chamber configuration is shown in FIG. 19. A cross sectional top view of a reaction chamber port containing a 250 $\mu$m diameter aperture, an aluminum foil shield, and a p-i-n diode particle detector configured with alumina ceramic to create a shielded cylindrical detector holder are shown in FIG. 20. The support in HLFD prototype #8 is composed of aluminum and aluminum oxide and provides the geometry and elemental composition to enable high efficiency proton-lithium fusion as well as the desired electrical and thermal conductivity.

Particle detector ports at a distance of 21 cm surrounded the lithium source supported by a conical HLFD prototype #8. Three particle detectors were used. Two detectors as shown in FIG. 20 were positioned behind 1 mm diameter apertures to reduce particle saturation. The aperture diameter was later reduced to 250 $\mu$m. The two detectors also had aluminum foil shields with thicknesses of 10 $\mu$m behind the apertures to prevent the measurement of low energy particles such as protons and were opposite each other on different sides ("front" and "back") of the lithium source. The third detector was a control and did not have any aluminum foil shielding or aperture to reduce count saturation.

The vacuum environment in series #18 contained a dilute mixture of argon gas and hydrogen gas. Both static and dynamic vacuum modes were tested. The static vacuum mode involved isolating the roughing pumps and preventing gas flow into the reaction chamber. The dynamic vacuum mode involved balancing the flow of argon gas and hydrogen gas into the reaction chamber with the roughing pumps continuously removing the gas mixture.

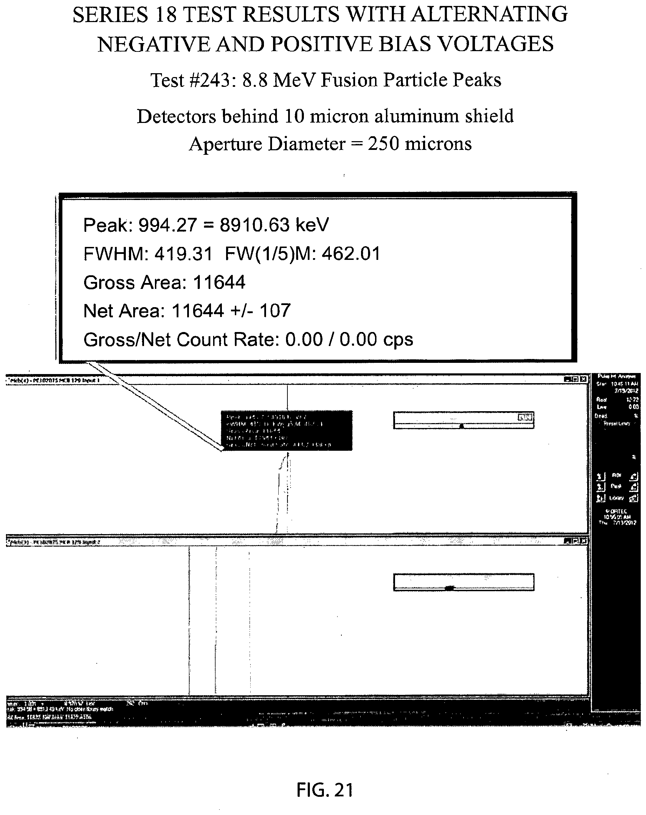

A total of 407 fusion tests were performed in series #18 using alternating negative and positive bias voltages applied to the lithium source at varying but controlled frequencies, waveforms, duty cycles, and voltage ranges. Duty cycle is defined as the percentages of the time that the voltage is negative and positive. Large particle counts were achieved. A screen shot of the particle peaks from test 243 is displayed in FIG. 21 and the series #18 test results are summarized in FIGS. 22 - 24.

The detector dead time was usually very large (> 60%) during the series #18 tests and as a result errors may be present when calculating the counts per second (CPS) using a dead time correction. Therefore it is believed that the real CPS in a particle peak may be calculated by dividing the total net counts under the particle peak by the detector live time. See for example: Gledcke, D., "Simply Managing Errors in Gamma-Ray Spectrometry", ORTEC Application Note AN63. The real CPS may then be used to calculate the output power. A smaller aperture diameter in future tests may still further restrict particle counts and achieve smaller detector dead times.

The particle count versus pressure data graphed in FIG. 22 are consistent with that of series #17 in that a lower pressure enabled more particles to be measured. The vacuum pressures during series #18 varied between 0.01 Torr and 2 Torr, with the largest particle counts obtained at vacuum pressures around 0.1 Torr. The p-i-n diode particle detectors are believed to function at pressures up to 1 Torr because calibration procedures with 5.486 MeV alpha particles (helium ions) from Americium were also performed at this pressure without issue.

The bias voltage frequency range that produced the largest particle counts was between 800 Hz and 1400 Hz as shown in FIG. 23. The particle count versus positive bias voltage data graphed in FIG. 24 confirms that fusion may be achieved using low energy proton-lithium plasma.

While large particle counts were consistently produced in tests that involved alternating negative and positive bias voltages, 20 fusion tests with the largest particle counts per second (CPS) are summarized in the following table. In the tests, the static vacuum pressure was between 0.015 Torr and 0.2 Torr, the aperture diameter was 250 $\mu$m, and the p-i-n diode detector distance was 21 cm.

SERIES #18 FUSION TESTS WITH LARGEST PARTICLE CPS

| Test # | + Bias Voltage (volts) | - Bias Voltage (volts) | + Duty Cycle (%) | Bias Frequency (Hz) | Real CPS | Time Duration (sec) |
|---|---|---|---|---|---|---|
| 243 | 1000 | 1000 | 50 | 1140 | 615800 | 13.7 |
| 348 | 1000 | 1000 | 50 | 1416 | 502388 | 46.4 |
| 359 | 800 | 1000 | 40 | 1235 | 491443 | 55.9 |
| 360 | 800 | 1000 | 40 | 1235 | 465609 | 102.4 |
| 347 | 1000 | 1000 | 50 | 1416 | 444175 | 12.4 |
| 357 | 800 | 1000 | 40 | 1235 | 404065 | 66.0 |
| 254 | 1000 | 1000 | 50 | 789 | 357275 | 18.1 |
| 356 | 800 | 1000 | 40 | 1234 | 304450 | 178.8 |
| 355 | 800 | 1000 | 40 | 1235 | 300623 | 164.4 |
| 354 | 800 | 1000 | 40 | 1235 | 277370 | 113.4 |
| 342 | 1000 | 1000 | 45 | 1416 | 275800 | 19.8 |
| 340 | 1000 | 1000 | 45 | 1416 | 169864 | 38.5 |
| 268 | 1000 | 1000 | 50 | 905 | 139610 | 71.0 |
| 361 | 800 | 1000 | 40 | 1235 | 137418 | 49.0 |
| 338 | 1000 | 1000 | 45 | 1416 | 81252 | 63.5 |
| 248 | 1000 | 1000 | 50 | 968 | 68280 | 126.7 |
| 352 | 800 | 1000 | 40 | 1235 | 63947 | 311.2 |
| 351 | 800 | 1000 | 40 | 1237 | 61705 | 282.5 |
| 235$_B$ | 1000 | 1000 | 50 | 1054 | 36281 | 17.5 |

(continued)

| Test # | + Bias Voltage (volts) | - Bias Voltage (volts) | + Duty Cycle (%) | Bias Frequency (Hz) | Real CPS | Time Duration (sec) |
|---|---|---|---|---|---|---|
| $404_B$ | 1000 | 1000 | 50 | 1886 | 16137 | 10.7 |
| $\#_B$-Back | | | | | | |

Detector

It may be possible to use the lithium hydride instead of hydrogen gas in the reaction chamber by sputtering lithium hydride from the lithium source with argon plasma. When lithium hydride sputtering takes place, the lithium and hydrogen ions disassociate. This method of introducing the reactants into the plasma provides a lithium-hydrogen ion ratio of one.

A comparison between the particle detector results in series #17 and series #18 indicates that an alternating negative and positive bias voltages with argon gas present in the reaction chamber to sputter lithium and hydrogen ions from the lithium source enables large particle counts in the p-i-n diode detectors.

**LITHIUM SPUTTERING EXPERIMENTAL TEST RESULTS** II

**ALTERNATING BIAS VOLTAGE (Series 19)**

Experimental series #19 attempted to reproduce the series #18 test results and to explore options for increasing fusion efficiency. Alternating negative and positive bias voltages were applied to a lithium source inside a reaction chamber containing argon gas. The lithium source consisted of a metallic lithium target thinly coated with lithium hydride and was supported by the conical target support of HLFD prototype #8. The negative bias voltage enabled electron emission from the target, ignited argon ion plasma, accelerated argon ions towards the target surface, and resulted in lithium hydride sputtering. The positive bias voltage accelerated lithium ions and protons away from the target, generated proton-lithium fusion, and produced helium ion fusion byproducts.

A total of 114 fusion tests were performed using alternating negative and positive bias voltages applied to the lithium source at a specific frequency and waveform. Preliminary tests prior to the main fusion tests indicated that a square waveform produced on average the largest particle counts. Positive voltages over 250 volts produced large particle counts.

A detailed top view of the test equipment within the reaction chamber in series #19 is shown in FIG. 25. A screen shot showing the particle counts for test 112 is displayed in FIG. 26 and the series #19 test results are summarized in FIGS. 27 - 29.

The real CPS measured by the particle detectors was determined by dividing the total net count of particles under a particle peak area by the live time of the detector. The use of 25 $\mu$m diameter apertures in the particle detectors in series #19 reduced detector dead time and improved detector live time compared to series #18.

The particle count versus argon pressure data graphed in FIG. 27 are consistent with that of series #17 - 18 in that a lower pressure enabled more particles to be measured. The vacuum pressure during series #19 varied between 0.012 Torr and 0.6 Torr, with the largest particle counts obtained at vacuum pressures below 0.02 Torr.

The particle count data graphed in FIG. 28 show a steady increase in the particle counts as the bias voltage pulse frequency increases. The pulse frequency that produced the largest particle counts was about 1400 Hz.

The particle count data graphed in FIG. 29 are consistent with the prediction of the authors' gravity theory that high-efficiency proton-lithium fusion may occur at a positive bias voltage between 50 and about 5000 volts as suggested by the logarithmic singularity lines shown in FIG. 1.

As in series #18, the particle peaks appeared to shift in the energy spectrum as a function of bias voltage frequency. It was later shown in series #22 that the shifting energy peaks can be caused by bias voltage permeation into the particle detector assembly when not properly grounded. The assembly consisted of a grounded 25 $\mu$m diameter tungsten aperture and mount, a grounded aluminized Mylar shield, and the particle detector.

While large particle counts in the p-i-n diode particle detectors were consistently produced, 30 fusion tests with the largest particle counts per second (CPS) are summarized in the following table. In the tests, the static argon pressure was 0.015 Torr, the aperture diameter was 25 $\mu$m, and the p-i-n diode detector distance was 21 cm.

SERIES #19 FUSION TESTS WITH LARGEST PARTICLE CPS

| Test # | + Bias Voltage (volts) | - Bias Voltage (volts) | + Duty Cycle (%) | Bias Frequency (Hz) | Real CPS | Time Duration (sec) |
|---|---|---|---|---|---|---|
| 110 | 1000 | 1000 | 10 | 1398 | 16163 | 15.70 |
| 113 | 1000 | 1000 | 10 | 1457 | 15419 | 10.98 |
| 109 | 1000 | 1000 | 10 | 1398 | 14949 | 11.10 |
| 112 | 1000 | 1000 | 10 | 1457 | 14828 | 16.82 |
| 106 | 800 | 1000 | 10 | 1400 | 14227 | 10.74 |
| 108 | 900 | 1000 | 10 | 1397 | 12676 | 9.96 |
| 89$_F$ | 500 | 1000 | 25 | 1295 | 12585 | 5.20 |
| 107 | 850 | 1000 | 10 | 1398 | 12305 | 9.96 |
| 103 | 300 | 1000 | 10 | 828 | 12288 | 25.16 |
| 104 | 500 | 1000 | 10 | 1220 | 12287 | 9.94 |
| 92 | 500 | 1000 | 10 | 1281 | 11655 | 19.44 |
| 90$_F$ | 500 | 1000 | 10 | 1274 | 11551 | 58.70 |
| 91 | 500 | 1000 | 10 | 1282 | 11544 | 9.70 |
| 93 | 400 | 1000 | 10 | 1282 | 11313 | 33.70 |
| 105 | 500 | 1000 | 10 | 1401 | 10873 | 48.40 |
| 100 | 400 | 1000 | 10 | 1048 | 9371 | 9.50 |
| 99 | 450 | 1000 | 10 | 1048 | 8953 | 8.94 |
| 95 | 500 | 1000 | 10 | 939 | 8596 | 8.66 |
| 94 | 500 | 1000 | 10 | 1281 | 8580 | 81.22 |
| 111 | 1000 | 1000 | 10 | 1531 | 8473 | 17.56 |
| 82$_F$ | 250 | 1000 | 50 | 1294 | 7564 | 0.96 |
| 101 | 400 | 1000 | 10 | 963 | 6916 | 14.06 |
| 86 | 400 | 1000 | 50 | 1302 | 6516 | 5.36 |
| 84 | 400 | 1000 | 50 | 1301 | 6198 | 8.54 |
| 82 | 250 | 1000 | 50 | 1302 | 6161 | 16.18 |
| 98 | 450 | 1000 | 10 | 1048 | 5756 | 5.46 |
| 97 | 450 | 1000 | 10 | 1048 | 5480 | 17.32 |
| 83* | 250 | 1000 | 50 | 1294 | 5467 | 8.84 |
| 102$_F$ | 250 | 1000 | 10 | 829 | 4075 | 5.66 |
| 96 | 450 | 1000 | 10 | 939 | 3747 | 3.90 |
| #$_F$ -Front Detector, #* - Sine Waveform | | | | | | |

## LITHIUM SPUTTERING EXPERIMENTAL TEST RESULTS III

## ALTERNATING BIAS VOLTAGE (Series 20)

Experimental series #20 attempted to reproduce the results obtained in series #19. The reaction chamber and a detailed top view of the reaction chamber configuration for series #20 are shown in FIGS. 30 - 31. The reaction chamber is a grounded vertical stainless steel cylinder 40 cm diameter by 39 cm deep with eleven horizontal 2.75 inch Conflat (CF) ports that are generally aligned with the center of the reaction chamber. A 10 inch CF horizontal port supports a turbo pump assembly attachment. There are four vertical 2.75 inch CF ports on the chamber bottom.

Because HLFD prototype #8 was not able to maintain argon plasma below 0.01 Torr and is believed to emit large electron currents, a new HLFD prototype #9 contains a ring magnet underneath the lithium target. The magnetic field traps electrons and low energy ions near the exposed lithium target and enables lower vacuum pressures to be explored.

A detailed cross-sectional view of HLFD prototype #9 is shown in FIG. 32 and includes a 3 inch diameter x 0.25 inch thick copper cathode disk positioned at the end of a 0.75 inch diameter by 6 inch long axial copper bias rod. A ceramic washer measuring 3 inch outer diameter by 1.25 inch inner diameter by 0.25 inch thickness separates the copper cathode disk and a large ring magnet measuring 3 inch outer diameter by 1.75 inch inner diameter by 1 inch thickness. The ceramic is composed of aluminum oxide silicate and encases and isolates the copper components and magnet from the reaction chamber while providing structural support.

The copper bias rod screws directly into the water-cooled 0.75 inch diameter copper rod feedthrough flange used in series #19. The direct connection allows HLFD prototype #9 to be mounted at horizontal or vertical, provides electrical connection to the exterior without wires, and allows lithium target cooling by heat conduction between the copper cathode disk and an exterior heat sink. A grounded aluminum metal exterior contains the ceramic, copper component, and magnet and prevents charge buildup on the ceramic surfaces. When a target is installed, no copper components are exposed to the plasma. In FIG. 32 dashed grey lines illustrate the magnetic field lines created by HLFD prototype #9.

When a negative voltage is applied to the copper cathode disk and lithium target, the electrons emitted from the target ignite the argon plasma and produce a visible "glow discharge". The magnetic field generated by the ring magnet traps any emitted or liberated electrons and forces them to travel in colloidal paths along the magnetic field lines back towards the lithium target. The extended length of electron travel allows greater ionization of argon gas near the lithium hydride surface.

The increased ionization and duration of argon ionization creates conditions for the efficient acceleration of large argon ion currents that impinge the lithium target surface and sputter protons and lithium into the plasma. The increased ionization near the target surface also increases the time the protons and lithium remain ions as they travel away from the lithium hydride. The target surface that makes contact with the copper cathode disk is not exposed to the plasma and is directly cooled by heat conduction through the copper cathode disk. In addition the use of only one surface of the lithium target permits the target to be turned over if contamination occurs.

To adjust the vacuum pressure, a roughing pump attached to the reaction chamber operates between 0.01 Torr and 760 Torr, with a turbo pump assembly extending the vacuum pressure range down to $1.0 \times 10^{-5}$ Torr. Two gate valves on the reaction chamber may be shut to create a static (closed) environment inside the chamber at a specific pressure. The static vacuum pressure may be increased by leaking gas into the chamber or decreased by pumping out gas. A stable dynamic pressure balances the flow of the sputtering/reactant gas in and out of the reaction chamber at a desired pressure.

A Pirani pressure gauge and electronic controller are used to measure pressure and provides continuous pressure readings from $1.0 \times 10^{-5}$ Torr to 760 Torr. The controller is connected to the Pirani gauge at the bottom of the reaction chamber by a 25' RS323 (9-pin) cable and the digital display of the controller is recorded by a video camera.

A B&K Precision $\pm 10$ volt signal generator produces an alternating positive and negative DC voltage in a square (as well as sine and triangle) waveform, an amplitude up to $\pm 10$ volts, and a frequency up to 1900 Hz that is input to the front control panel of the Kepco Bipolar $\pm 1000$ DC voltage power supply. The bias voltage signal is then amplified through the DC power supply connected to HLFD prototype #9 by an 8 awg power wire connected to the exterior section of the copper rod feedthrough flange. The maximum voltage of the DC voltage source is limited to $\pm 1000$ volts and the maximum current is limited to $\pm 40$ mA.

To determine the input power during fusion tests, two oscilloscopes are used to measure the real-time voltage and current generated by the Kepco power supply. The Kepco power supply includes a rear panel interface where pin connections provide the ability to measure or operate certain functions by small $\pm 10$ volt signals. The two pins corresponding to real-time voltage and current are connected to the oscilloscopes. For example, a -10 volt signal on the voltage pin corresponds to a voltage of -1000 volts, while a +10 volt signal on the current pin corresponds to a current of +40 mA. Displays of voltage, current, and frequency are recorded by a HD video camera.

As shown in FIG. 33, the detector assembly includes a grounded 25 $\mu$m diameter tungsten aperture and mount, a grounded aluminized Mylar shield, and an ORTEC ruggedized silicon surface barrier particle detector. The detector assembly prevents photons and low energy particles such as protons, lithium ions, and argon ions from being counted in the particle detector.

The tungsten disk is 25 $\mu$m thick and is mounted on a 2.5 cm outer diameter by 0.6 cm inner diameter by 0.3 cm thick aluminum ring mount. The aperture and ring mount are positioned in the reaction chamber by a steel port mount designed to align the 25 μm aperture with the particle detector surface. Even though the tungsten and steel components are grounded, electrons from the reaction chamber may pass through the aperture and secondary electrons may be emitted from the aperture and mount. The stopping distance of 8.6 MeV helium ions in tungsten is 16.7 μm.

The aluminum coating on the Mylar shield surface is 0.1 μm thick. The insulating properties of the 12 μm thick Mylar layer on the back of the aluminum prevent secondary electron emissions caused by energetic ion collisions.

The ORTEC ruggedized silicon surface barrier particle detector can operate at a vacuum pressure between $2 \times 10^{-9}$ Torr and 1 Torr. The thin aluminum layer on the front surface protects the silicon from various vacuum environments and absorbs photons emitted from the glow discharge plasma.

The particle detection system is comprised of ORTEC components and includes the ruggedized silicon surface barrier detector, a 142 Pre-Amplifier, a 459 Detector Bias Supply, a 572 Amplifier, and an A$^{spec}$ 927 Multichannel Analyzer (MCA). The block diagram displayed in FIG. 34 shows the particle detection system setup.

The ORTEC ruggedized particle detector is used to calibrate the A$^{spec}$ 927 MCA with an Americium source emitting 5.486 MeV alpha particles (helium ions). The Americium source is positioned on the steel port mount prior to installation of the aperture and Mylar shield and the vacuum pressure is reduced to $1.0 \times 10^{-2}$ Torr. After calibration is complete, the tungsten aperture and Mylar shield are installed.

The argon pressure in the reaction chamber is initially set to $1.0 \times 10^{-2}$ Torr in a dynamic vacuum mode. Argon sputtering of lithium or lithium hydride occurs during the negative bias voltage interval and fusion occurs during the positive bias voltage interval. The resulting helium ions travel to the particle detectors at an average distance of 20 cm.

During each test the vacuum pressure, vacuum mode, frequency, positive bias voltage, negative bias voltage, positive bias current, negative bias current, particle detector CPS, net area counts, real time, live time, dead time, and target disposition are recorded to perform real time data analysis during the fusion tests. Each measurement device is recorded by a video camera.

A UGC computer and digital video cameras record audio, video, and component data displays for the fusion tests. A Sony HD video camera monitors and records the activities and audio of the entire lab room during fusion tests. A HD video camera records the displays of the oscilloscopes, function generator, and pressure gauge in order to record the frequency, duty cycle, voltage, current, and reaction chamber vacuum pressure. An iPod camera is networked wirelessly and serves to record the interior chamber plasma.

A computer screen image showing the detector software configuration, magnetron video feed, and pressure display is shown in FIG. 35 and the series #20 test results are summarized in FIGS. 36 - 39.

The particle count versus argon-hydrogen pressure data graphed in FIG. 36 are consistent with that of series #18 - 19 in that a pressure range between 0.01 Torr and 0.1 Torr enabled proton-lithium-argon plasma and resulted in large CPS values. The particle count versus pulse frequency data graphed in FIG. 37 are consistent with that of series #18 - 19 and show the largest particle counts occurring between 800 Hz and 1400 Hz. The particle count versus positive bias voltage data graphed in FIG. 38 are consistent with the prediction of the authors' gravity theory that high-efficiency proton-lithium fusion may occur at a positive bias voltage between 50 and about 5000 volts. The output power versus input power data graphed in FIG. 39 shows that high values of the power ratio Q may be obtained at low input power.

To determine that only helium ions and not photons or low energy particles such as electrons, protons, lithium ions, or argon ions are measured in the particle detectors, negative bias voltages were applied to the target. Even though plasmas ignited in each test, no counts were measured in the particle detectors. These tests confirmed the results of series #16 where no counts were measured in 5 days of testing.

As in series #18 - 19, the particle peaks appeared to shift in the energy spectrum as a function of bias voltage frequency. It was later shown in series #22 that the shifting energy peaks can be caused by bias voltage permeation into the particle detector assembly. The assembly consisted of a grounded 25 μm diameter tungsten aperture and mount, a grounded aluminized Mylar shield, and the particle detector.

While large particle counts were consistently produced, 20 tests with the largest particle counts per second (CPS) are summarized in the following table. An aperture diameter of 25 μm and a detector distance of 20 cm were used in the tests.

SERIES #20 FUSION TESTS WITH LARGEST PARTICLE CPS

| Test # | + Bias Voltage (volts) | - Bias Voltage (volts) | + Duty Cycle (%) | + Input Current (mA) | - Input Current (mA) | Input Power (watts) | Bias Freq. (Hz) | Real CPS | Time Duration (sec) |
|---|---|---|---|---|---|---|---|---|---|
| 25 | 300 | -300 | 10 | 1.60 | -1.28 | 0.39 | 1400 | 134763 | 74 |
| 24 | 200 | -200 | 10 | 0.96 | -0.96 | 0.19 | 800 | 119497 | 77 |
| 26 | 300 | -300 | 10 | 1.44 | -1.12 | 0.35 | 1200 | 113206 | 69 |

(continued)

| Test # | + Bias Voltage (volts) | - Bias Voltage (volts) | + Duty Cycle (%) | + Input Current (mA) | - Input Current (mA) | Input Power (watts) | Bias Freq. (Hz) | Real CPS | Time Duration (sec) |
|---|---|---|---|---|---|---|---|---|---|
| 18 | 500 | -500 | 10 | 2.56 | -1.76 | 0.92 | 1400 | 86492 | 70 |
| 21 | 500 | -500 | 10 | 2.72 | -1.76 | 0.93 | 800 | 84402 | 64 |
| 27 | 1000 | -1000 | 10 | 6.40 | -3.52 | 3.81 | 1900 | 74283 | 72 |
| 7 | 1000 | -1000 | 10 | 6.00 | -4.00 | 4.20 | 610 | 66837 | 81 |
| 6 | 1000 | -1000 | 10 | 6.08 | -4.48 | 4.64 | 830 | 62800 | 96 |
| 5 | 1000 | -1000 | 10 | 7.20 | -3.20 | 3.60 | 1000 | 60167 | 80 |
| 19 | 500 | -500 | 10 | 2.56 | -1.76 | 0.92 | 1200 | 55585 | 69 |
| 22 | 300 | -300 | 10 | 1.44 | -1.28 | 0.39 | 800 | 55484 | 65 |
| 14 | 1000 | -1000 | 50 | 6.24 | -4.48 | 5.36 | 1800 | 52332 | 62 |
| 23 | 230 | -230 | 10 | 1.28 | -0.96 | 0.23 | 800 | 52014 | 59 |
| 17 | 500 | -500 | 10 | 2.56 | -1.76 | 0.92 | 1600 | 50633 | 83 |
| 33 | 500 | -500 | 10 | 2.56 | -1.76 | 0.92 | 1600 | 50506 | 96 |
| 36 | 500 | -500 | 10 | 2.72 | -1.76 | 0.93 | 800 | 44305 | 60 |
| 34 | 500 | -500 | 10 | 2.72 | -1.92 | 1.00 | 1200 | 42180 | 61 |
| 16 | 1000 | -500 | 10 | 4.96 | -2.88 | 1.79 | 1600 | 40397 | 75 |
| 35 | 500 | -500 | 10 | 2.72 | -1.92 | 1.00 | 1000 | 39357 | 61 |
| 32 | 500 | -500 | 10 | 2.88 | -1.92 | 1.01 | 1400 | 37232 | 72 |

For example in test 25 the positive bias voltage was 300 volts, the negative bias voltage was -300 volts, the positive bias current was about 1.6 mA, the negative bias current was about -1.28 mA, the positive duty cycle was 10%, and the negative duty cycle was 90%. The input power in watts provided by the power supply is calculated to equal the bias voltage in volts times the bias current in amps averaged over a duty cycle:

$$\text{Input power in watts} = (\text{Positive duty cycle}) \times (\text{Positive bias voltage in volts}) \times$$

$$(\text{Positive bias current in amps}) +$$

$$(\text{Negative duty cycle}) \times (\text{Negative bias voltage in volts}) \times$$

$$(\text{Negative bias current in amps})$$

$$= (0.1) \times (300 \text{ V}) \times (1.6 \times 10^{-3} \text{ A}) + (0.9) \times (-300 \text{ V}) \times (-1.28 \times 10^{-3} \text{ A})$$

$$= 0.394 \text{ watts}$$

The experimental results in series #18 - 20 show that an alternating negative and positive bias voltage applied to a lithium source within a reaction chamber, an inert gas such as argon present within the reaction chamber to sputter lithium ions from the lithium source, and a proton source within the reaction chamber enable large particle counts to be measured.

**LITHIUM EVAPORATION EXPERIMENTAL TEST RESULTS I**

**ALTERNATING BIAS VOLTAGE (Series 21-22)**

Series #21 attempted to explain the energy peaks in the particle detectors in series #18 - 20 shifting as a function of alternating bias voltage frequency, and to test an alternative magnetron target holder design for improved lithium sputtering. Neither attempt was successful.

Series #22 showed that the energy peaks measured by the particle detectors shifting as a function of alternating bias voltage frequency can be caused by bias voltage permeation into the particle detector assembly. Setting back the particle detector location inside the reaction chamber port to create a Faraday cage around the detector and using a thicker grounded aluminized Mylar foil in front of the ORTEC particle detector eliminated the particle detector energy shifting.

Series #22 tested lithium evaporation using a high amperage DC power supply and resistive wire crucible as an alternative to lithium sputtering for generating lithium ions in the reaction chamber.

The series #22 reaction chamber configuration is illustrated in FIGS. 40 - 41 and includes the lithium evaporator, biased grid location, particle detector configuration, and Residual Gas Analyzer (RGA) location. The ORTEC ruggedized particle detector measured high-energy particles and the RGA recorded He-3 and He-4 atoms created within the reaction chamber. A total of 36 fusion tests were performed, with each test producing He-3 and He-4 partial pressures.

The screenshot in FIG. 42 shows the particle counts and He-4 partial pressure recorded during test 33. The particle detector software in the upper left corner displays two distinct particle peaks at 1.7 MeV and 2.3 MeV. The RGA software in the lower right corner displays the corresponding He-4 partial pressure recorded in helium leak test mode. The sharp increase in He-4 partial pressure occurred when the bias voltage was turned on. The RGA ionizer and the aperture between the reaction chamber and RGA chamber were aligned. Due to the location of the bias screen at the bottom of the cylindrical reaction chamber, the electric potential between the biased grid and the grounded lid allowed fusion to occur directly in front of the aperture. The increase in He-4 partial pressure indicates the creation of He-4 ions that do not implant into the reaction chamber walls. Ten tests with the largest He-4 partial pressures are summarized in the following table.

SERIES #22 FUSION TESTS WITH LARGEST HE-4 PARTIAL PRESSURES

| Test # | Total Pressure (Torr) | + Bias Voltage (volts) | - Bias Voltage (volts) | Bias Freq. (Hz) | + Duty Cycle (%) | He-4 Partial Pressure (Torr) | Reaction Chamber Power (watts) | Time Duration (sec) |
|---|---|---|---|---|---|---|---|---|
| 35 | 7.00E-3 | 1000 | 0 | 0 | 100 | 5.50E-8 | 274 | 360 |
| 33 | 7.20E-3 | 1000 | 0 | 0 | 100 | 5.20E-8 | 259 | 180 |
| 31 | 5.00E-2 | 1000 | 0 | 0 | 100 | 5.20E-8 | 259 | 40 |
| 1 | 1.00E-2 | 1000 | 1000 | 842 | 10 | 4.60E-8 | 229 | 360 |
| 32 | 9.18E-3 | 1000 | 0 | 0 | 100 | 4.20E-8 | 209 | 30 |
| 4 | 1.46E-2 | 700 | 700 | 878 | 10 | 3.00E-8 | 149 | 10 |
| 2 | 1.48E-2 | 1000 | 1000 | 840 | 10 | 2.80E-8 | 139 | 465 |
| 6 | 1.42E-2 | 1000 | 1000 | 657 | 10 | 2.80E-8 | 139 | 150 |
| 5 | 1.44E-2 | 700 | 700 | 880 | 25 | 2.70E-8 | 134 | 10 |
| 11 | 1.87E-2 | 1000 | 1000 | 861 | 10 | 2.50E-8 | 124 | 165 |

For example in test 33, the number N2 of He-4 atoms in the RGA chamber is calculated from the ideal gas law $N2 = P2 \times V2 / RT$, where the He-4 partial pressure $P2 = 5.20 \times 10^{-8}$ Torr, the RGA chamber volume $V2 = 3.73$ liters, the ideal gas constant $R = 62.364$ Torr-liters moles$^{-1}$ K$^{-1}$, and temperature $T = 300$ degrees K:

$$N2 = (5.20 \times 10^{-8} \text{ Torr}) \times (3.73 \text{ liters}) /$$

$$((62.364 \text{ Torr-liters moles}^{-1} \text{ K}^{-1}) \times (300 \text{ K}))$$

$$= 1.04 \times 10^{-11} \text{ moles} = 6.24 \times 10^{12} \text{ atoms}$$

The rated pumping speed of the RGA turbo pump S2rat = 80 liters/sec. The turbo pump mount can be approximated by a tube with inner diameter D = 1.35 inches and length L = 30 inches. With a conductance conversion factor for air to He of 2.64, the conductance $C \approx 2.64 \times 78.1 \, D^3/L = 16.91$ liters/sec. The effective pumping speed S2 is then given by 1/S2 = 1/S2rat + I/C and S2 $\approx$ 13.95 liters/sec.

The He-4 mass flow rate Q2 through the aperture into the RGA chamber is calculated to equal the RGA pumping speed S2 times the He-4 partial pressure P2:

$$Q2 = S2 \times P2$$

$$= (13.95 \text{ liters/sec}) \times (5.20 \times 10^{-8} \text{ Torr})$$

$$= 7.26 \times 10^{-7} \text{ Torr-liters/sec} \times (3.5352 \times 10^{19} \text{ (atoms/sec)} / \text{(Torr-liters/sec)})$$

$$= 2.56 \times 10^{13} \text{ atoms/sec}$$

Due to heat issues with the turbo pump and the inability to pump down to low vacuum pressures with the 500 liters/sec turbo pump, the rated pump speed S1rat for the reaction chamber was assumed to be equivalent to the rated roughing pump speed of 1.8 liters/sec. The roughing pump mount can be approximated by a tube with inner diameter D = 4.5 inches and length L = 12 inches. With a conductance conversion factor for air to He of 2.64, the conductance $C \approx 2.64 \times 78.1 \, D^3/L = 1565.71$ liters/sec. The effective pumping speed S1 is then given by 1/S1 = 1/S1rat + 1/C and S1 $\approx$ 1.79 liters/sec.

The diameter of the aperture between the reaction chamber and the RGA chamber is between 300 microns and 500 microns. A 500 micron diameter aperture with an area $A = 1.96 \times 10^{-3}$ cm$^2$ is used for power calculations. With a conductance conversion factor for air to He of 2.64, the conductance of the aperture $C \approx 2.64 \times 11.6 \, A = 0.060$ liters/sec.

Because the conductance C of the aperture is small, the He-4 partial pressure P1 in the reaction chamber is much greater than the partial pressure P2 in the RGA chamber, and may be calculated from $C \times (P1 - P2) = S2 \times P2$:

$$P1 = (7.26 \times 10^{-7} \text{ Torr-liters/sec}) / (0.060 \text{ liters/sec})$$

$$= 1.21 \times 10^{-5} \text{ Torr}$$

Because the mass flow rate Q2 into the RGA chamber is small, the He-4 mass flow rate Q1 into the reaction chamber is calculated to equal the reaction chamber pumping speed S1 times the He-4 partial pressure P1:

$$Q1 = S1 \times P1$$

$$= (1.79 \text{ liters/sec}) \times (1.21 \times 10^{-5} \text{ Torr})$$

$$= (2.17 \times 10^{-5} \text{ Torr-liters/sec}) \times (3.5352 \times 10^{19} \text{ (ions/sec)} / \text{(Torr-liters/sec)})$$

$$= 7.66 \times 10^{14} \text{ ions/sec}$$

The average output energy associated with each He-4 ion created is calculated to equal to the average kinetic energy of the fusion byproducts that were recorded by the particle detector:

$$\text{Average output fusion energy} = (1.7 \text{ MeV/ion} + 2.3 \text{ MeV/ion}) / 2$$

$$= 2.0 \text{ MeV/ion} = 3.204 \times 10^{-13} \text{ joules/ion}$$

The reaction chamber power from fusion is estimated to equal the number Q1 of He-4 ions created per second in the reaction chamber times the average fusion energy of each He-4 ion created.

$$\text{Reaction chamber fusion power} = Q1 \times (\text{Average output fusion energy})$$

$$= (7.66 \times 10^{14} \text{ ions/sec}) \times (3.204 \times 10^{-13} \text{ joules/ion})$$

$$= 245 \text{ watts}$$

The output power from the 36 evaporation tests performed in series #22 is graphed as a function of hydrogen pressure in FIG. 43.

## UNIFIED GRAVITY LABORATORY ESTABLISHED

Due to the positive experimental results in series #22, a UGC R&D laboratory was opened in Morgan Hill, CA to pursue further testing and development of a working prototype. The UGC owned experimental equipment was transferred from the Texas laboratory, and new equipment was purchased to replace the Texas laboratory equipment.

A spherical reaction chamber with an inner diameter of 43.2 cm and volume of 51.2 liters, a separate Residual Gas Analyzer (RGA) chamber with an inner diameter of 6 inches and volume of 4.81 liters, a turbo pump rated at 1000 liters/sec, and a roughing pump rated at 10.2 liters/sec were purchased. The reaction and RGA chambers have a combined volume of 56 liters when the gate valve is completely open. A photograph of the reaction chamber including the pumps and gas lines is shown in FIG. 44.

An evaporation system was purchased from Kurt J. Lesker that enabled heating a tantalum metal evaporation boat up to 1600 deg C. The evaporation boat was located on the bottom flange of the reaction chamber so that lithium vapor travelled upwards to intersect the proton beam or plasma.

A MicroVision 2 Residual Gas Analyzer (RGA) with a 100 amu range was purchased from MKS Spectra Products in order to provide the capability to measure He-3 and He-4 partial pressures with high resolution. The RGA was used with pressures at or below $5 \times 10^{-5}$ Torr for optimal measurement.

The roughing pump is capable of back pumping the turbo pump and roughing the reaction chamber simultaneously, thus allowing differential pumping of the RGA chamber volume. When operating the proton gun, the differential pumping technique was not used because the proton gun and RGA operate in the same vacuum pressure range between $10^{-7}$ Torr and $10^{-5}$ Torr.

The hydrogen gas line to the proton gun and reaction chamber has a flow that is adjustable by using an electronic mass flow controller with a flow range between 0.01 sccm and 90 sccm. The flow rate is constant and may be changed by a separate electronic control device. A manual gas line with a needle valve may also be used to input hydrogen into the chamber at a flow rate that is greater than 90 sccm. An argon gas line to the chamber does not have a mass flow controller and uses a needle valve to adjust the flow of argon gas into the chamber.

A bias voltage rod if used was mounted 20 cm above the bottom of the chamber. The bias rod was fabricated from a conventional 1-pin copper tube feedthrough flange and was modified with a copper extension rod encased in alumina ceramic. The metal surface area of the bias rod that was exposed to plasma was reduced to minimize current flow through the bias rod. This modification allowed larger bias voltages to be applied to protons in the plasma than were achieved in series #22.

The proton gun first used in series #13 was mounted at horizontal and produced a proton beam that intersected the center of the reaction chamber. The location of the proton gun nozzle was set back 17 cm from the center of the chamber to prevent lithium deposition on the extraction grid and nozzle.

Test data from the experiments was entered into two control station computers that recorded the data visually. Computer #1 recorded the RGA software display, particle detector software display, two pressure gauge displays, and either the bias voltage or the proton gun energy display. Computer #2 recorded the oscilloscope and function generator software display and the Faraday Cup current display. A time stamp for each computer was recorded to enable synchronizing the two computer display files.

A new ORTEC ruggedized particle detection system was purchased from AMETEK Inc. in order to measure high-energy particles. The particle detector system included two ORTEC ruggedized detectors (R-017-050-100), an ORTEC 142 Pre-Amplifier, an ORTEC 673 Amplifier, an ORTEC 710 Quad Bias Supply, and an ORTEC Aspec 927 Multichannel Analyzer (MCA) within a 4001A Bin Power Supply Rack. A block diagram of the detector system is shown in FIG. 45. The ORTEC Maestro detector software was operated on a dedicated slave laptop computer that was controlled over the LAN network by Computer #1.

The calibration of the MCA used a 500 $\mu$C polonium calibration source obtained from Images Scientific Instruments Inc. The polonium source emitted 5.30 MeV alpha particles and was produced on January 9, 2014.

The particle detector calibration assembly consisted of the polonium source attached onto the front of an adjustable iris stainless steel aperture that was set to a diameter of 200 microns. The iris aperture was then attached to the particle detector holder with Kapton tape. The distance from the Polonium source to the detector surface was 1 cm. The particle detector calibration assembly was placed into the reaction chamber backfilled with argon gas, the vacuum pressure was reduced to $10^{-5}$ Torr, and the detector bias voltage was slowly increased from zero to negative 100 volts.

A particle peak was immediately observed and had a consistent particle count of 356 CPS with 4% dead time. The gain was adjusted to maximize the measured energy spectrum. After calibration of both MCA inputs, the reaction chamber was again backfilled with argon gas and the polonium source was removed and placed in a lead box within a locked safe for storage between calibrations.

The particle detector assembly consisted of a new ORTEC ruggedized particle detector mounted within a grounded aluminum shell. A grounded stainless steel aperture disk with a diameter of 1 micron was positioned in front of the particle detector surface to reduce particle CPS. A 25 micron thick grounded aluminized Mylar foil was placed in front of the aperture to block low energy particles. The detector assembly was then wrapped in grounded aluminum foil to enclose the assembly within a Faraday cage. The particle detector assembly was then mounted on a linear motion feedthrough, allowing the distance between the assembly and the center of the reaction chamber to be varied between 4 cm and 24 cm. A side view cut-away diagram of the particle detector assembly is shown in FIG. 46.

## LITHIUM EVAPORATION EXPERIMENTAL TEST RESULTS II

### LOW PROTON GUN BEAM CURRENT (Series 23)

In series #23, the proton gun used a low beam current so that particle CPS resulted in a detector dead time close to 10%. The low beam current was achieved by reducing the hydrogen pressure in the reaction chamber to about $6 \times 10^{-6}$ Torr. An illustration of the series #23 reaction chamber configuration is shown in FIG. 47 and includes the proton gun, evaporation flange, RGA, and detector assembly attached to a linear motion feedthrough flange. A new ORTEC ruggedized particle detector was used in the particle detector assembly behind a 1 micron diameter aperture disk and a 25 micron thick aluminized Mylar foil. The detector assembly was positioned 4 cm from the center of the reaction chamber during test measurements.

A Faraday cup in line with the proton beam was used to verify that the beam current was at a low nA range. The lithium was then evaporated into the reaction chamber. The passage of the proton beam through the lithium vapor resulted in particle counts in the particle detector assembly.

The proton beam energy was varied between 200 eV and 5 keV. The particle counts, particle peak energy, and detector dead time were recorded. The following table shows the test data as a function of proton beam energy. The creation of high-energy particles as measured by the particle detector assembly suggests that proton-lithium fusion was occurring.

SERIES #23 FUSION TESTS WITH LOW PROTON BEAM CURRENT

| Proton Energy (eV) | Particle Counts (CPS) | Particle Peak Energy (MeV) | Dead Time (%) | Output Power (watts) | Power Ratio Q | Time Duration (sec) |
|---|---|---|---|---|---|---|
| 5000 | 20000 | 4.40 | 10 | 360 | 72 | 20 |
| 4000 | 21406 | 3.17 | 4 | 287 | 69 | 73 |
| 3000 | 9990 | 2.39 | 8 | 91 | 32 | 13 |
| 2000 | 5787 | 1.87 | 3 | 44 | 22 | 62 |
| 1800 | 8209 | 1.77 | 8 | 59 | 33 | 87 |

(continued)

| Proton Energy (eV) | Particle Counts (CPS) | Particle Peak Energy (MeV) | Dead Time (%) | Output Power (watts) | Power Ratio Q | Time Duration (sec) |
|---|---|---|---|---|---|---|
| 1600 | 8231 | 1.65 | 7 | 55 | 34 | 64 |
| 1400 | 5419 | 1.53 | 3 | 34 | 24 | 62 |
| 1200 | 6642 | 1.46 | 3 | 39 | 33 | 77 |
| 1000 | 6045 | 1.38 | 3 | 34 | 34 | 67 |
| 900 | 7484 | 1.24 | 8 | 38 | 42 | 76 |
| 800 | 11123 | 1.20 | 16 | 54 | 68 | 44 |
| 700 | 29260 | 1.27 | 2 | 152 | 217 | 55 |
| 600 | 38362 | 1.14 | 18 | 179 | 298 | 57 |
| 500 | 38381 | 1.12 | 18 | 176 | 352 | 10 |
| 400 | 33963 | 1.02 | 17 | 142 | 355 | 24 |
| 300 | 11841 | 0.74 | 8 | 35 | 119 | 20 |
| 250 | 20345 | 0.58 | 25 | 45 | 180 | 76 |
| 200 | 12125 | 0.45 | 3 | 22 | 111 | 17 |

The computer screen image shown in FIG. 48 was recorded during the 400 eV low proton beam current test when 33963 CPS was measured. The particle detector software display is located in the lower right of the image and shows the particle peak. The dialogue box at the top of the display shows the measured CPS and particle peak energy. The proton beam energy display is visible at the upper right of the screen next to the pressure gauge displays. A graph showing the particle counts versus proton energy in series #23 is shown in FIG. 49.

For example, to obtain the power ratio Q in the 400 eV low proton beam current test, the input power may be estimated to equal the proton beam voltage times the maximum proton gun beam current of 1 mA (Tectra Ion Etch Operating Manual):

$$\text{Input power} = 400 \text{ volts} \times 0.001 \text{ amps} = 0.4 \text{ watts.}$$

The output power of the 400 eV low proton beam current test may be estimated using solid angle calculations. The surface area of the fusion sphere is calculated using the particle detector distance of 4 cm:

$$\text{Fusion surface area} = 4 \times \pi \times \text{detector distance}^2 = 201.06 \text{ cm}^2$$

The detector surface area is calculated using a 1 micron aperture:

$$\text{Detector surface area} = \pi \times (\text{aperture diameter} / 2)^2 = 7.85 \times 10^{-9} \text{ cm}^2$$

The number of particles created per second is calculated to equal the measured CPS of 33963 times the fusion surface area divided by the detector surface area:

$$\text{Particles created} = 33963 \text{ CPS} \times 201.06 \text{ cm}^2 / 7.85 \times 10^{-9} \text{ cm}^2$$

$$= 8.69 \times 10^{14} \text{ particles/sec}$$

The output power is calculated to equal the number of particles created per second times an average particle energy of 1.02 MeV:

$$\text{Output power} = (8.69 \times 10^{14} \text{ particles/sec}) \times (1.02 \text{ MeV/particle})$$

$$= (8.86 \times 10^{14} \text{ MeV/sec}) \times (1.602 \times 10^{-13} \text{ joules/MeV})$$

$$= 142 \text{ watts}$$

The power ratio Q is calculated to equal the ratio of output power to input power and in the 400 eV low proton beam current test has the value:

$$\text{Power ratio } Q = (\text{Output power}) / (\text{Input power})$$

$$= (142 \text{ watts}) / (0.4 \text{ watts}) = 355$$

which is greater than the breakeven value of 1 and large compared to a value of $1.80 \times 10^{-6}$ obtained from Herb's experimental data. To enable a comparison with Herb's power ratio Q, the input power to run the vacuum pumps or sensors was not included in the determination of the power ratio Q.

## LITHIUM EVAPORATION EXPERIMENTAL TEST RESULTS III

## HIGH PROTON GUN BEAM CURRENT (Series 24)

In series #24, the proton gun created a current in the μA range. The high beam current was achieved by increasing the hydrogen pressure of the reaction chamber to about $10^{-5}$ Torr. An illustration of the series #24 reaction chamber configuration is shown in FIG. 47 and includes the proton gun, evaporation flange, RGA, and particle detector assembly on a linear motion feedthrough flange. A new ORTEC ruggedized particle detector was used in the particle detector assembly behind a 1 micron diameter aperture disk and a 25 micron thick aluminized Mylar foil. The detector assembly was positioned 4 cm from the center of the reaction chamber during test measurements.

During the high beam current tests, the RGA measured the partial pressures of masses between 2 and 9 amu. The RGA software display on the left side of FIG. 50 shows helium ion partial pressures around $10^{-12}$ Torr, indicating that both He-3 and He-4 ions were being created. A Faraday cup in line with the proton beam was used to verify that the proton beam current was within the μA range.

The proton beam energy was varied between 100 eV and 5 keV. The particle counts, particle peak energy, and detector dead time were recorded. The following table shows the test data as a function of proton beam energy. The creation of high-energy particles as measured by the particle detector assembly and the measurement of He-3 and He-4 partial pressures by the RGA indicates that proton-lithium fusion was occurring.

SERIES #24 FUSION TESTS WITH HIGH PROTON GUN BEAM CURRENT

| Proton Energy (eV) | Particle Counts (CPS) | Particle Peak Energy (MeV) | Dead Time (%) | Output Power (watts) | Power Ratio Q | Time Duration (sec) |
|---|---|---|---|---|---|---|
| 5000 | 20483 | 14.70 | 28 | 1234 | 247 | 362 |
| 4000 | 59676 | 13.40 | 16 | 3279 | 819 | 35 |
| 3000 | 34880 | 11.80 | 16 | 1687 | 562 | 69 |
| 2000 | 35451 | 10.12 | 16 | 1471 | 735 | 64 |
| 1800 | 34823 | 9.73 | 18 | 1389 | 771 | 15 |
| 1600 | 34659 | 9.31 | 16 | 1323 | 827 | 25 |
| 1400 | 34314 | 8.23 | 16 | 1158 | 827 | 26 |

(continued)

| Proton Energy (eV) | Particle Counts (CPS) | Particle Peak Energy (MeV) | Dead Time (%) | Output Power (watts) | Power Ratio Q | Time Duration (sec) |
|---|---|---|---|---|---|---|
| 1200 | 32483 | 6.82 | 16 | 908 | 757 | 19 |
| 1000 | 31550 | 5.38 | 14 | 696 | 696 | 60 |
| 900 | 30712 | 4.95 | 16 | 623 | 692 | 43 |
| 800 | 29963 | 4.46 | 16 | 548 | 685 | 67 |
| 700 | 29282 | 3.99 | 12 | 479 | 684 | 60 |
| 600 | 28710 | 3.45 | 12 | 406 | 677 | 61 |
| 500 | 28373 | 3.29 | 13 | 382 | 765 | 58 |
| 400 | 28083 | 3.18 | 12 | 365 | 912 | 60 |
| 300 | 27943 | 3.04 | 12 | 348 | 1161 | 32 |
| 250 | 27742 | 3.03 | 12 | 344 | 1378 | 69 |
| 200 | 27758 | 3.05 | 13 | 347 | 1736 | 60 |
| 100 | 27764 | 3.04 | 12 | 346 | 3461 | 66 |

The measured particle peak energies that exceed 8.6 MeV are believed to result from "double counting" that occurs when two or more helium ions are measured concurrently.

The computer screen image shown in FIG. 50 was recorded during the 400 eV high proton beam test when 28083 CPS was measured. The particle detector software display is located in the lower right of the image and shows the particle peak. The dialogue box at the top of the display shows the measured CPS and particle peak energy. The proton beam energy display is visible at the upper right of the screen next to the pressure gauge displays. A graph showing the particle counts versus proton energy in series #24 is shown in FIG. 51.

For example, to obtain the power ratio Q in the 400 eV high proton beam current test, the input power may be estimated to equal the proton beam voltage times the maximum proton gun beam current of 1 mA (Tectra Ion Etch Operating Manual):

$$\text{Input power} = 400 \text{ volts} \times 0.001 \text{ amps} = 0.4 \text{ watts}.$$

The output power of the 400 eV high proton beam current test may be estimated using solid angle calculations. The surface area of the fusion sphere is calculated using the particle detector distance of 4 cm:

$$\text{Fusion surface area} = 4 \times \pi \times \text{detector distance}^2 = 201.06 \text{ cm}^2$$

The detector surface area is calculated using a 1 micron diameter aperture:

$$\text{Detector surface area} = \pi \times (\text{aperture diameter} / 2)^2 = 7.85 \times 10^{-9} \text{ cm}^2$$

The number of particles created per second is calculated to equal the measured CPS of 28083 times the fusion surface area divided by the detector surface area:

$$\text{Particles created} = 28083 \text{ CPS} \times 201.06 \text{ cm}^2 / 7.85 \times 10^{-9} \text{ cm}^2$$

$$= 7.19 \times 10^{14} \text{ particles/sec}$$

The output power is calculated to equal the number of particles created per second times an average particle energy of 3.18 MeV:

$$\text{Output power} = (7.19 \times 10^{14} \text{ particles/sec}) \times (3.18 \text{ MeV/particle})$$

$$= (2.28 \times 10^{15} \text{ MeV/sec}) \times (1.602 \times 10^{-13} \text{ joules/MeV})$$

$$= 365 \text{ watts}$$

The power ratio Q is calculated to equal the ratio of output power to input power and in the 400 eV high proton beam current test has the value:

$$\text{Power ratio Q} = (\text{Output power}) / (\text{Input power})$$

$$= (365 \text{ watts}) / (0.4 \text{ watts}) = 912$$

which is greater than the breakeven value of 1 and large compared to a value of $1.80 \times 10^{-6}$ obtained from Herb's experimental data. To enable a comparison with Herb's power ratio Q, the input power to run the vacuum pumps or sensors was not included in the determination of the power ratio Q.

### LITHIUM EVAPORATION EXPERIMENTAL TEST RESULTS IV

### POSITIVE BIAS VOLTAGE (Series 25)

For series #25 a positive bias voltage was applied to a bias rod at the center of the reaction chamber. The bias voltage ignited the lithium vapor and hydrogen gas present in the reaction chamber to create proton-lithium plasma. The hydrogen pressure inside the chamber was adjusted to about $10^{-1}$ Torr and the vacuum pumps were disengaged, resulting in a static vacuum pressure that was stable throughout the duration of each test. An illustration of the reaction chamber configuration used for series #25 is shown in FIG. 52.

A differential pumping system was utilized that allowed the reaction chamber gasses to leak through a 300 micron diameter aperture into the RGA chamber while the RGA measured the partial pressures of masses between 2 amu through 12 amu. The flow of the reaction chamber gasses to the RGA chamber was about 0.02 liters/sec and did not significantly reduce the reaction chamber pressure during the test.

The current applied to the bias rod by the power supply was varied between 5 mA and 47 mA and the plasma ignited at about 400 volts. The bias voltages varied depending on the bias currents maintaining the plasma. The color of the plasma was orange-pink and was concentrated around the tip of the bias rod. The particle detector assembly illustrated in FIG. 46 was positioned 4 cm from the reaction chamber center and utilized a 1 micron diameter aperture and a 25 micron thick grounded aluminized Mylar foil to restrict particle CPS. A new ORTEC ruggedized particle detector was used in the particle detector assembly.

During the tests, the particle detector assembly measured a wide range of particle counts. The particle peak energies indicated that the particles were losing energy as they travelled through the 25 micron thick aluminized Mylar foil. A computer screen image of the RGA software display, particle detector software display, reaction chamber pressure, RGA chamber pressure, and power supply voltage and current display for test 5 is shown in FIG. 53.

In a number of tests, the RGA measured increased He-3 and He-4 partial pressures above $10^{-12}$ Torr and had distinct peaks. The He-4 partial pressure increased above the He-3 partial pressure and may be due to fusion occurring at a greater distances from the reaction chamber walls.

In the tests the positive bias voltage, particle counts, particle peak energy, and detector dead time in each test were recorded. The following table shows the test data from 10 tests as a function of positive bias voltage. The creation of high-energy particles as measured by the particle detector assembly and the measurement of He-3 and He-4 partial pressures by the RGA indicates that proton-lithium fusion was occurring.

SERIES #25 FUSION TESTS WITH POSITIVE BIAS VOLTAGE

| Test # | Bias Voltage (volts) | Bias Current (mA) | Particle Counts (CPS) | Particle Peak Energy (MeV) | Dead Time (%) | Output Power (watts) | Power Ratio Q | Time Duration (sec) |
|---|---|---|---|---|---|---|---|---|
| 5 | 410 | 10.6 | 2040590 | 1.93 | 88 | 16139 | 3710 | 32 |
| 1 | 403 | 39.1 | 305205 | 4.86 | 76 | 6083 | 386 | 54 |
| 9 | 395 | 47.2 | 1295845 | 9.30 | 84 | 49424 | 2651 | 28 |
| 3 | 374 | 47.1 | 245215 | 13.90 | 84 | 13978 | 793 | 62 |
| 4 | 359 | 24.1 | 1433344 | 11.00 | 92 | 64661 | 7473 | 38 |
| 6 | 331 | 17.3 | 894981 | 0.42 | 94 | 1541 | 269 | 32 |
| 7 | 328 | 15.9 | 895540 | 7.00 | 65 | 25709 | 4929 | 36 |
| 8 | 320 | 33.9 | 698788 | 8.83 | 88 | 25305 | 2332 | 27 |
| 2 | 285 | 38.9 | 479746 | 10.50 | 88 | 20658 | 1863 | 60 |
| 10 | 280 | 40.3 | 63530 | 0.344 | 68 | 89 | 7 | 30 |

For example, to obtain the power ratio Q in test 5, the input power may be calculated using the recorded bias voltage and current values:

$$\text{Input power} = 410 \text{ volts} \times 0.0106 \text{ amps} = 4.35 \text{ watts.}$$

The output power of the positive bias voltage test may be obtained from solid angle calculations. The surface area of the fusion sphere is calculated using the particle detector distance of 4 cm:

$$\text{Fusion surface area} = 4 \times \pi \times \text{detector distance}^2 = 201.06 \text{ cm}^2$$

The detector surface area is calculated using a 1 micron diameter aperture:

$$\text{Detector surface area} = \pi \times (\text{aperture diameter} / 2)^2 = 7.85 \times 10^{-9} \text{ cm}^2$$

The number of particles created per second is calculated to equal the measured CPS of 2040590 times the fusion surface area divided by the detector surface area:

$$\text{Particles created} = 2040590 \text{ CPS} \times 201.06 \text{ cm}^2 / 7.85 \times 10^{-9} \text{ cm}^2$$

$$= 5.22 \times 10^{16} \text{ particles/sec}$$

The output power is calculated to equal the number of particles created per second times the average particle energy of 1.93 MeV:

$$\text{Output power} = (5.22{\times}10^{16}\ \text{particles/sec}) \times (1.93\ \text{MeV/particle})$$

$$= (1.007{\times}10^{17}\ \text{MeV/sec}) \times (1.602{\times}10^{-13}\ \text{joules/MeV})$$

$$= 16{,}139\ \text{watts}$$

The power ratio Q is calculated to equal the ratio of output power to input power and in test 5 has the value:

$$\text{Power ratio Q} = (\text{Output power}) / (\text{Input power})$$

$$= (16{,}139\ \text{watts}) / (4.35\ \text{watts}) = 3710$$

which is greater than the breakeven value of 1 and large compared to a value of $1.80{\times}10^{-6}$ obtained from Herb's experimental data. To enable a comparison with Herb's power ratio Q, the input power to run the vacuum pumps or sensors was not included in the determination of the power ratio Q.

Even though the particle detector assembly was configured with a 1 micron diameter aperture to reduce particle counts, the particle detector showed a significant increase in dead time when large particle counts occurred.

Although not shown in the previous table, for one test the particle detector was removed to prevent degradation. The test ran for 72 hours with the RGA measuring continuous He-3 and He-4 production and Li-6 and Li-7 consumption. The inventors believe that the test could have run for a significantly longer period of time. A practical consideration that limited the duration of this test was the length of time the inventor was able to remain continuously on-site.

## EXAMPLE HYDROGEN-LITHIUM FUSION DEVICES AND METHODS

Hydrogen and lithium, in elemental or chemical bond form, are the preferred fuels for the Hydrogen-Lithium Fusion Device (HLFD). In one implementation, the HLFD includes a plasma generator capable of generating proton-lithium plasma within a reaction chamber using one or more low energy proton sources and lithium sources supplying fuel to create helium ions.

Low energy protons in this disclosure and these claims react at an energy level well below the 300 keV level of prior researchers. To avoid confusion, low energy is defined as 20 eV to 25 keV. A range is appropriate because energy of individual protons is in a distribution. Initial proton energies will change as the protons interact with other particles. Proton beams nominally created even at the extremes of this range are expected to result in a proportion of protons in a narrower range of 100 eV to 5,000 eV, which was the subject of the reported experiments.

Given distributions of proton energies, reference is sometimes made to an effective proportion of proton energies. Proton energies in a specified range are defined as effective when interaction of protons with lithium results in better than breakeven energy production, Q > 1 for a sustained time of at least one minute. The theoretical limit on Q is < 65,000. There is no theoretical limit on how long a fusion reaction could be sustained. As practical upper bound, we choose 10 years.

When this disclosure refers to kinetic energy imparted to protons in a range of eV, we mean proton energies as measured within a proton plasma using an instrument such as the Semion™ or similar instrument. The Semion™ instrument is sometimes called a retarding potential analyzer. It measures the ion energy and produces the ion energy distribution function (IEDF), ion flux, negative ions, temperature and Vdc. Readings taken with this type of instrument give an average proton energy across the sensor and a distribution of proton energy across portions of the sensor. The kinetic energy imparted to protons is considered to be in the specified range of eV when the measured average proton energy is within the specified range. Specified ranges are 20 eV to 25,000 eV; or 100 eV to 5,000 eV; or 200 eV to 2,000 eV.

When this disclosure refers to kinetic energy of helium ions produced during a reaction in a range of eV, we mean helium ion energies as measured within a helium ion plasma using an instrument such as the Semion™ or similar instrument. The Semion™ instrument is sometimes called a retarding potential analyzer. It measures the ion energy and produces the ion energy distribution function (IEDF), ion flux, negative ions, temperature and Vdc. Readings taken with this type of instrument give an average helium ion energy across the sensor and a distribution of helium ion energy across portions of the sensor. The kinetic energy imparted to helium ions is considered to be in the specified range of eV when the measured average helium ion energy is within the specified range.

In one example, the reaction chamber includes a bias electrode with positive bias voltage applied by a power supply, as in series #25 of experimental tests conducted by the inventors. The positive bias voltage ionizes and ignites the hydrogen and lithium resulting in proton-lithium plasma, and accelerates protons away from the bias electrode. When protons in the plasma have energies between about 100 eV and 5,000 eV as shown in series #23 - 24, the protons fuse with lithium ions, producing energetic helium ion fusion byproducts.

The term proton source is used subsequently as a generic term for any material that contains hydrogen, for example hydrogen gas or chemically bonded hydrogen. The term lithium source is used subsequently as a generic term for any material that contains lithium, for example metallic lithium or chemically bonded lithium.

A proton source may be replenished by well-known methods such as adding hydrogen gas to the reaction chamber. A lithium source may be replenished by well-known methods such as replacing or adding lithium-containing material to the lithium source. Another method of lithium replenishment is to evaporate lithium onto the reaction chamber walls, so that helium ion bombardment causes lithium sputtering back into the proton-lithium plasma.

A HLFD may utilize a variety of evaporation, sputtering, ionization, and proton acceleration technologies for generating proton-lithium plasma and helium ion fusion byproducts. Nine examples are provided to demonstrate the range and capabilities of these technologies and are illustrated in FIGS. 54 - 62.

These technologies include but are not limited to: (1) proton beams traversing lithium vapor, (2) lithium vapor with hydrogen gas exposed to bias voltages, (3) lithium sputtering with bias voltages, (4) magnetron lithium sputtering with bias voltages, (5) multiple magnetron lithium sputtering with bias voltages, (6) lithium arc sputtering with DC electric field, (7) lithium hydride evaporation, microwave plasma generation, and proton acceleration by an electric potential, (8) intersecting proton and lithium beams, and (9) proton and lithium ionization and acceleration by a laser. In the 25 series of experimental tests, the inventors have demonstrated examples 1 - 4 and 6 - 8. Example 5 using multiple magnetrons and example 9 using a laser to ionize and accelerate protons and lithium have not been tested by the inventors, but should yield results that are consistent with this disclosure.

As a first example illustrated in FIG. 54, evaporation processes within reaction chamber 6 use lithium source 14 such as metallic lithium or lithium-containing material within a vaporizer to generate lithium vapor. Lithium source 14 may use a tantalum evaporation boat that is heated resistively by an external power supply. Locating the resistive evaporation source at the bottom of the reaction chamber creates a vertical lithium vapor beam. Using hydrogen gas as a proton source, proton gun 18 creates a proton plasma beam of given proton energy in reaction chamber 6. The proton plasma beam intersects the lithium vapor beam, generates proton-lithium plasma 16, and enables protons and lithium ions to fuse.

As a second example illustrated in FIG. 55, evaporation processes that generate lithium vapor from lithium source 14 may be combined with a positive bias voltage in reaction chamber 6. Lithium source 14 is placed in a tantalum evaporation boat that is heated resistively by an external power supply. Locating the resistive evaporation source at the bottom of the reaction chamber creates a vertical lithium vapor beam. Using hydrogen gas as a proton source in reaction chamber 6, a positive bias voltage applied by one or more bias electrodes 34 generates proton-lithium plasma 16 in reaction chamber 6, and enables protons and lithium ions to fuse. The large number of protons and lithium ions in the proton-lithium plasma leads to increased fusion output power.

As a third example, as illustrated in FIG. 56, sputtering processes may utilize one or more lithium or lithium hydride targets as lithium source 14 in combination with a sputtering gas such as neon or argon in reaction chamber 6. Hydrogen gas may be used as a proton source. In some configurations, the proton-lithium plasma may be the sputtering gas. One or more bias electrodes 34 supply alternating negative and positive bias voltages to lithium source 14 in the reaction chamber. The negative bias voltage sputters lithium ions from lithium source 14 and ignites hydrogen and lithium ions to generate proton-lithium plasma. The positive bias voltage enables protons and lithium ions to fuse.

As a fourth example, as illustrated in FIG. 57, sputtering processes may utilize one or more magnetic fields 50, lithium or lithium hydride targets as lithium source 14, and a sputtering gas such as neon or argon for enhanced ionization and creation of proton-lithium plasma 16. A single circular magnetron functions as bias electrode 34 and may be operated with a pulsed DC bias voltage, resulting in discharge currents up to 40 Amps from an insulating lithium target such as a lithium hydride. See for example: A. Anders, J. Andersson, "High power impulse magnetron sputtering: Current-voltage-time characteristics indicate the onset of sustained self-sputtering" Journal of Applied Physics, 102, 113303 (2007).

As a fifth example, when using a metallic lithium target as lithium source 14 within reaction chamber 6, unbalanced magnetrons may function as alternating bias electrodes 34 as displayed in FIG. 58, may prevent lithium target poisoning during operation in a hydrogen-argon environment, and may enable sputtering durations over 300 hrs. See for example: P.J. Kelly, R.D. Arnell, "Magnetron sputtering: a review of recent developments and applications", Vacuum 56, 159 (2000). The unbalanced magnetron configuration extends magnetic field 50 out from the lithium target surfaces and results in a larger volume of proton-lithium plasma 16.

Due to advancements in sputtering power supplies, it is possible to sputter metallic lithium or lithium hydride in ultra high vacuum without a noble gas. The sputtering plasma created without a noble gas can reach up to 250 Amps of discharged target ion current. See for example: J. Andersson and A. Anders, Self-sputtering far above the runaway threshold: an extraordinary metal-ion generator, Physical Review Letters, 102, 045003 (2009).

As a sixth example, a simple configuration for arc sputtering is portrayed in FIG. 59. A DC voltage applied across lithium source anode 14 and lithium source cathode 14 within reaction chamber 6 enables sputtering or heating from both the anode and cathode resulting in proton-lithium plasma 16. The potential difference accelerates protons and lithium ions to the required energy for fusion to occur within reaction chamber 6. Applying an alternating DC voltage may prevent lithium target poisoning in a hydrogen atmosphere. See for example: R.L. Boxmas, D.M. Sanders, and P.J. Martin, Handbook of vacuum arc science and technology, Noyes Publications, Park Ridge, N.J (1995).

In some examples of proton-lithium plasma generation, multiple techniques may be applied to enable protons to reach the required energy range for fusion to occur. As a seventh example as portrayed in FIG. 60, an evaporative lithium hydride source 14 produces a vapor beam that travels into the reaction chamber. A microwave or RF generator 20 may be used to atomize, ionize, and maintain proton-lithium plasma 16 within reaction chamber 6. The protons and lithium ions are accelerated through proton-lithium plasma 16 by a DC electric field between one or more bias electrodes 34. See for example: G. Erkens et al, Plasma-assisted surface coating: processes, methods, systems and applications, Die Bibliothek der Technik, Suddeutscher Verlag onpact GmbH, 2011.

As an eighth example, a spherical or other type of reaction chamber 6 may be used in combination with one or more plasma beams that contain at least one of protons and lithium ions. As portrayed in FIG. 61, one plasma beam may be created by proton gun 18 while a second plasma beam contains lithium ions. The intersection region of the beams within reaction chamber 6 results in proton-lithium plasma 16.

As a ninth example, cylindrical reaction chamber 6 in FIG. 62 may be configured with proton acceleration laser 72. The laser photons may be generated by a solid-state laser diode or other laser technology. The protons are accelerated within reaction chamber 6 by passing the laser through reaction chamber 6 and liberating and accelerating protons from solid, liquid, vapor, or molecular target sources. A lithium source may be introduced by evaporation, laser evaporation, or laser liberation of lithium ions from a lithium-containing material target that may be solid, liquid, vapor, or molecular. The volume of the laser region within reaction chamber 6 contains proton-lithium plasma 16. The laser may be passed through viewport 74 to prevent laser heating of reaction chamber 6. See for example: L. Silva et al, Proton ShockAcceleration in Laser-Plasma Interactions, Phys. Rev. Lett. 92, Jan 2004. See for example: S.V. Bulanov et al, Collimated Multi-MeV Ion Beams from High-Intensity Laser Interactions with Underdense Plasma, Phys. Rev. Lett. 98, Jan 2007.

The evaporation, sputtering, ionization, and proton acceleration technologies generate helium ion fusion byproducts that may be utilized as an energy source for applications.

## PARTICULAR IMPLEMENTATIONS

In one implementation, a method is described of creating energetic helium ions. This method includes imparting energy to at least some protons in a controlled reaction chamber to generate low energy protons; and combining a portion of the low energy protons with lithium in a lithium-containing species to cause fusion resulting in production of energetic helium ion fusion byproducts.

This method and other implementations of the technology disclosed can include one or more of the following features and/or features described in connection with additional methods disclosed. In the interest of conciseness, the combinations of features disclosed in this application are not individually enumerated and are not repeated with each base set of features. The reader will understand how features identified in this section can readily be combined with sets of base features related to combinations of plasma generation and proton acceleration techniques.

In some implementations, the production of energetic helium ion fusion byproducts is accompanied by production of at least as much output power resulting from fusion as input power used to generate the low energy protons. In this method and other implementations, the output power can be determined using solid angle calculations, particle counts per second, and average particle energy.

In some implementations, a method may include forming a proton-lithium plasma in the controlled reaction chamber and combining the portion of low energy protons with lithium in the plasma. This method may further include producing the said helium ion fusion byproducts with a net power gain over power used in generating the low energy protons and forming the proton-lithium plasma.

As an example, the method is enhanced wherein the low energy protons have an average kinetic energy in a range of 20 eV to 25 keV. In other implementations the method is enhanced wherein the low energy protons have an average kinetic energy in a range of 100 eV to 5,000 eV. In other implementations, the method is enhanced wherein the low energy protons have an average kinetic energy in a range of 200 eV to 2,000 eV.

For some implementations a method is enhanced wherein, wherein the said proton-lithium plasma formed in said reaction chamber has a pressure in a first pressure range of $10^{-10}$ Torr to 10,000 Torr. For some implementations a method is enhanced wherein the said proton-lithium plasma formed in said reaction chamber has a pressure in a second pressure range of $10^{-6}$ Torr to 1 Torr.

In some examples a method further includes producing the said helium ion fusion byproducts with a power ratio Q>1 and Q<64,840, the power ratio describing output power of the said helium ion fusion byproducts divided by input power used in forming the said proton-lithium plasma and the said low energy protons. Other examples include a method that produces the said helium ion fusion byproducts with a power ratio Q>10 and Q<64,840, and other implementations include a method that produces the said helium ion fusion byproducts with a power ratio Q>100 and Q<64,840.

In some examples of a method, an effective portion of the low energy protons have a kinetic energy in a range of 20 eV to 25 keV. In other implementations of a method an effective portion of the low energy protons have a kinetic energy in a range of 100 eV to 5,000 eV. In other implementations of a method an effective portion of the low energy protons have a kinetic energy in a range of 200 eV to 2,000 eV.

In some examples a method includes maintaining the production of said helium ion fusion byproducts for a time duration longer than 1 second. In other examples a method includes maintaining the production of said helium ion fusion byproducts for a time duration longer than 30 seconds. In other examples a method includes maintaining the production of said helium ion fusion byproducts for a time duration longer than 30 seconds and up to 10 years.

In some examples, the method includes helium ion fusion byproducts that have a measurable kinetic energy up to 12 MeV per helium ion.

In some implementations, a method is described of applying a positive charge to a first electrode in said reaction chamber and imparting kinetic energy to the said low energy protons as a result of at least repulsive forces between the said first electrode and said protons.

In another implementation, a method is described of applying a negative charge to a first electrode in said reaction chamber and imparting kinetic energy to the said low energy protons as a result of at least attractive forces between the said first electrode and said protons.

In other implementations, a method is described of attracting at least some of the said low energy protons in the said proton-lithium plasma towards said first electrode while applying a negative charge; and applying a positive charge to the said first electrode and imparting kinetic energy to the said low energy protons as a result of at least repulsive forces between the said first electrode and the said protons.

In some implementations, a method includes evaporating lithium into said proton-lithium plasma by application of heat to said lithium.

In some implementations, the method further includes electrically coupling a lithium-containing species target to the said first electrode; cycling between applying said negative charge and said positive charge to the said first electrode; and sputtering lithium from said lithium-containing species target into said proton-lithium plasma during at least part of the applying the said negative charge to the said first electrode.

In some implementations, a method further includes imparting kinetic energy to the said low energy protons as a result of a potential field between said first electrode and a second electrode.

In some implementations, a method further includes introducing a gaseous lithium compound into said proton-lithium plasma.

In some implementations, a method further includes introducing said lithium into said proton-lithium plasma by chemical disassociation.

In some implementations, a method further includes introducing said lithium into said proton-lithium plasma by photon disassociation.

In some examples, a method further includes introducing said protons into said proton-lithium plasma by photon disassociation.

In some implementations, a method further includes imparting kinetic energy to the low energy protons as a result of a potential field between said first electrode and a second electrode.

In some examples, a method further includes introducing said protons into said lithium-containing plasma.

In some examples, a method is described wherein said proton-lithium plasma is exposed to a magnetic field that focuses concentration of said proton-lithium plasma.

In some examples, a method is described wherein the said proton-lithium plasma is energized by at least one of a microwave, RF, and electric field.

Other examples may include systems that combine lithium and protons to perform any of the methods described above. These systems combine any of the plasma generation and proton acceleration techniques.

While the present technology is disclosed by reference to the preferred implementations and examples detailed above, it is to be understood that these examples are intended in an illustrative rather than in a limiting sense. It is contemplated that modifications and combinations will readily occur to those skilled in the art, which modifications and combinations will be within the scope of the following claims.

Technology disclosed can be practiced as a method or an apparatus. A variety of exemplary apparatus are described above. The following section describes exemplary methods that can be practiced in these devices or other devices. Each of the methods developed transforms matter, inducing fusion and producing energetic helium ions. Production of energetic helium ions can be followed by heat transfer. Other uses for energetic helium ions also can be developed.

In one implementation, a method is described of creating energetic helium ions. This method includes generating proton-lithium plasma containing protons and lithium in a controlled reaction chamber. For some applications, a vacuum chamber will be a suitable reaction chamber. The method further includes imparting a low energy to at least some of the protons that gives the low energy protons a kinetic energy in a first range of 20 eV to 25,000 eV and combining at least some of the low energy protons with lithium ions in the proton-lithium plasma to cause production of helium ion fusion byproducts. The helium ion fusion byproducts are energetic helium ions.

This method and other implementations of the technology disclosed can each optionally include one or more the following features.

In some implementations, the low energy imparted to at least some of the protons gives the low energy protons a kinetic energy in a second range of 100 eV to 5,000 eV. In other implementations, the kinetic energy imparted can be in a third range of 200 eV to 2,000 eV, which is the energy imparted to protons by electrodes, electric fields, magnetic fields, or photons. By imparting energy, we mean causing the protons to have a kinetic energy in one of the specified ranges. This may involve slowing down or speeding up protons, decreasing or increasing their kinetic energy. The resulting kinetic energy protons will form a distribution. It is expected that the protons with kinetic energy in the specified ranges will be the ones interacting with lithium to produce helium ion fusion byproducts.

In some implementations, the proton-lithium plasma has a pressure in a first pressure range of $10^{-10}$ Torr to 10,000 Torr. In other implementations, the proton-lithium plasma has a pressure in a second pressure range of $10^{-6}$ Torr to 1 Torr. In these ranges, the lower pressure is expressed in scientific notation. The higher pressure is about 10 times greater than atmospheric pressure of 760 Torr.

In theory, a proton with kinetic energy in the specific energy range undergoes fusion with a lithium nucleus at a distance at which the proton can distinguish the individual lithium nuclei constituents. During the inventor's experimental tests, the fusion reaction was produced within a pressure range between $10^{-6}$ Torr and 1 Torr. It is believed that lower or higher pressures do not inhibit the fusion reaction as long as the distance and kinetic energy parameters are achieved.

The methods described further include producing the helium ion fusion byproducts with at least one measured peak or range of helium ion kinetic energies that at times may be up to 12 MeV per helium ion. Helium ion energies are in a distribution. There was some indication during the experiments that helium ions were detected at 100 keV, which was the lower limit of detection.

In some implementations, producing the helium ion fusion byproducts will produce energy with a power ratio Q>1. The power ratio describes output power of the helium ion fusion byproducts divided by input power used in forming of the proton-lithium plasma and imparting the low energy to the protons. As set forth above, the definition of this power ratio does not include the power used to produce a vacuum. In some implementations, power ratios of Q>10 and Q>100 have been reported. A power ratio calculated to be theoretically achievable is about Q<64,840, calculated as 16.21 MeV / 250 eV.

Applying the method described, the helium ion fusion byproducts will produce energy with a net power gain over power used in forming of the proton-lithium plasma and imparting the low energy to the protons. The net power gain is sustained. In some implementations, the production of helium ion fusion byproducts with a net power gain has been sustained for more than 30 seconds. With appropriate development and engineering, it is expected that the reaction producing helium energy fusion byproducts can be sustained for a long time, measured in days or weeks or longer, subject to replenishment of fuel and periodic maintenance of the reaction chamber. Sustaining a reaction for more than 30 seconds with a net power gain distinguishes the technology disclosed from hot fusion efforts that produce fusion for less than a few seconds.

In some implementations, the technology disclosed includes applying a positive charge to a first electrode and imparting kinetic energy to at least some of the low energy protons in the proton-lithium plasma as a result of at least repulsive forces between the first electrode and the protons.

In some implementations, the technology disclosed includes applying a negative charge to a first electrode and imparting kinetic energy to at least some of the low energy protons in the proton-lithium plasma as a result of at least attractive forces between the first electrode and the protons.

In some implementations, the technology disclosed includes attracting at least some of the protons in the proton-lithium plasma towards a first electrode while applying a negative charge and applying a positive charge to the first electrode and imparting kinetic energy to the low energy protons as a result of at least repulsive forces between the first electrode and the protons.

In some implementations, the proton-lithium plasma further contains inert gas ions. As described above, it is possible to produce proton-lithium plasma in the absence of inert gas ions.

In some implementations, the method includes electrically coupling a lithium-containing material sputter target to the first electrode and sputtering lithium from a lithium-containing material sputter target into the proton-lithium plasma during at least part of the applying the negative charge to the first electrode.

In some implementations, the method includes cycling between applying negative and positive charges to the first electrode. At least some of the kinetic energy imparted to the low energy protons can result from a potential field between the first electrode and a second electrode. At least some of the kinetic energy imparted can result from repulsion.

Some implementations include applying positive charge to the first electrode. Some implementations include applying negative charge to the first electrode.

Some implementations further include injecting protons or a beam of protons into a lithium-containing plasma.

The proton-lithium plasma can be exposed to a magnetic field that focuses concentration of the proton-lithium plasma.

The proton-lithium plasma can be energized by microwave, RF or electrical arcing.

The proton-lithium plasma can be energized and accelerated by application of a laser.

Any of the methods and features described above can further include utilizing the helium ion fusion byproducts, thereby producing electricity. This may include converting kinetic energy of the helium ion fusion byproducts to thermal energy by exposing a heat transfer medium to the helium ion fusion byproducts. In turn, thermal energy in the heat transfer medium can be used to generate electrical power.

The methods described in this section can be combined with other features described in previous sections. They can be applied using the exemplary apparatus described above. The exemplary apparatus described above can be configured to carry out the method steps.

The invention is defined by the appended claims.

**Claims**

1. A method for creating energetic helium ions, said method comprising:

    imparting energy to at least some protons in a controlled reaction chamber to generate low energy protons, wherein the low energy protons have an average kinetic energy in a range of 100 eV to 5,000 eV; and
    combining a portion of the low energy protons with lithium in a lithium-containing species to cause fusion resulting in production of energetic helium ion fusion byproducts.

2. The method of claim 1, further including forming the proton-lithium plasma in the reaction chamber and combining the portion of protons with lithium in the plasma.

3. The method of any of claims 1-2, wherein the protons have an average kinetic energy in a range of 200 eV to 2,000 eV.

4. The method of any of claims 1-3, wherein the said proton-lithium plasma formed in said reaction chamber has a pressure in a first pressure range of 13.3 nPa to 1.33 MPa ($10^{-10}$ Torr to 10.000 Torr).

5. The method of any of claims 1-3, wherein the said proton-lithium plasma formed in said reaction chamber has a pressure in a second pressure range of 0.13 mPa to 1.33 hPa ($10^{-6}$ Torr to 1 Torr).

6. The method of any of claims 2-5, further comprising:

    applying a positive charge to a first electrode in said reaction chamber and imparting kinetic energy to the said low energy protons as a result of at least repulsive forces between the said first electrode and said protons.

7. The method of any of claims 2-5, further comprising:

    applying a negative charge to a first electrode in said reaction chamber and imparting kinetic energy to the protons as a result of at least attractive forces between the first electrode and the protons.

8. The method of any of claims 6 or 7, further including:

    electrically coupling a lithium-containing species target to the said first electrode;
    cycling between applying said negative charge and said positive charge to the first electrode; and
    sputtering lithium from said lithium-containing species target into said proton-lithium plasma during at least part of the applying the said negative charge to the first electrode.

9. The method of any of claims 7-8, further including imparting kinetic energy to the protons as a result of a potential field between said first electrode and a second electrode.

10. The method of any of claims 2-7, further including introducing a gaseous lithium compound into said proton-lithium plasma.

11. The method of any of claims 2-7, further including introducing said lithium into said proton-lithium plasma by chemical disassociation.

12. The method of any of claims 2-7, further including introducing said lithium into said proton-lithium plasma by photon disassociation.

13. The method of claim 2, further including imparting kinetic energy to the protons as a result of a potential field between said first electrode and a second electrode.


**Patentansprüche**

1. Verfahren zur Erzeugung energetischer Helium-Ionen, wobei das Verfahren umfasst:

   Übertragen von Energie in einer gesteuerten Reaktionskammer auf zumindest einige Protonen, um Niederenergieprotonen zu erzeugen, wobei die Niederenergieprotonen eine mittlere kinetische Energie in einem Bereich von 100 eV bis 5000 eV haben; und
   Vereinen eines Teils der Niederenergieprotonen mit Lithium in einer Lithium-enthaltenden Spezies, um eine Fusion hervorzurufen, die zur Erzeugung von energetischen Helium-Ionen-Fusionsnebenprodukten führt.

2. Verfahren nach Anspruch 1, das ferner Erzeugen des Protonen-Lithium-Plasmas in der Reaktionskammer und Vereinen des Teils von Protonen mit Lithium in dem Plasma umfasst.

3. Verfahren nach Anspruch 1-2, wobei die Protonen eine mittlere kinetische Energie im Bereich von 200 eV bis 2000 eV haben.

4. Verfahren nach einem der Ansprüche 1-3, wobei das Protonen-Lithium-Plasma, das in der Reaktionskammer erzeugt wird, einen Druck in einem ersten Druckbereich von 13,3 nPa bis 1,33 MPa ($10^{-10}$ Torr bis 10000 Torr) hat.

5. Verfahren nach einem der Ansprüche 1-3, wobei das Protonen-Lithium-Plasma, das in der Reaktionskammer erzeugt wird, einen Druck in einem zweiten Druckbereich von 0,13 mPa bis 1,33 hPa ($10^{-6}$ Torr bis 1 Torr) hat.

6. Verfahren nach einem der Ansprüche 2-5, das ferner umfasst:

   Zuführen von positiver Ladung zu einer ersten Elektrode in der Reaktionskammer und Hervorrufen von kinetischer Energie an den Niederenergieprotonen als Folge zumindest abstoßender Kräfte zwischen der ersten Elektrode und den Protonen.

7. Verfahren nach einem der Ansprüche 2-5, das ferner umfasst:

   Zuführen von negativer Ladung zu einer ersten Elektrode in der Reaktionskammer und Hervorrufen kinetischer Energie an den Protonen als Folge zumindest anziehender Kräfte zwischen der ersten Elektrode und den Protonen.

8. Verfahren nach einem der Ansprüche 6 oder 7, das ferner umfasst:

   elektrisches Ankoppeln eines Targets aus Lithium-enthaltender Spezies an die erste Elektrode;
   abwechselnd Zuführen der negativen Ladung und der positiven Ladung zu der ersten Elektrode; und
   Herausschlagen von Lithium aus dem Target aus Lithium-enthaltender Spezies in das Protonen-Lithium-Plasma während zumindest eines Teils des Zuführens der negativen Ladung zu der ersten Elektrode.

9. Verfahren nach einem der Ansprüche 7-8, das ferner Hervorrufen von kinetischer Energie an den Protonen als Folge eines Potenzialfeldes zwischen der ersten Elektrode und einer zweiten Elektrode umfasst.

10. Verfahren nach einem der Ansprüche 2-7, das ferner Einführen einer gasförmigen Lithium-Zusammensetzung in das Protonen-Lithium-Plasma umfasst.

**11.** Verfahren nach einem der Ansprüche 2-7, das ferner Einführen des Lithiums in das Protonen-Lithium-Plasma durch chemischen Zerfall umfasst.

**12.** Verfahren nach einem der Ansprüche 2-7, das ferner Einführen des Lithiums in das Protonen-Lithium-Plasma durch Photonen bedingten Zerfall umfasst.

**13.** Verfahren nach Anspruch 2, das ferner Hervorrufen von kinetischer Energie an den Protonen als Folge eines Potenzialfeldes zwischen der ersten Elektrode und einer zweiten Elektrode umfasst.

**Revendications**

**1.** Procédé de création d'ions hélium énergétiques, ledit procédé comprenant :

la communication d'une énergie à au moins certains protons dans une chambre de réaction contrôlée pour générer des protons à faible énergie, les protons à faible énergie présentant une énergie cinétique moyenne située dans la plage allant de 100 eV à 5000 eV, et
la combinaison d'une partie des protons à faible énergie avec du lithium dans un élément contenant du lithium afin de provoquer une fusion résultant en la production de sous produits de fusion d'ions hélium énergétiques.

**2.** Procédé selon la revendication 1, incluant en outre la formation du plasma protons lithium dans la chambre de réaction et la combinaison de la fraction de protons avec du lithium dans le plasma.

**3.** Procédé selon l'une quelconque des revendications 1 et 2, dans lequel les protons présentent une énergie cinétique moyenne située dans la plage allant de 200 eV à 2000 eV.

**4.** Procédé selon l'une quelconque des revendications 1 à 3, dans lequel ledit plasma protons lithium formé dans ladite chambre de réaction présente une pression située dans une première plage de pression allant de 13,3 nPa à 1,33 MPa ($10^{-10}$ Torr à 10 000 Torr).

**5.** Procédé selon l'une quelconque des revendications 1 à 3, dans lequel ledit plasma protons lithium formé dans ladite chambre de réaction présente une pression située dans une seconde plage de pression allant de 0,13 mPa à 1,33 hPa ($10^{-6}$ Torr à 1 Torr).

**6.** Procédé selon l'une quelconque des revendications 2 à 5, comprenant en outre :

l'application d'une charge positive à une première électrode dans ladite chambre de réaction et la communication d'une énergie cinétique aux dits protons à faible énergie en résultat d'au moins certaines forces de répulsion entre ladite première électrode et lesdits protons.

**7.** Procédé selon l'une quelconque des revendications 2 à 5, comprenant en outre :

l'application d'une charge négative à une première électrode dans ladite chambre de réaction et la communication d'une énergie cinétique aux protons en résultat d'au moins certaines forces d'attraction entre ladite première électrode et lesdits protons.

**8.** Procédé selon l'une quelconque des revendications 6 ou 7, incluant en outre :

le couplage électrique d'une cible formée d'un élément contenant du lithium à ladite première électrode,
la réalisation d'un cycle entre l'application de ladite charge négative et de ladite charge positive à la première électrode, et
la pulvérisation du lithium provenant de ladite cible formée d'un élément contenant du lithium dans ledit plasma protons lithium pendant au moins une partie de l'application de ladite charge négative à la première électrode.

**9.** Procédé selon l'une quelconque des revendications 7 et 8, incluant en outre la communication d'une énergie cinétique aux protons en résultat d'un champ de potentiel entre ladite première électrode et une seconde électrode.

**10.** Procédé selon l'une quelconque des revendications 2 à 7, incluant en outre l'introduction d'un composé gazeux de lithium dans ledit plasma protons lithium.

11. Procédé selon l'une quelconque des revendications 2 à 7, incluant en outre l'introduction dudit lithium dans ledit plasma protons lithium par dissociation chimique.

12. Procédé selon l'une quelconque des revendications 2 à 7, incluant en outre l'introduction dudit lithium dans ledit plasma protons lithium par dissociation photonique.

13. Procédé selon la revendication 2, incluant en outre la communication d'une énergie cinétique aux protons en résultat d'un champ de potentiel entre ladite première électrode et une seconde électrode.

## LOGARITHMIC SINGULARITY LINES FOR NUCLEON
## FORCE BETWEEN A NEUTRON AND A PROTON

FIG. 1

# HLFD PROTOTYPE CROSS-SECTION EVOLUTION

## HLFD Prototype #1

## HLFD Prototype #2

## HLFD Prototype #3

## HLFD Prototype #4 - #6

FIG. 2

# SERIES 1 - 2 LITHIUM TARGETS

**March 2007: 50 Micron Lithium Thickness in HLFD #2**

| Front Side | Back Side |
|:---:|:---:|

**June 2007: 50 Micron Lithium Thickness in HLFD #2**

| Front Side | Back Side |
|:---:|:---:|

FIG. 3

# SERIES 8 - 9 LITHIUM TARGETS

## April 2010: 200 Micron Lithium Thickness in HLFD #4

| Front Side | Back Side |
|:---:|:---:|
| | |

## August 2010: 4 mm Lithium Thickness in HLFD #5

### Front Side

FIG. 4

# TYPE II GRAVITY RINGS FOR PARTICLE AT
# TARGET CROSS SECTION CENTER

Proton Type II Gravity Rings

Helium-4 Type II Gravity Rings

•••••••••• : Attractive Type II Gravity

—•—•— : Repulsive Type II Gravity

: Target Support Material

FIG. 5

47

# SERIES 10 FUSION EFFICIENCY

## Fusion Efficiency vs Proton Beam Energy

FIG. 6

# SERIES 13 REACTION CHAMBER CONFIGURATION

## Two Bias Screen Configuration In Front of Detectors

FIG. 7

## SERIES 13 PROTON PEAK

## Particle Counts vs Front Particle Energy

Peak: 137.39 = 790.06 keV
FWHM: 176.61  FW(1/5)M: 329.02
Library: Sb-124 (Antimony) at 790.71 ;  6.007e+007 cA
Gross Area: 42040227
Net Area: 42040227 ±6483
Gross/Net Count Rate: 446286.91 / 446286.91 cps

FIG. 8

# SERIES 13 HELIUM ION PEAK

## Particle Counts vs Front Particle Energy

Peak: 1484.66 = 8537.59 keV
FWHM: 209.83  FW(1/5)M: 537.58
Gross Area: 14795
Net Area: 14795 ±121
Gross/Net Count Rate: 157.06 / 157.06 cps

FIG. 9

SERIES 13 LITHIUM TARGET WITH OXIDE LAYER

March 2011: 1 mm Lithium Thickness in HLFD #6

| Front Side | Back Side |
|---|---|
| | |

FIG. 10

EP 3 000 112 B1

# SERIES 15 - 17 REACTION CHAMBER CONFIGURATION

## Aluminum Foil Shield at Detector Port Entrance

FIG. 11

53

## DETAILED CROSS-SECTIONAL VIEW
## HLFD PROTOTYPE #7: AXIAL CONE DESIGN

Lithium Source

Axial Aluminum Bias Rod

Aluminum Oxide Insulator

Aluminum Base (Grounded)

Rotary Bearing Plate (Grounded)

Vacuum Chamber Bottom

Vacuum Chamber Bottom

Nylon Insulator or Aluminum Oxide

Bias Voltage Wire

5-inch Extension Nipple Flange

Electrical Feedthrough Flange

Manual Rotation Feedthrough Rod

FIG. 12

# SERIES 16 TEST RESULTS WITH NEGATIVE BIAS VOLTAGE

### Proton Current vs Hydrogen Pressure

Bias voltage = -222.6 volts

Target area = 91.2 cm$^2$

FIG. 13

# SERIES 17 TEST RESULTS WITH POSITIVE BIAS VOLTAGE

## 7.7 MeV Fusion Particle Peak

Detectors behind 10 micron aluminum shield
Aperture Diameter = 1 mm

Particle Energy (keV)

FIG. 14

SERIES 17 TEST RESULTS WITH POSITIVE BIAS VOLTAGE

Particle Counts vs Hydrogen Pressure

Detectors behind 10 micron aluminum shield
Aperture Diameter = 1 mm
Detector Distance = 21 cm

FIG. 15

57

# SERIES 17 TEST RESULTS WITH POSITIVE BIAS VOLTAGE

### Particle Peak Energy vs Hydrogen Pressure
Detectors behind 10 micron aluminum shield
Aperture Diameter = 1 mm
Detector Distance = 21 cm

FIG. 16

# SERIES 18 REACTION CHAMBER CONFIGURATION

FIG. 17

# SERIES 18 DETAILED CROSS-SECTIONAL VIEW
# HLFD PROTOTYPE #8: AXIAL CONE DESIGN

Lithium Source

Axial Aluminum Bias Rod

Aluminum Oxide
Insulator

Vacuum Chamber Bottom          Vacuum Chamber Bottom

Large Copper Rod
Feedthrough Flange

Radiator/Heat Sink

Bias Voltage Line

FIG. 18

SERIES 18 INTERIOR REACTION CHAMBER CUT-AWAY VIEW
HLFD PROTOTYPE #8: AXIAL CONE DESIGN

FIG. 19

## SERIES 18 CROSS SECTIONAL TOP VIEW OF REACTION CHAMBER PORT WITH P-I-N DETECTOR, ALUMINUM FOIL SHIELD, AND 250 μm DIAMETER APERTURE

Lithium Source
at 21 cm

250 μm ⌀

Vacuum Side

Atmosphere Side

BNC Flange

Ceramic

p-i-n Diode

Grounded Metal

Grounded Aluminum Foil Shield

Reaction Chamber

Two pin BNC Flange (2.75 inch CF)

Grounded  Signal Cable

FIG. 20

# SERIES 18 TEST RESULTS WITH ALTERNATING NEGATIVE AND POSITIVE BIAS VOLTAGES

## Test #243: 8.8 MeV Fusion Particle Peaks

### Detectors behind 10 micron aluminum shield
### Aperture Diameter = 250 microns

Peak: 994.27 = 8910.63 keV

FWHM: 419.31  FW(1/5)M: 462.01

Gross Area: 11644

Net Area: 11644 +/- 107

Gross/Net Count Rate: 0.00 / 0.00 cps

FIG. 21

SERIES 18 TEST RESULTS WITH ALTERNATING
NEGATIVE AND POSITIVE BIAS VOLTAGES

Particle Counts vs Argon-Hydrogen Pressure

Detectors behind 10 micron aluminum shield

Aperture Diameter = 1 mm or 250 microns

- Front Detector
× Back Detector

FIG. 22

SERIES 18 TEST RESULTS WITH ALTERNATING
NEGATIVE AND POSITIVE BIAS VOLTAGES

Particle Counts vs Pulse Frequency

Detectors behind 10 micron aluminum shield

Aperture Diameter = 1 mm or 250 microns

• Front Detector
✗ Back Detector

FIG. 23

SERIES 18 TEST RESULTS WITH ALTERNATING
NEGATIVE AND POSITIVE BIAS VOLTAGES

Particle Counts vs Positive Bias Voltage

Detectors behind 10 micron aluminum shield

Aperture Diameter = 1 mm or 250 microns

- Front Detector
X Back Detector

FIG. 24

# SERIES 19 REACTION CHAMBER CONFIGURATION

Blank

150 Amp Feedthrough

Two pin BNC

Ar/H2 Leak Valve

0.75 inch Dia. Copper Rod FT

Two pin BNC

PD

Convectron Guage

Two pin BNC

150 Amp Feedthrough

Viewport

Gate Valve

PD

FC

Viewport & HD Camera

Two pin BNC

IR Viewport

Two pin BNC

One pin BNC

Bellows

Roughing Pump

| PD | Particle Detector |
| FC | Faraday Cup |
| ▬ | 25 μm diameter Aperture & 10 μm Aluminum Foil Shield |

FIG. 25

## SERIES 19 TEST RESULTS WITH ALTERNATING NEGATIVE AND POSITIVE BIAS VOLTAGES

### Test #112: 5.6 MeV Fusion Particle Peak

### Detectors behind 10 micron aluminum shield
### Aperture Diameter = 25 microns

Peak: 981.28 = 5852.61 keV

FWHM: 239.58  FW(1/5)M: 507.05

Gross Area: 25802

Net Area: 25802 +/- 160

Gross/Net Count Rate: 14828.74 / 14828.74 cps

FIG. 26

SERIES 19 TEST RESULTS WITH ALTERNATING
NEGATIVE AND POSITIVE BIAS VOLTAGES

Particle Counts vs Argon Pressure

Detectors behind 10 micron aluminum shield

Aperture Diameter = 25 microns

● Front Detector

✗ Back Detector

FIG. 27

## SERIES 19 TEST RESULTS WITH ALTERNATING NEGATIVE AND POSITIVE BIAS VOLTAGES

### Particle Counts vs Pulse Frequency

### Detectors behind 10 micron aluminum shield

### Aperture Diameter = 25 microns

● Front Detector
✕ Back Detector

FIG. 28

SERIES 19 TEST RESULTS WITH ALTERNATING
NEGATIVE AND POSITIVE BIAS VOLTAGES

Particle Counts vs Positive Bias Voltage

Detectors behind 10 micron aluminum shield

Aperture Diameter = 25 microns

● Front Detector
✕ Back Detector

FIG. 29

# SERIES 20 REACTION CHAMBER

FIG. 30

# SERIES 20 REACTION CHAMBER CONFIGURATION

FIG. 31

### SERIES 20 DETAILED CROSS-SECTIONAL VIEW
### HLFD PROTOTYPE #9: MAGNETRON DESIGN

FIG. 32

# SERIES 20 CROSS SECTIONAL SIDE VIEW OF REACTION CHAMBER PORT WITH DETECTOR ASSEMBLY

PROTON-LITHIUM PLASMA

1.7 MeV, 2.3 MeV, 8.6 MeV Helium Ions

Vacuum

25 μm Ø Tungesten Aperture (25 μm Thick Disk)

Grounded Steel Aperture Holder →

Ruggedized ORTEC Particle Detector - BR-017-050-100 (Photon Supression) →

← 12 μm thick Aluminized Mylar Shield

Two pin BNC Flange (2.75 inch CF)

Atmosphere

Grounded →

← Detector Signal to Ortec 142 Pre-Amp

FIG. 33

# SERIES 20 PARTICLE DETECTION SYSTEM
# BLOCK DIAGRAM OF COMPONENTS

```
┌─────────────────────────┐
│  Ruggedized ORTEC Particle │
│  Detector - R-017-050-100  │
└─────────────────────────┘
            │
┌─────────────────────────┐        ┌──────────────────┐
│  ORTEC 142   Pre - Amplifier │────│   ORTEC 459      │
└─────────────────────────┘        │  Dual Bias Supply │
            │                       └──────────────────┘
┌─────────────────────────┐        ┌──────────────────┐
│   ORTEC 572 Amplifier    │───────│ NIM Bin Power Supply │
└─────────────────────────┘        └──────────────────┘
            │
┌─────────────────────────┐
│     ORTEC Aspec 927      │
│  Dual Multichannel Anayzer │
└─────────────────────────┘
            │
┌─────────────────────────┐
│ ORTEC Maestro Detector Software │
└─────────────────────────┘
```

FIG. 34

# SERIES 20 TEST RESULTS WITH ALTERNATING NEGATIVE AND POSITIVE BIAS VOLTAGES

## Series 20 Computer Screen Image

### ORTEC Detector behind 12 micron aluminized Mylar shield
### Aperture Diameter = 25 microns

Peak: 11.26 = 78.19 keV
FWHM: 8.19  FW(1/5)M: 46.88
Library: Ba-131 (Barium) at 78.73 ;  4.13e+005 cA
Gross Area: 434542
Net Area: 434542 ±659
Gross/Net Count Rate: 3035.78 / 3035.78 cps

Magnetron Video Feed

pin Diode Detector

ORTEC Ruggedized Detector

2.40-2

Vacuum Pressure (Torr)

Peak: 13.54 = 87.50 keV
FWHM: 49.91  FW(1/5)M: 88.13
Library: Pb-214 (Lead) at 87.30 ;  2.331e+004 cA
Gross Area: 378682
Net Area: 373597 ±1446
Gross/Net Count Rate: 1041.77 / 1027.78 cps

FIG. 35

SERIES 20 TEST RESULTS WITH ALTERNATING
NEGATIVE AND POSITIVE BIAS VOLTAGES

Particle Counts vs Argon-Hydrogen Pressure

ORTEC Detector behind 12 micron aluminized Mylar shield
Aperture Diameter = 25 microns

FIG. 36

SERIES 20 TEST RESULTS WITH ALTERNATING
NEGATIVE AND POSITIVE BIAS VOLTAGES

Particle Counts vs Pulse Frequency

ORTEC Detector behind 12 micron aluminized Mylar shield

Aperture Diameter = 25 microns

FIG. 37

SERIES 20 TEST RESULTS WITH ALTERNATING
NEGATIVE AND POSITIVE BIAS VOLTAGES

Particle Counts vs Positive Bias Voltage

ORTEC Detector behind 12 micron aluminized Mylar shield
Aperture Diameter = 25 microns

FIG. 38

## SERIES 20 TEST RESULTS WITH ALTERNATING NEGATIVE AND POSITIVE BIAS VOLTAGES

### Output Power vs Input Power

**FIG. 39**

## SERIES 22 REACTION CHAMBER CONFIGURATION

FIG. 40

SERIES 22 REACTION CHAMBER CONFIGURATION

FIG. 41

SERIES 22 TEST RESULTS WITH ALTERNATING
NEGATIVE AND POSITIVE BIAS VOLTAGES

Series 22 Computer Screen Image

Test #33: 1.7 & 2.3 MeV Particle Peak and Helium Leak Test Measurement

FIG. 42

**SERIES 22 TEST RESULTS WITH ALTERNATING NEGATIVE AND POSITIVE BIAS VOLTAGES**

Fusion Power vs Hydrogen Pressure

SRS 100 amu Residual Gas Analyzer Measurement of Helium Partial Pressure

FIG. 43

UNIFIED GRAVITY REACTION CHAMBER

FIG. 44

## UNIFIED GRAVITY PARTICLE DETECTOR SYSTEM
## BLOCK DIAGRAM OF EQUIPMENT

FIG. 45

## SERIES 23-25 PARTICLE DETECTOR ASSEMBLY
## CROSS-SECTIONAL SIDE VIEW

FIG. 46

# SERIES 23 & 24  REACTION CHAMBER COMPONENTS

Linear Motion Feed Through

Load Lock Door→

Gate Valve→

RGA

Bellows

Particle Detector Assembly

PD

Proton Gun

Gas Flow Controller

H2 Gas

←Evaporation Flange

←Blank

←Gate Valve

←Vacuum Gauge

Turbo Pump (1000 L/sec)

Roughing Pump (10.8 L/sec)

FIG. 47

# SERIES 23 TEST RESULTS FOR PROTON BEAM AND LITHIUM EVAPORATION

## Series 23 Computer #1 Screen Image

Peak: 140.58 = 1021.60 keV
FWHM: 70.81  FW[1/3]M: 104.30
Library: K-42 (Potassium) at 1023.00 ;  1.692e+008 cA
Gross Area: 712334
Net Area: 654134 ±7553
Gross/Net Count Rate: 36985.15 / 33963.34 cps

FIG. 48

SERIES 23 TEST RESULTS FOR PROTON BEAM AND LITHIUM
EVAPORATION

Particle Counts vs Proton Energy

Aperture Diameter = 1 micron

FIG. 49

# SERIES 24 TEST RESULTS FOR PROTON BEAM AND LITHIUM EVAPORATION

## Series 24 Computer #1 Screen Image

Peak: 438.91 = 3189.47 keV
FWHM: 1164.27 FW(1/3)M: 1501.31
Library: Co-56 (Cobalt) at 3201.96 : 8.972e+005 cA
Gross Area: 1500157
Net Area: 1500157 ±1224
Gross/Net Count Rate: 28082.31 / 28082.31 cps

FIG. 50

SERIES 24 TEST RESULTS FOR PROTON BEAM AND LITHIUM
EVAPORATION

Particle Counts vs Proton Energy

Aperture Diameter = 1 micron

FIG. 51

## SERIES 25 REACTION CHAMBER CONFIGURATION
## DIFFERENTIALLY PUMPED WITH APERTURE

FIG. 52

# SERIES 25 TEST RESULTS FOR POSITIVE BIAS VOLTAGE AND LITHIUM EVAPORATION

## Series 25 Computer #1 Screen Image

Peak: 288.21 = 1936.41 keV
FWHM: 1641.21  FW[1/3]M: 2154.90
Library: Rb-89 (Rubidium) at 1939.95 ;  6.184e+008 cA
Gross Area: 7031859
Net Area: 5550405 ±38810
Gross/Net Count Rate: 2585242.28 / 2040590.07 cps

FIG. 53

# SIMPLIFIED ILLUSTRATION OF HLFD COMPONENTS
## CROSS-SECTIONAL SIDE VIEW

FIG. 54

SIMPLIFIED ILLUSTRATION OF HLFD COMPONENTS
CROSS-SECTIONAL SIDE VIEW

FIG. 55

SIMPLIFIED ILLUSTRATION OF HLFD COMPONENTS
CROSS-SECTIONAL SIDE VIEW

FIG. 56

SINGLE MAGNETRON SPUTTERING METHOD
CROSS-SECTIONAL SIDE VIEW

FIG. 57

UNBALANCED DUAL MAGNETRON SPUTTERING METHOD
CROSS-SECTIONAL SIDE VIEW

FIG. 58

# LITHIUM ARC SPUTTERING EXAMPLE
# CROSS-SECTIONAL SIDE VIEW

FIG. 59

# EVAPORATION, MICROWAVE PLASMA GENERATOR, AND ANODE/CATHODE EXAMPLE CROSS-SECTIONAL SIDE VIEW

FIG. 60

# PROTON AND LITHIUM PLASMA BEAM METHOD
## CROSS-SECTIONAL SIDE VIEW

FIG. 61

LASER ACCELERATION OF PROTONS AND LITHIUM
VAPOR THROUGH REACTION CHAMBER
CROSS-SECTIONAL SIDE VIEW

FIG. 62

**EP 3 000 112 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4568509 A

### Non-patent literature cited in the description

- **STEPHEN A. LIPINSKI ; HUBERT M. LIPINSKI.** Gravity theory based on mass-energy equivalence. *Acta Physica Polonica,* 2008, vol. B (39), 2823
- **HERB, R.G. ; PARKINSON, D.B. ; KERST, D.W.** Yield of alpha-particles from lithium films bombarded by protons. *Physical Review,* 1935, vol. 48, 118
- Gravity theory based on mass-energy equivalence. *Acta Physica Polonica,* 2008, vol. B (39), 2823
- **A. ANDERS ; J. ANDERSSON.** High power impulse magnetron sputtering: Current-voltage-time characteristics indicate the onset of sustained self-sputtering. *Journal of Applied Physics,* 2007, vol. 102, 113303
- **P.J. KELLY ; R.D. ARNELL.** Magnetron sputtering: a review of recent developments and applications. *Vacuum,* 2000, vol. 56, 159
- **J. ANDERSSON ; A. ANDERS.** Self-sputtering far above the runaway threshold: an extraordinary metal-ion generator. *Physical Review Letters,* 2009, vol. 102, 045003
- **R.L. BOXMAS ; D.M. SANDERS ; P.J. MARTIN.** Handbook of vacuum arc science and technology. Noyes Publications, 1995
- **G. ERKENS et al.** Plasma-assisted surface coating: processes, methods, systems and applications, Die Bibliothek der Technik. Suddeutscher Verlag onpact GmbH, 2011
- **L. SILVA et al.** Proton ShockAcceleration in Laser-Plasma Interactions. *Phys. Rev. Lett.,* January 2004, vol. 92
- **S.V. BULANOV et al.** Collimated Multi-MeV Ion Beams from High-Intensity Laser Interactions with Underdense Plasma. *Phys. Rev. Lett.,* January 2007, vol. 98